(19) Europäisches Patentamt
European Patent Office
Office européen des brevets

(11) EP 2 665 797 B1

(12) # EUROPÄISCHE PATENTSCHRIFT

(45) Veröffentlichungstag und Bekanntmachung des Hinweises auf die Patenterteilung:
**23.11.2016 Patentblatt 2016/47**

(21) Anmeldenummer: **11799241.2**

(22) Anmeldetag: **22.12.2011**

(51) Int Cl.:
***C09K 19/18*** $^{(2006.01)}$ ***C09K 19/32*** $^{(2006.01)}$

(86) Internationale Anmeldenummer:
**PCT/EP2011/006511**

(87) Internationale Veröffentlichungsnummer:
**WO 2012/097853 (26.07.2012 Gazette 2012/30)**

(54) **FLÜSSIGKRISTALLINE MEDIEN, BAUTEILE FÜR DIE HOCHFREQUENZTECHNIK UND MESOGENE VERBINDUNGEN**

LIQUID CRYSTALLINE MEDIA, COMPONENTS FOR HIGH FREQUENCY TECHNOLOGY AND MESOGENIC COMPOUNDS

MILIEUX CRISTAUX LIQUIDES, COMPOSANTS POUR LA TECHNIQUE HAUTE FRÉQUENCE, ET COMPOSÉS MÉSOGÈNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2011 DE 102011009190**
**12.05.2011 EP 11003920**

(43) Veröffentlichungstag der Anmeldung:
**27.11.2013 Patentblatt 2013/48**

(73) Patentinhaber: **Merck Patent GmbH**
**64293 Darmstadt (DE)**

(72) Erfinder:
- **MANABE, Atsutaka**
  **64625 Bensheim (DE)**
- **JASPER, Christian**
  **64283Darmstadt (DE)**
- **REIFFENRATH, Volker**
  **64380 Rossdorf (DE)**
- **MONTENEGRO, Elvira**
  **69469 Weinheim (DE)**
- **PAULUTH, Detlef**
  **64372 Ober-Ramstadt (DE)**
- **KLASS, Dagmar**
  **64291 Darmstadt (DE)**

(56) Entgegenhaltungen:
**EP-A1- 2 073 290** **WO-A1-2011/035863**
**WO-A2-2008/021208** **DE-A1-102004 029 429**
**JP-A- 2003 207 631** **JP-A- 2004 082 439**

- **WU SHIN-TSON ET AL: "High birefringence and wide nematic range bis-tolane liquid crystals", APPLIED PHYSICS LETTERS, AIP, AMERICAN INSTITUTE OF PHYSICS, MELVILLE, NY, US, Bd. 74, Nr. 3, 18. Januar 1999 (1999-01-18), Seiten 344-346, XP012023047, ISSN: 0003-6951, DOI: 10.1063/1.123066 in der Anmeldung erwähnt**
- **HSU C S ET AL: "SYNTHESIS OF LATERALLY SUBSTITUTED BISTOLANE LIQUID CRYSTALS", LIQUID CRYSTALS: AN INTERNATIONAL JOURNAL OF SCIENCE AND TECHNOLOGY, TAYLOR & FRANCIS, GB, Bd. 27, Nr. 2, 1. Februar 2000 (2000-02-01), Seiten 283-287, XP000932257, ISSN: 0267-8292, DOI: 10.1080/026782900203100 in der Anmeldung erwähnt**
- **TWIEG R J ET AL: "TOLANE OLIGOMERS: MODEL THERMOTROPIC LIQUID CRUSTALS", LIQUID CRYSTALS: AN INTERNATIONAL JOURNAL OF SCIENCE AND TECHNOLOGY, TAYLOR & FRANCIS, GB, Bd. 20, Nr. 3, 1. März 1996 (1996-03-01), Seiten 287-292, XP000591680, ISSN: 0267-8292**
- **ZHENLIN ZHANGA ET AL: "Synthesis and properties of highly birefringent liquid crystalline materials: 2,5-bis(5-alkyl-2-butadinylthiophene-yl) styrene monomers", LIQUID CRYSTALS: AN INTERNATIONAL JOURNAL OF SCIENCE AND TECHNOLOGY, TAYLOR & FRANCIS, GB, Bd. 37, Nr. 1, 1. Januar 2010 (2010-01-01) , Seiten 69-76, XP001553170, ISSN: 0267-8292, DOI: 10.1080/02678290903370272**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Gebiet der Erfindung

Die vorliegende Erfindung betrifft flüssigkristalline Medien insbesondere für Bauteile für die Hochfrequenztechnik, speziell Bauteile für Hochfrequenzvorrichtungen, insbesondere Antennen, speziell für den Gigahertzbereich und den Terahertzbereich, die im Mikrowellen- oder im Millimeterwellenbereich betrieben werden. Diese Bauteile verwenden besondere flüssigkristalline, chemische Verbindungen oder damit zusammengestellte flüssigkristalline Medien beispielsweise zur Phasenschiebung von Mikrowellen für abstimmbare "phased-array" Antennen oder für abstimmbare Zellen von Mikrowellenantennen basierend auf "reflect arrays". Außerdem betrifft die vorliegende Erfindung neue mesogene Verbindungen.

Stand der Technik und zu lösendes Problem

Flüssigkristalline Medien werden seit längerem in elektrooptischen Anzeigen (Liquid Crystal Displays - LCDs) genutzt, um Informationen anzuzeigen.

Bistolanverbindungen, auch Triphenyldiacetylene genannt, mit einer zusätzlichen Alkylsubstitution am zentralen Phenylenring sind dem Fachmann hinlänglich bekannt.

Z.B. Wu, S.-T., Hsu, C.-S. and Shyu, K.-F., Appl. Phys. Lett., 74 (3), (1999), Seiten 344 - 346 offenbart verschiedene flüssigkristalline Bistolanverbindungen mit einer lateralen Methylgruppe der Formel

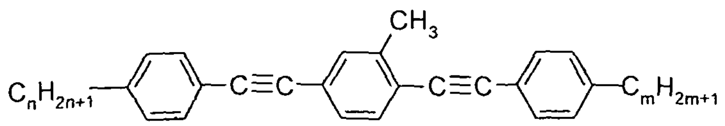

Hsu, C. S. Shyu, K. F., Chuang, Y. Y. and Wu, S.-T., Liq. Cryst., 27 (2), (2000), Seiten 283 - 287 offenbart, neben solchen flüssigkristallinen Bistolanverbindungen mit einer lateralen Methylgruppe, auch entsprechende Verbindungen mit einer lateralen Ethylgruppe und schlägt deren Verwendung u. a. in "liquid crystal optically phased arrays" vor.

In Dabrowski, R., Kula, P. Gauza, S., Dziadiszek, J. Urban, S. und Wu, S.-T., IDRC 08, (2008), Seiten 35 - 38 werden dielektrisch neutrale Bistolanverbindungen mit und ohne lateraler Methylgruppe am mittleren Ring neben den stark dielektrisch positiven Isothiocyanatbistolanverbindungen der Formel

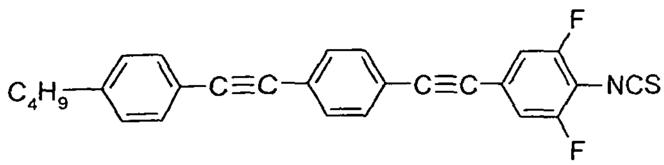

erwähnt.

Verbindungen mit drei C-C-Dreifachbindungen wie z.B. die Verbindung

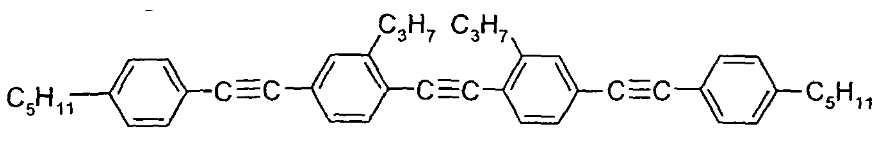

werden in JP 2003-207631 A) erwähnt und für die Anwendung in optischen Filmen, Polarisatoren und in Flüssigkristallen vom Licht streuenden Typ vorgeschlagen.

In neuerer Zeit werden flüssigkristalline Medien jedoch auch für die Verwendung in Komponenten, bzw. in Bauteilen, für die Mikrowellentechnik vorgeschlagen, wie z.B. in DE 10 2004 029 429 A und in JP 2005-120208 (A) beschrieben.

Eine technisch wertvolle Anwendung der flüssigkristallinen Medien in der Hochfrequenztechnik beruht auf ihrer Eigenschaft, dass sie sich durch eine variable Spannung in ihren dielektrischen Eigenschaften steuern lassen, besonders für den Gigahertzbereich und den Terahertzbereich. Somit lassen sich abstimmbare Antennen konstruieren, die keine mechanisch beweglichen Teile beinhalten (A. Gaebler, A. Moessinger, F. Goelden, et al., "Liquid Crystal-Reconfigurable

Antenna Concepts for Space Applications at Microwave and Millimeter Waves", International Journal of Antennas and Propagation, Band 2009, Artikel ID 876989, (2009), Seiten 1 - 7, doi:10.1155/2009/876989.

A. Penirschke, S. Müller, P. Scheele, C. Weil, M. Wittek, C. Hock und R. Jakoby: "Cavity Perturbation Method for Characterization of Liquid Crystals up to 35 GHz", 34th European Microwave Conference - Amsterdam, S. 545-548, beschreibt unter anderem die Eigenschaften der bekannten, flüssigkristallinen Einzelsubstanz K15 (auch 4-n-Pentyl-4'-cyanobiphenyl oder PP-5-N genannt, Merck KGaA, Deutschland) bei einer Frequenz von 9 GHz.

DE 10 2004 029 429 A beschreibt die Anwendung von Flüssigkristallmedien in der Mikrowellentechnik unter anderem in Phasenschiebern. In DE 10 2004 029 429 A werden bereits flüssigkristalline Medien bezüglich ihrer Eigenschaften im entsprechenden Frequenzbereich untersucht.

Für die Anwendung in der Hochfrequenztechnik werden flüssigkristalline Medien mit besonderen, bislang eher ungewöhnlichen, ungebräuchlichen Eigenschaften, bzw. Kombinationen von Eigenschaften benötigt.

A. Gaebler, F. Goelden, S. Müller, A. Penirschke und R. Jakoby "Direct Simulation of Material Permittivities using an Eigen-Susceptibility Formulation of the Vector Variational Approach", 12MTC 2009 - International Instrumentation and Measurement Technology Conference, Singapur, 2009 (IEEE), S. 463-467 beschreibt die entsprechenden Eigenschaften der bekannten Flüssigkristallmischung E7 (ebenfalls Merck KGaA, Deutschland).

DE 10 2004 029 429 A beschreibt die Anwendung von Flüssigkristallmedien in der Mikrowellentechnik unter anderem in Phasenschiebern. In DE 10 2004 029 429 A werden bereits flüssigkristalline Medien bezüglich ihrer Eigenschaften im entsprechenden Frequenzbereich untersucht. Außerdem werden dort flüssigkristalline Medien, die Verbindungen der Formeln

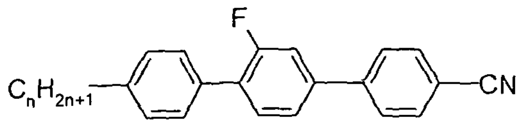

neben Verbindungen der Formeln

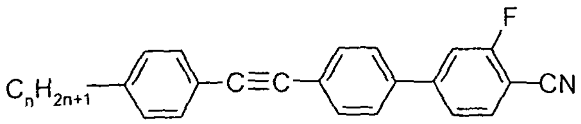

und

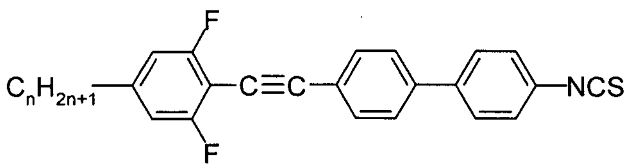

enthalten, erwähnt.

Flüssigkristallmedien, die z.B. Verbindungen der Formel

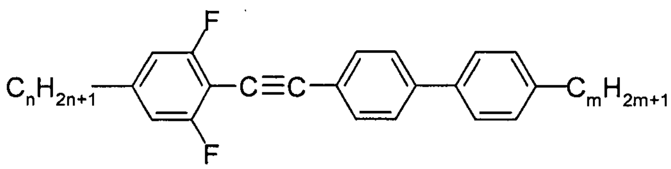

enthalten, werden für die Anwendung in Bauteilen für die Hochfrequenztechnik z.B. in
A. Lapanik, "Single compounds and mixtures for microwave applications, Dielectric, microwave studies on selected systems", Dissertation, Technische Universität Darmstadt, 2009, (**D17**),
A. Lapanik, F. Gölden, S. Müller, A. Penirschke, R. Jakoby und W. Haase, Frequenz, im Druck,
"Highly birefringent nematic mixtures at room temperature for microwave applications", A. Lapanik, F. Gölden, S. Müller, R. Jakoby und W. Haase, Journal of Optical Engineering, zur Veröffentlichung eingereicht, sowie in den folgenden, bislang unveröffentlichten Patentanmeldungen DE 10 2009 051 892.4, DE 10 2010 025 572.6, DE 10 2010 045 370.6

und DE 10 2010 051 508.0.

EP 2 073 290 A1, das auf ein "Organic Thin Film Transistor Device" und auf ein "Organic Thin Film Light-Emitting Transistor" gerichtet ist, offenbart neben anderen Verbindungen auch einige Bistolane.

WO 2008/021208 A2 ist auf "Sensitizer Dyes for Photoacid Generating Systems Using Short Visible Wav lengths" gerichtet. Es beschreibt neben anderen Verbindungen, 1,4-Bis-phenylethinylnaphthatin, das optional auch substituiert sein kann.

JP 2004-082439 A offenbart ein Optisches Aufzeichnungsmedium und zeigt neben vielen anderen Verbindungen terminal polar substituierte 1,4-Bis-phenylethinylnaphthatine.

Twieg, Robert J. et al., "Tolane oligomers: Model thermotropic liquid crysrtals" Liquid Crystals, Bd. 20, Nr. 3, (1996) Seiten 287-292 beschreibt Bistolan und sechs davon abgeleitete Verbindungen, bei denen ein, zwei oder alle drei 1,4-Phenylene durch Biphenyl-4,4'diyle ersetzt sind und bei einigen vom denen die endständigen 1,4-Phenylene lateral einfach fluoriert sein können.

Zhang, Zhenlin et al., "Synthesis and properties of highly birefringent liquid crystalline materials: 2,5- bis (5-alkyl2-butadinylthiophene-yl) styrene monomers", Liquid Crystals. Bd. 37, Nr. 1, (2010), Seiten 69-76 beschreibt die Synthese von 2'-Ethylen-4,4"-dimethyl-1,1': 4',1"-bistolan, welches eine monotrope nematische Phase aufweist, als Vergleichssubstanz.

Die bisher bekannten Zusammensetzungen sind jedoch mit gravierenden Nachteilen behaftet. Die meisten von ihnen führen, neben anderen Mängeln, zu unvorteilhaft hohen Verlusten und/oder unzureichenden Phasenverschiebungen bzw. zu geringer Materialgüte ($\eta$).

Somit sind neue flüssigkristalline Medien mit verbesserten Eigenschaften erforderlich. Insbesondere müssen der Verlust im Mikrowellenbereich und/oder Millimeterwellenbereich verringert und die Materialgüte verbessert werden.

Außerdem besteht der Bedarf das Tieftemperaturverhalten der Flüssigkristallmedien und somit auch der Bauteile zu verbessern. Hier sind sowohl eine Verbesserung der Betriebseigenschaften, wie auch der Lagerfähigkeit nötig.

Es besteht daher ein erheblicher Bedarf an flüssigkristallinen Medien mit geeigneten Eigenschaften für entsprechende praktische Anwendungen.

Vorliegende Erfindung

Überraschenderweise wurde nun gefunden, dass Bauteile für die Hochfrequenztechnik realisiert werden können, welche die Nachteile der Materialien des Standes der Technik nicht oder zumindest nur in erheblich geringerem Maße aufweisen, wenn ausgewählte, flüssigkristalline Medien eingesetzt werden.
enthält, die aus einer oder mehreren Verbindungen der Formel I besteht, Gegenstand der vorliegenden Erfindung sind somit flüssigkristalline Medien die eine Komponente A enthält, die aus einer oder mehreren Verbindungen der Formel I besteht,

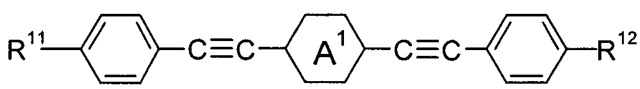

I

worin

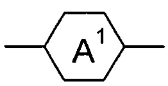

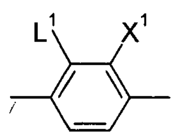

,

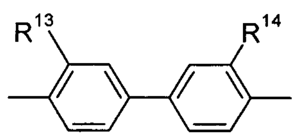

,

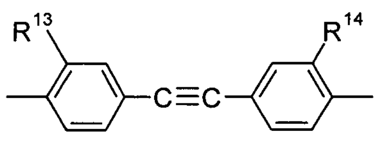

oder

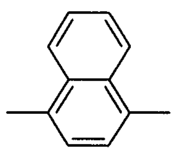

,

bevorzugt

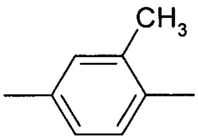, 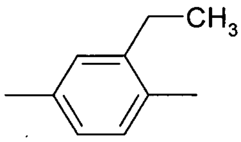, 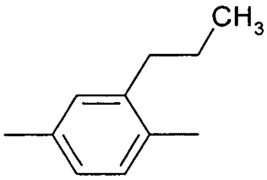,

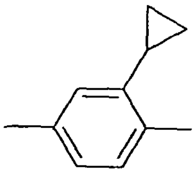, 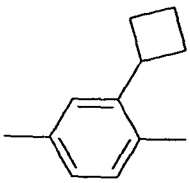, 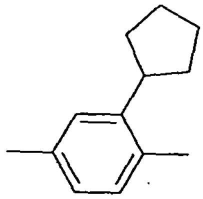,

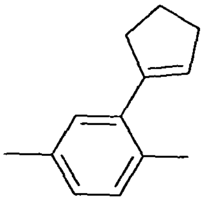, 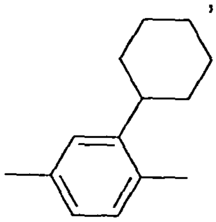, 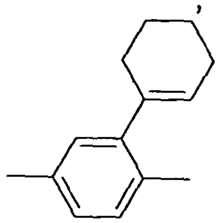,

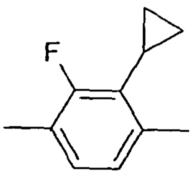, 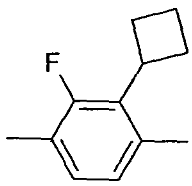, 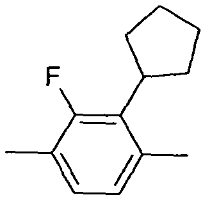,

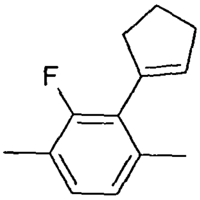, 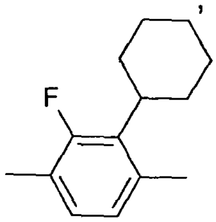, 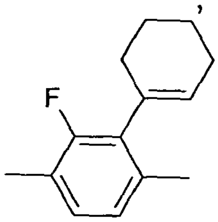,

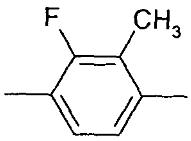, 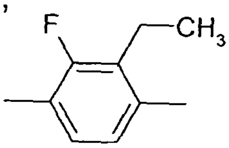,

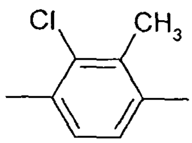, 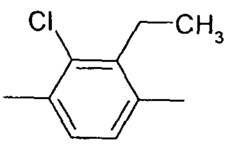,

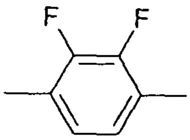, 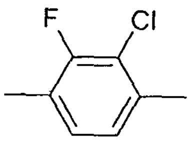,

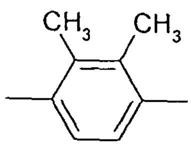, 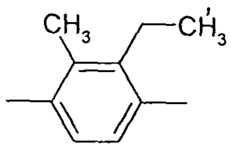, 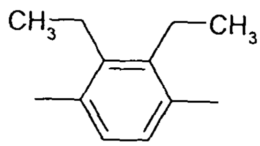,

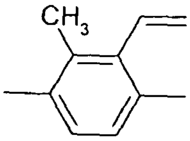, 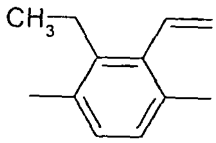,

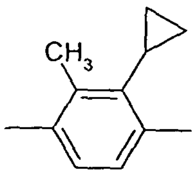, 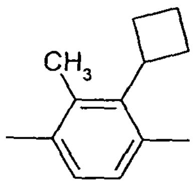, 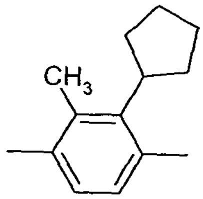,

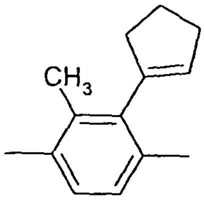, 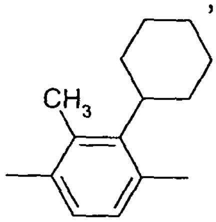, 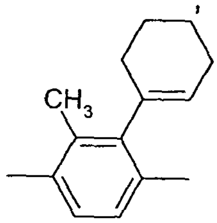,

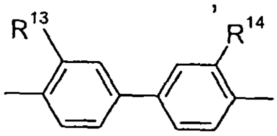, 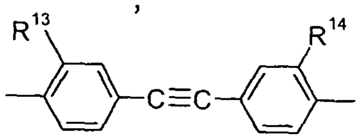,

oder

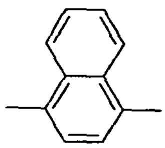,

besonders bevorzugt

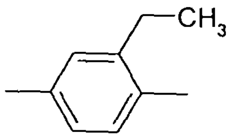, 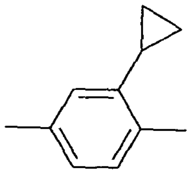, 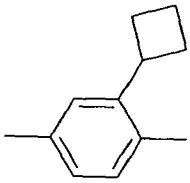,

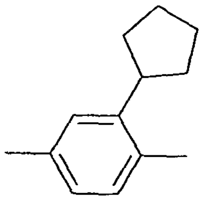, 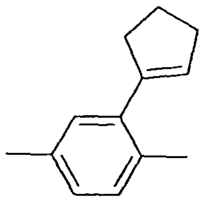, 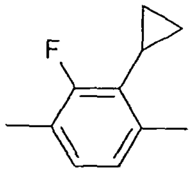,

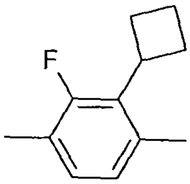, 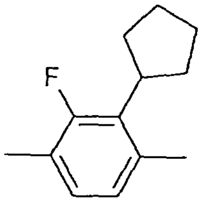, 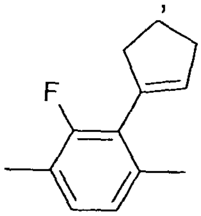,

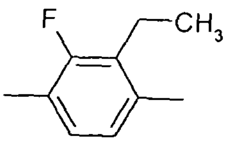, 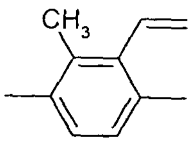, 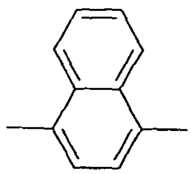,

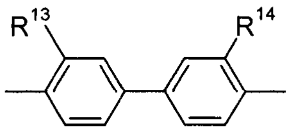 oder 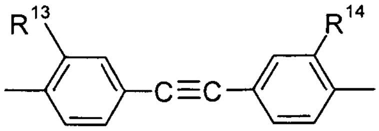,

| | |
|---|---|
| $L^1$ | Alkyl mit 1 bis 6 C-Atomen, Alkenyl mit 2 bis 6 C-Atomen, Cycloalkyl mit 3 bis 6 C-Atomen oder Cycloalkenyl mit 4 bis 6 C-Atomen, bevorzugt $CH_3$, $C_2H_5$, *n*-$C_3H_7$ (-$(CH_2)_2CH_3$), *i*-$C_3H_7$ (-$CH(CH_3)_2$) , -$CH=CH_2$, Cyclopropyl, Cyclobutyl, Cyclohexyl, Cyclopent-1-enyl oder Cyclohex-1-enyl, und besonders bevorzugt $CH_3$, $C_2H_5$, Cyclopropyl oder Cyclobutyl, |
| $X^1$ | H, Alkyl mit 1 bis 3 C-Atomen oder Halogen, bevorzugt H, F oder Cl, und besonders bevorzugt H oder F und ganz besonders bevorzugt F, |
| $R^{11}$ bis $R^{14}$ | unabhängig voneinander unfluoriertes Alkyl oder unfluoriertes Alkoxy jeweils mit 1 bis 15 C-Atomen, unfluoriertes Alkenyl, unfluoriertes Alkenyloxy oder unfluoriertes Alkoxyalkyl jeweils mit 2 bis 15 C-Atomen, oder Cycloalkyl, Alkylcycloalkyl, Cycloalkenyl, Alkylcycloalkenyl, Alkycycloalkylalkyl oder Alkycycloalkenylalkyl) jeweils mit bis zu 15 C-Atomen, und alternativ einer von $R^{13}$ und $R^{14}$ oder beide auch H, |
| bevorzugt $R^{11}$ und $R^{12}$ | unabhängig voneinander unfluoriertes Alkyl oder unfluoriertes Alkoxy jeweils mit 1 bis 7 C-Atomen oder unfluoriertes Alkenyl, unfluoriertes Alkenyloxy oder unfluoriertes Alkoxyalkyl jeweils mit 2 bis 7 C-Atomen, |
| besonders bevorzugt $R^{11}$ | unfluoriertes Alkyl mit 1 bis 7 C-Atomen oder unfluoriertes Alkenyl, unfluoriertes Alkenyloxy oder unfluoriertes Alkoxyalkyl jeweils mit 2 bis 7 C-Atomen, und |
| besonders bevorzugt $R^{12}$ | unfluoriertes Alkyl oder unfluoriertes Alkoxy jeweils mit 1 bis 7 C-Atomen, und |

bevorzugt $R^{13}$ und $R^{14}$ H, unfluoriertes Alkyl mit 1 bis 5 C-Atomen, unfluoriertes Cycloalkyl oder Cycloalkenyl mit 3 bis 7 C-Atomen, unfluoriertes Alkylcyclohexyl oder unfluoriertes Cyclohexylalkyl jeweils mit 4 bis 12 C-Atomen oder unfluoriertes Alkylcyclohexylalkyl mit 5 bis 15 C-Atomen, besonders bevorzugt Cyclopropyl, Cyclobutyl oder Cyclohexyl und ganz besonders bevorzugt mindestens einer von $R^{13}$ und $R^{14}$ n-Alkyl, besonders bevorzugt Methyl, Ethyl oder n-Propyl, und der andere H oder *n*-Alkyl, besonders bevorzugt H, Methyl, Ethyl oder n-Propyl,

bedeuten
und
die eine oder mehrere Verbindungen der Formel I-1

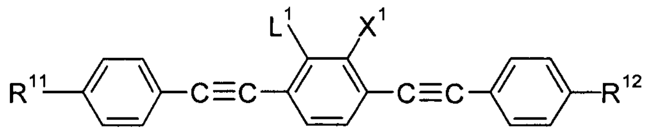

I-1

worin

$X^1$ Alkyl mit 1 bis 3 C-Atomen oder Halogen, bevorzugt F oder Cl, und besonders bevorzugt F oder $CH_3$ und ganz besonders bevorzugt F,

bedeutet, enthält.

Die erfindungsgemäßen Flüssigkristallmedien eignen sich hervorragend zur Verwendung in Bauteilen für die Hochfrequenztechnik, bzw. für den Mikrowellenbereich und/oder den Millimeterbereich des elektromagnetischen Spektrums. Diese Verwendung der Medien, sowie diese Bauteile sind Gegenstand der vorliegenden Erfindung.

In einer ersten bevorzugten Ausführungsform der vorliegenden Erfindung enthält das Bauteil für die Hochfrequenztechnik ein Flüssigkristallmedium, das eine Komponente A enthält, die aus einer zwei oder mehreren Verbindung der Formel I besteht.

Gemäß einer weiteren bevorzugten Ausführungsform der vorliegenden Erfindung enthält das Bauteil für die Hochfrequenztechnik ein flüssigkristallines Medium, enthaltend

- eine oder mehrere weitere Komponenten ausgewählt aus der Gruppe der im Folgenden definierten Komponenten, Komponenten B bis E:

- eine stark dielektrisch positive Komponente, Komponente B, die eine dielektrische Anisotropie von 10,0 oder mehr aufweist,

- eine stark dielektrisch negative Komponente, Komponente C, die eine dielektrische Anisotropie von -5,0 oder weniger aufweist,

- eine weitere Komponente, Komponente D, die eine dielektrische Anisotropie im Bereich von mehr als -5,0 und von weniger als 10,0 aufweist und aus Verbindungen mit sieben oder mehr, bevorzugt acht oder mehr, fünf- oder sechsgliedrigen Ringen besteht und

- eine weitere Komponente, Komponente E, die ebenfalls eine dielektrische Anisotropie im Bereich von mehr als -5,0 und von weniger als 10,0 aufweist und aus Verbindungen mit bis zu sechs fünf- oder sechsgliedrigen Ringen besteht.

Typische Beispiele für fünfgliedrige Ringe sind

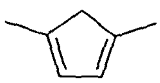 , 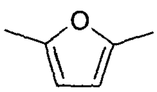 , 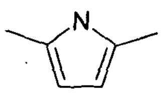 ,

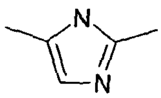

und andere.

Typische Beispiele für sechsgliedrige Ringe sind

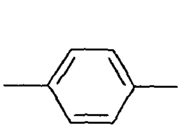 , 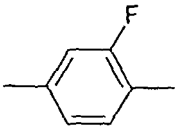 , 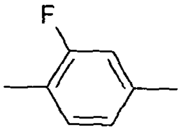 ,

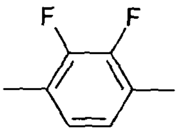 , 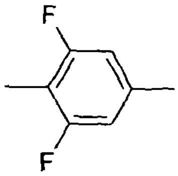 , 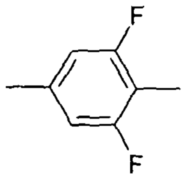 ,

und

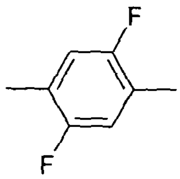

Die fünf- und sechsgliedrigen Ringe umfassen auch gesättigte, sowie teilgesättigte Ringe, ebenso wie heterocyclische Ringe.

Im Sinne der vorliegenden Anmeldung werden kondensierte Ringsysteme, die aus zwei dieser Ringe, i. e. aus zwei fünfgliedrigen, einem fünfgliedrigen oder aus zwei sechsgliedrigen Ringen, bestehen, wie z. B.

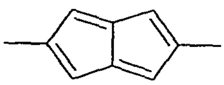 , 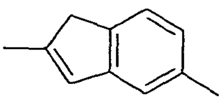 und 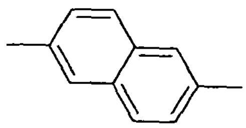

bei der Zuordnung der Verbindungen zu den Komponenten D bzw. E als einer dieser fünf- bzw. sechsgliedrigen Ringe gezählt.

Entsprechend werden kondensierte Ringsysteme, die aus einer Kombination von dreien oder mehreren dieser Ringe bestehen, die in Längsrichtung im Molekül eingebaut sind, wie z. B.

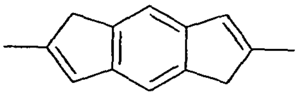 , 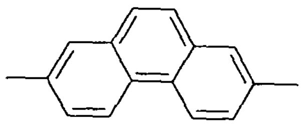

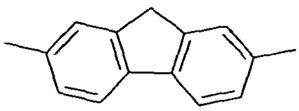 und 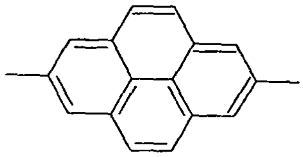

als zwei dieser fünf- bzw. sechsgliedrigen Ringe gezählt.

Im Gegensatz dazu, werden kondensierte Ringsysteme, die in Querrichtung im Molekül eingebaut sind, wie z. B.

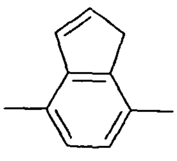, 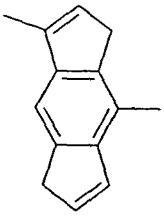, 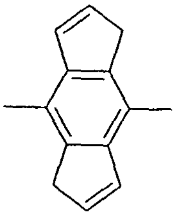, 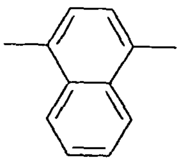,

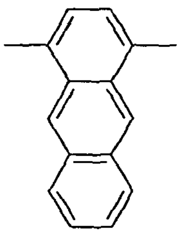, 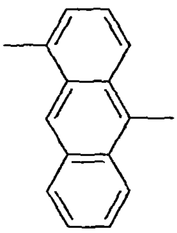, 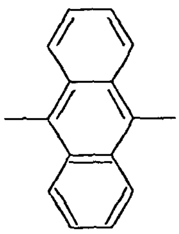,

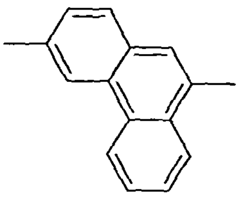, 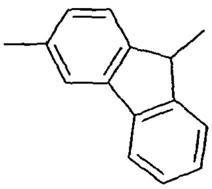 und 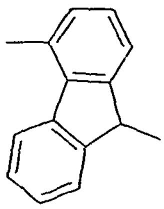

als einer dieser fünf- bzw. sechsgliedrigen Ringe gezählt.

Gegenstand der vorliegenden Erfindung sind ebenfalls die direkt vorhergehend, sowie weiter unten beschriebenen, flüssigkristallinen Medien, sowie deren Verwendung in elektro-optischen Anzeigen und insbesondere in Bauteilen für die Hochfrequenztechnik.

In einer bevorzugten Ausführungsform der vorliegenden Erfindung enthält das Flüssigkristallmedium eine oder mehrere Verbindungen der Formel I, bevorzugt ausgewählt aus der Gruppe der Verbindungen der Formeln 1-1 bis I-4, bevorzugt der Formeln 1-1 und/oder I-2 und/oder I-3 und/oder I-4, bevorzugt der Formeln 1-1 und I-2, stärker bevorzugt bestehen diese Verbindungen der Formel I überwiegend, noch stärker bevorzugt bestehen sie im Wesentlichen und ganz besonders bevorzugt bestehen sie vollständig daraus:

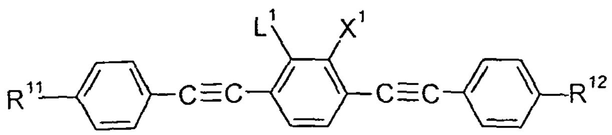

I-1

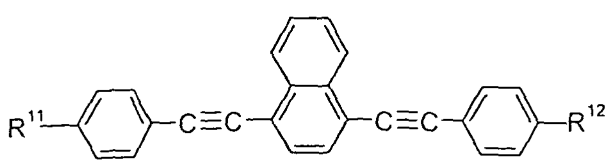

I-2

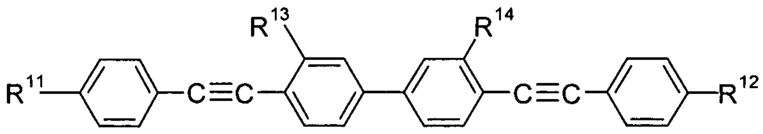

I-3

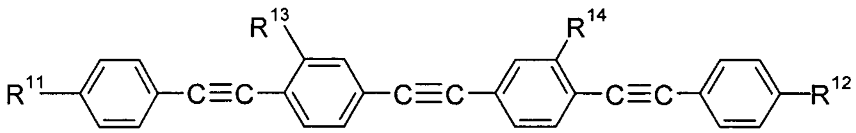

I-4

worin

- $L^1$ Alkyl mit 1 bis 6 C-Atomen, Alkenyl mit 2 bis 6 C-Atomen, Cycloalkyl mit 3 bis 6 C-Atomen oder Cycloalkenyl mit 4 bis 6 C-Atomen, bevorzugt $CH_3$, $C_2H_5$, *n*-$C_3H_7$ (-$(CH_2)_2CH_3$), *i*-$C_3H_7$ (-$CH(CH_3)_2$), -$CH{=}CH_2$, Cyclopropyl, Cyclobutyl, Cyclopentyl, Cyclohexyl, Cyclopent-1-enyl oder Cyclohex-1-enyl, und besonders bevorzugt $CH_3$, $C_2H_5$, Cyclopropyl oder Cyclobutyl

- $X^1$ H,

bedeutet und die anderen Parameter die jeweiligen oben bei Formel 1 angegebenen Bedeutungen haben und bevorzugt

- $R^{11}$ unfluoriertes Alkyl mit 1 bis 7 C-Atomen, und

- $R^{12}$ unfluoriertes Alkyl mit 1 bis 7 C-Atomen oder unfluoriertes Alkoxy mit 1 bis 7 C-Atomen,

bedeutet.

In einer besonders bevorzugten Ausführungsform der vorliegenden Erfindung enthält das Flüssigkristallmedium eine oder mehrere Verbindungen der Formeln I-1, bevorzugt ausgewählt aus der Gruppe der Verbindungen der Formeln I-1a-1 bis I-1a-12 und 1-1b-1 bis 1-1b-12

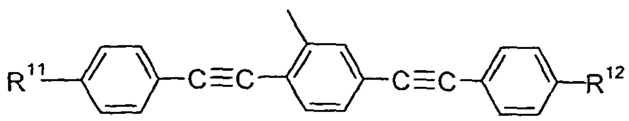

I-1a-1

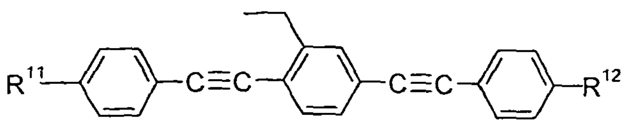

I-1a-2

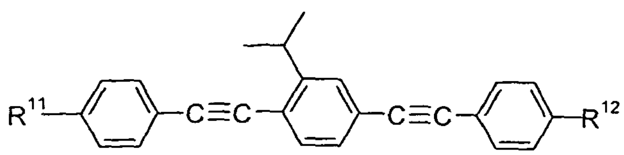

I-1a-3

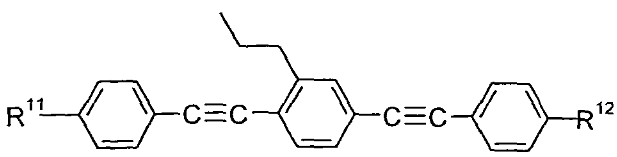

I-1a-4

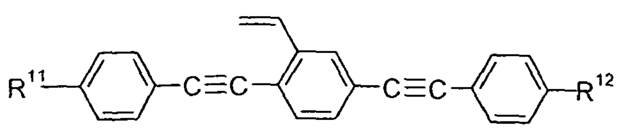

I-1a-5

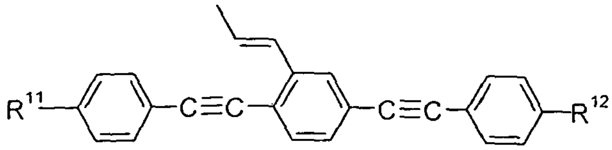

I-1a-6

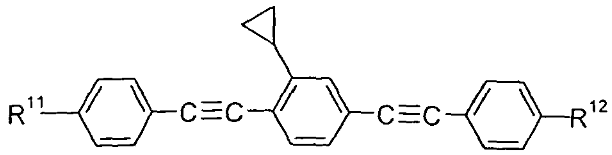

I-1a-7

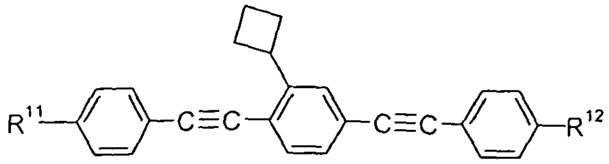

I-1a-8

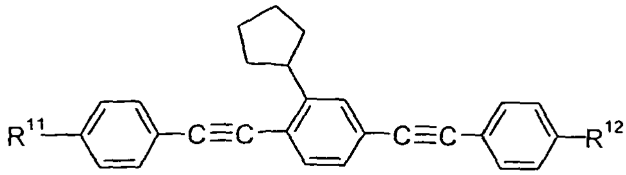

I-1a-9

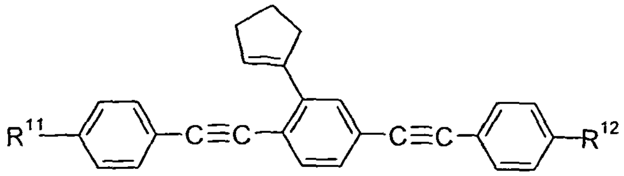

I-1a-10

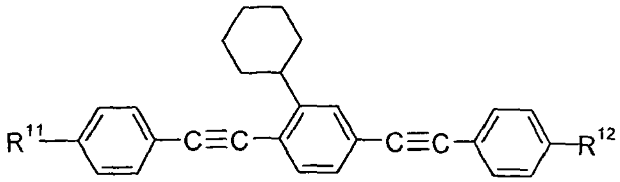

I-1a-11

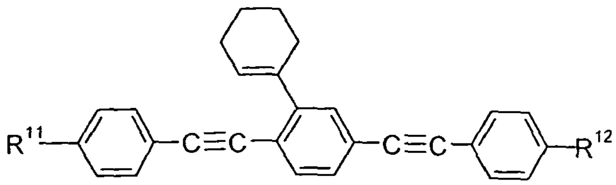

I-1a-12

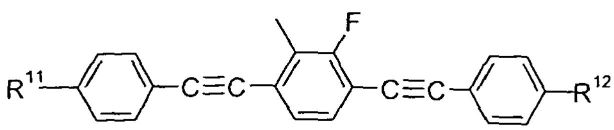

I-1b-1

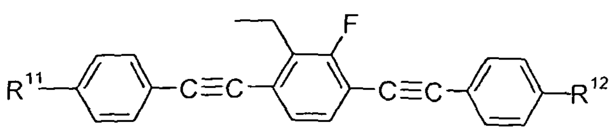

I-1b-2

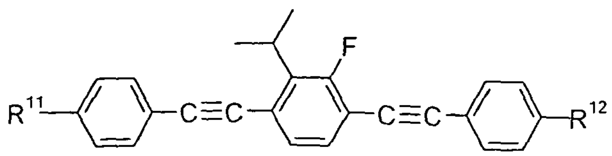

I-1b-3

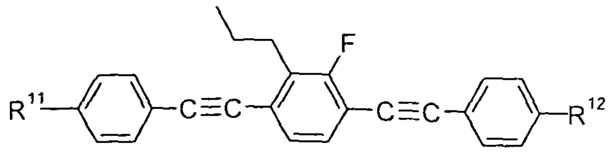

I-1b-4

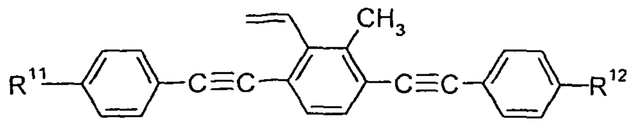

I-1b-5

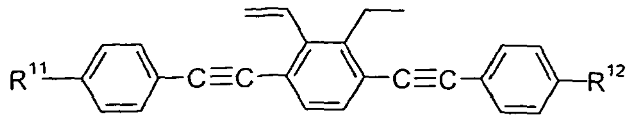

I-1b-6

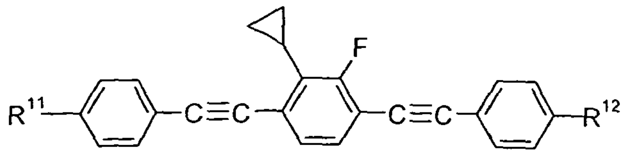

I-1b-7

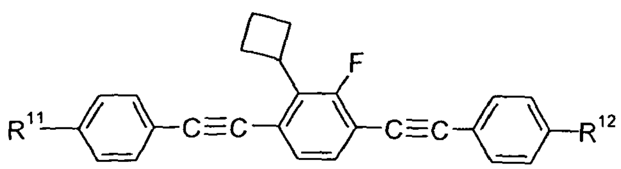

I-1b-8

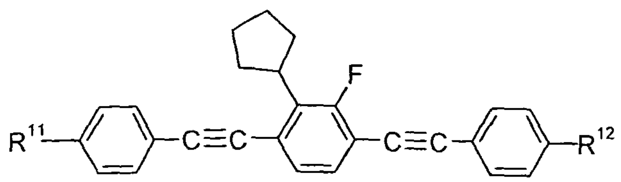

I-1b-9

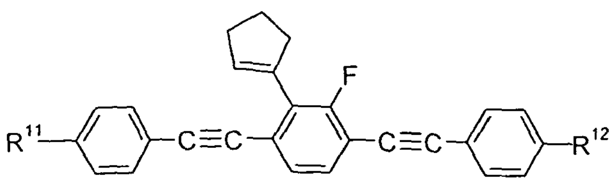

I-1b-10

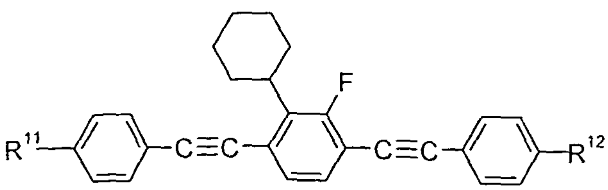

I-1b-11

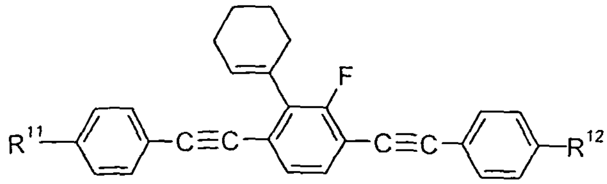

I-1b-12

worin die Parameter die oben unter Formel 1-1 gegeben Bedeutungen besitzen und bevorzugt
$R^{11}$ und $R^{12}$ unabhängig voneinander einen Alkylrest mit 2 bis 7 C-Atomen, beispielsweise einen Propyl- und Hexylrest oder jeweils einen Propyl-, Butyl-, Pentyl- oder Hexylrest bedeuten.

In einer ganz besonders bevorzugten Ausführungsform der vorliegenden Erfindung enthält das Flüssigkristallmedium, bzw. die Komponente A des Flüssigkristallmediums, eine oder mehrere Verbindungen der Formel 1, bevorzugt ausgewählt aus der Gruppe der Verbindungen der Formeln I-1a-2, I-1a-5, I-1a-7, I-1a-8, 1-1a-9, I-1a-10, I-1b-5, I-1b-7, I-1b-8, I-1b-9, 1-1b-10, wobei die Parameter die oben gegebenen Bedeutung haben und besonders bevorzugt

$R^{11}$ und $R^{12}$ unabhängig voneinander unfluoriertes Alkyl mit 1 bis 7 C-Atomen oder unfluoriertes Alkoxy mit 1 bis 6 C-Atomen,

insbesondere bevorzugt einer von

$R^{11}$ und $R^{12}$ Alkyl und der andere Alkyl oder Alkoxy

bedeutet und ganz besonders bevorzugt $R^{11}$ und $R^{12}$ voneinander verschiedene Bedeutungen haben.

In einer bevorzugten Ausführungsform der vorliegenden Erfindung enthält das Flüssigkristallmedium, bzw. die Komponente A des Flüssigkristallmediums, eine oder mehrere Verbindungen der Formeln I-2, worin bevorzugt
$R^{11}$ und $R^{12}$unabhängig voneinander einen Alkylrest mit 2 bis 7 C-Atomen, beispielsweise einen Propyl- und Hexylrest oder jeweils einen Propyl-, Butyl-, Pentyl- oder Hexylrest bedeuten.

In einer bevorzugten Ausführungsform der vorliegenden Erfindung enthält das Flüssigkristallmedium, bzw. die Komponente A des
Flüssigkristallmediums, eine oder mehrere Verbindungen der Formeln I-3, bevorzugt ausgewählt aus der Gruppe der Verbindungen der Formeln I-3a-1 bis I-3a-3 und I-3b-1 bis I-3b-3, bevorzugt I-3a-2, I-3b-2

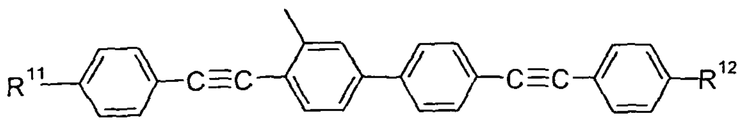

I-3a-1

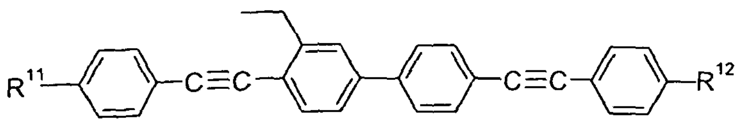

I-3a-2

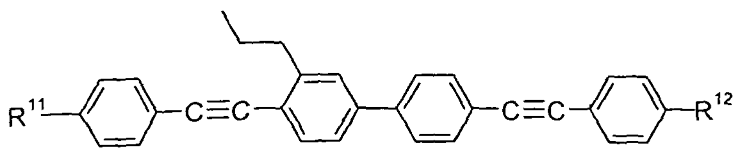

I-3a-3

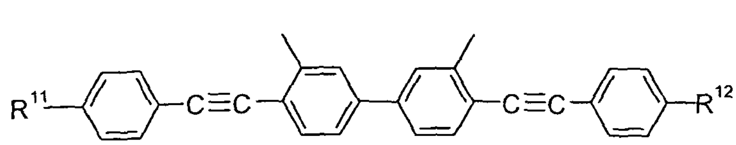

I-3b-1

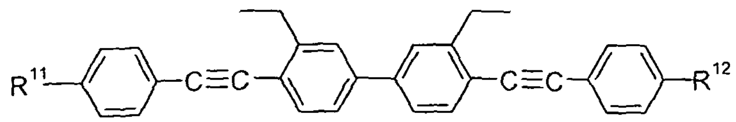

I-3b-2

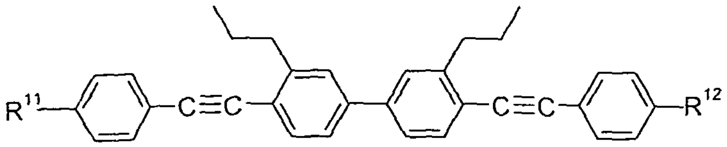

I-3b-3

worin die Parameter die oben unter Formel I-3 gegeben Bedeutungen besitzen und bevorzugt
$R^{11}$ und $R^{12}$ unabhängig voneinander einen Alkylrest mit 2 bis 7 C-Atomen, beispielsweise einen Propyl- und Hexylrest oder jeweils einen Propyl-, Butyl-, Pentyl- oder Hexylrest bedeuten.

In einer bevorzugten Ausführungsform der vorliegenden Erfindung enthält das Flüssigkristallmedium, bzw. die Komponente A des
Flüssigkristallmediums, eine oder mehrere Verbindungen der Formeln I-4, bevorzugt ausgewählt aus der Gruppe der Verbindungen der Formeln I-4a-1 bis I-4a-3 und I-4b-1 bis I-4b-3, bevorzugt I-4b-2,

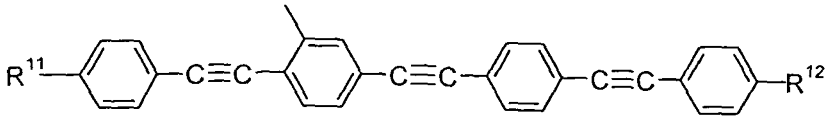

I-4a-1

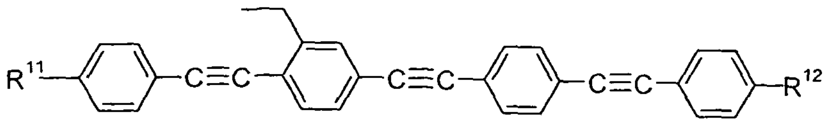

I-4a-2

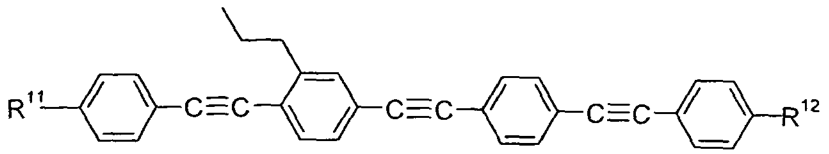

I-4a-3

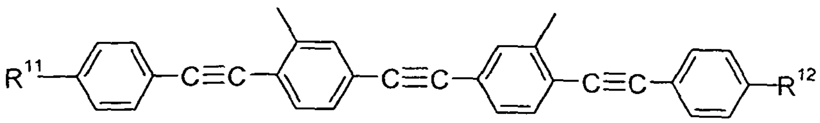

I-4b-1

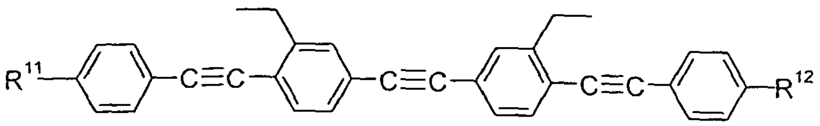

I-4b-2

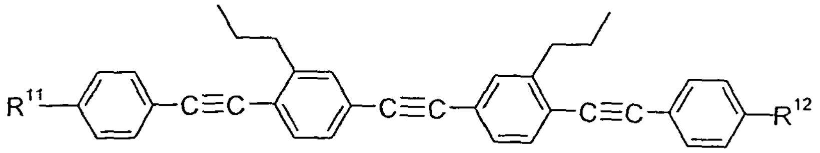

I-4b-3

worin die Parameter die oben unter Formel I-4 gegeben Bedeutungen besitzen und bevorzugt
$R^{11}$ und $R^{12}$ unabhängig voneinander einen Alkylrest mit 2 bis 7 C-Atomen, beispielsweise einen Propyl- und Hexylrest oder jeweils einen Propyl-, Butyl-, Pentyl- oder Hexylrest bedeuten.

Die Verbindungen der Formel I-1a können vorteilhaft wie an der folgenden beispielhaften Synthese ersichtlich hergestellt werden (Schema 1-4):

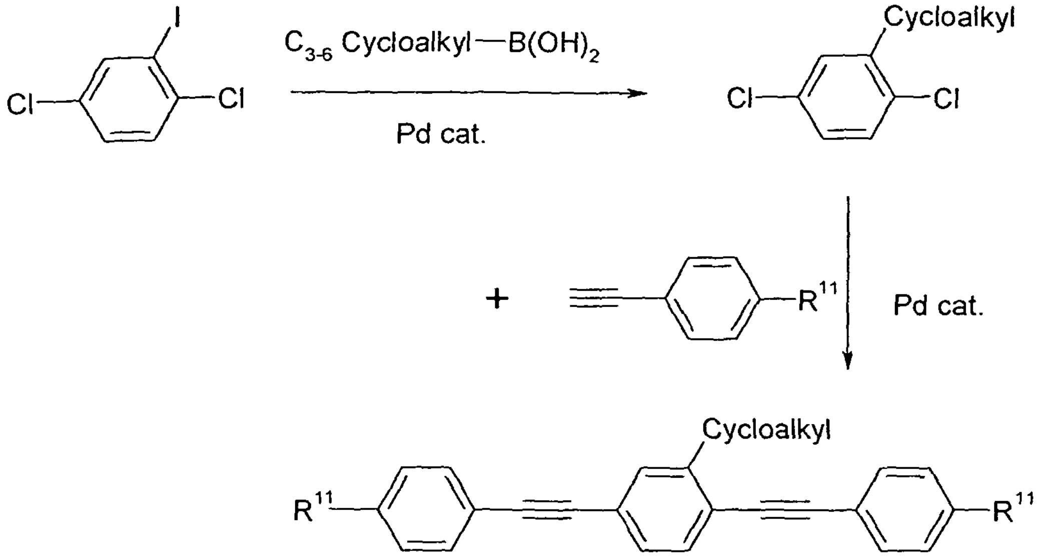


**Schema 1**. Beispielhafte Synthese der Verbindungen der Formel I (symmetrisch).

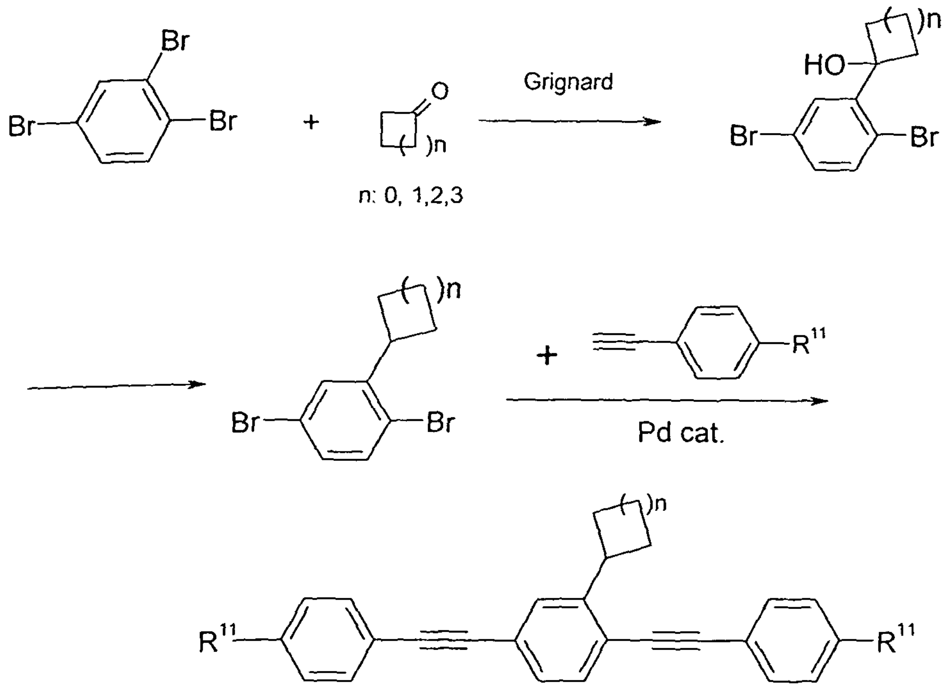


**Schema 2**. Beispielhafte Synthese der Verbindungen der Formel I (symmetrisch).

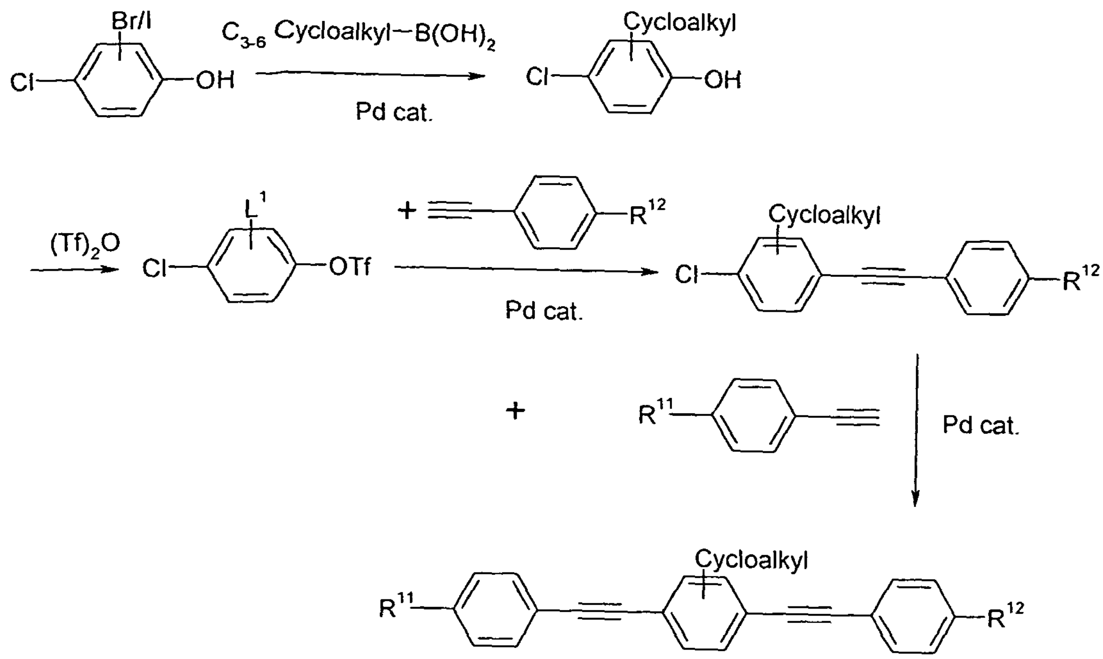


**Schema 3**. Beispielhafte Synthese der Verbindungen der Formel I (asymmetrisch).

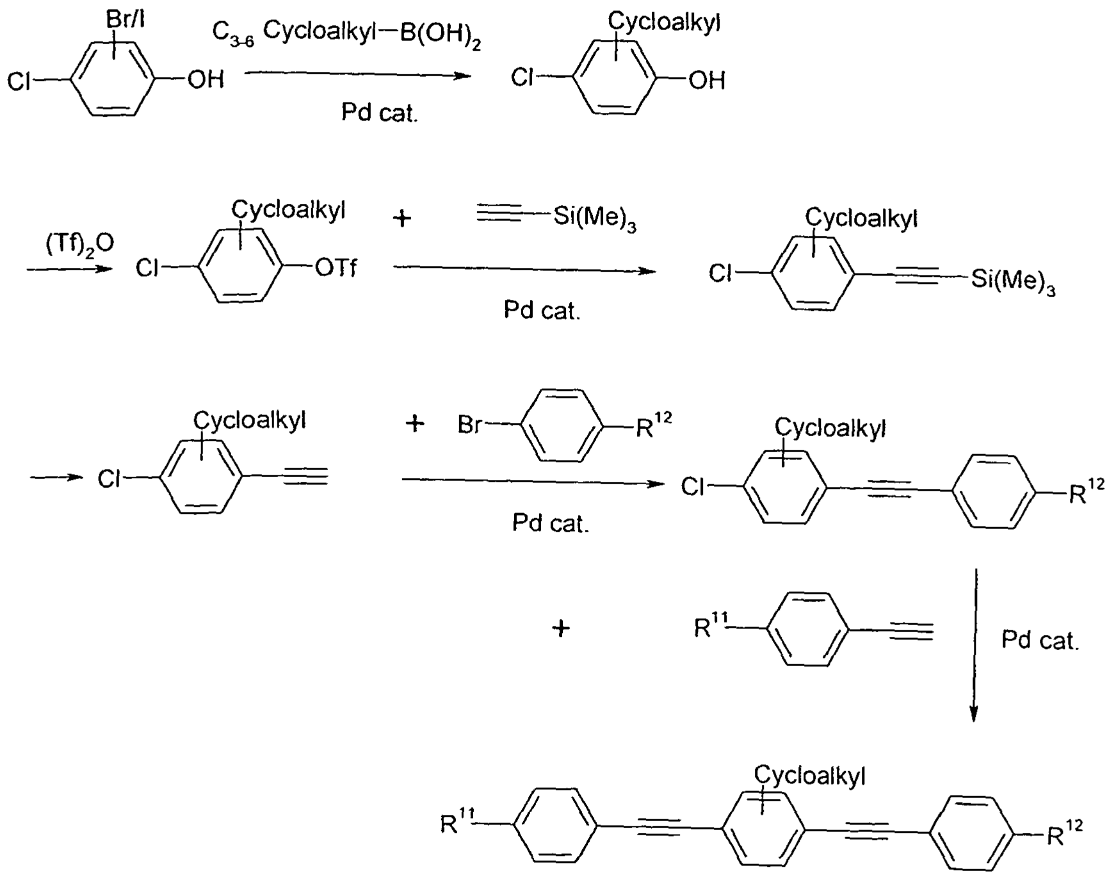


**Schema 4**. Beispielhafte Synthese der Verbindungen der Formel I (asymmetrisch).

Die Verbindungen der Formel I-1b können vorteilhaft nach den folgenden allgemeinen Reaktionsschemata

(Reaktionsschema 5 bis 11) erhalten werden. Die Parameter $L^1$, $R^{11}$, $R^{12}$ und $X^1$ sind darin wie vor- und nachstehend definiert. R hat die Bedeutung von $R^{11}$ bzw. $R^{12}$.

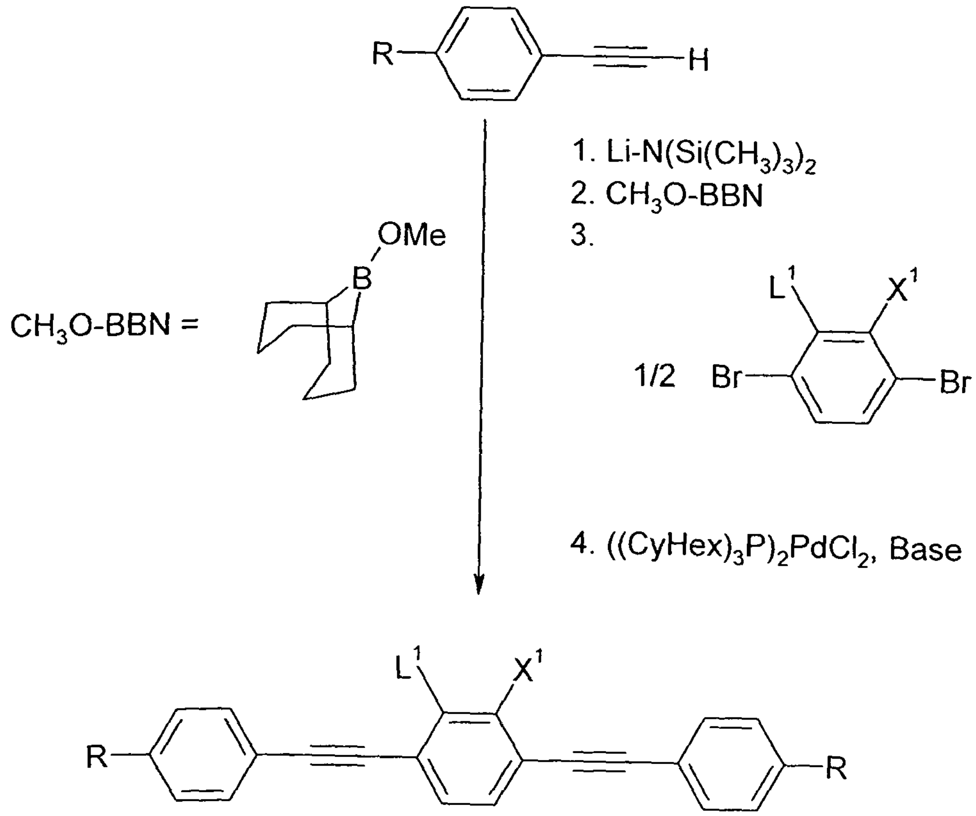


**Schema 5**. (asymmetrische Substitution)

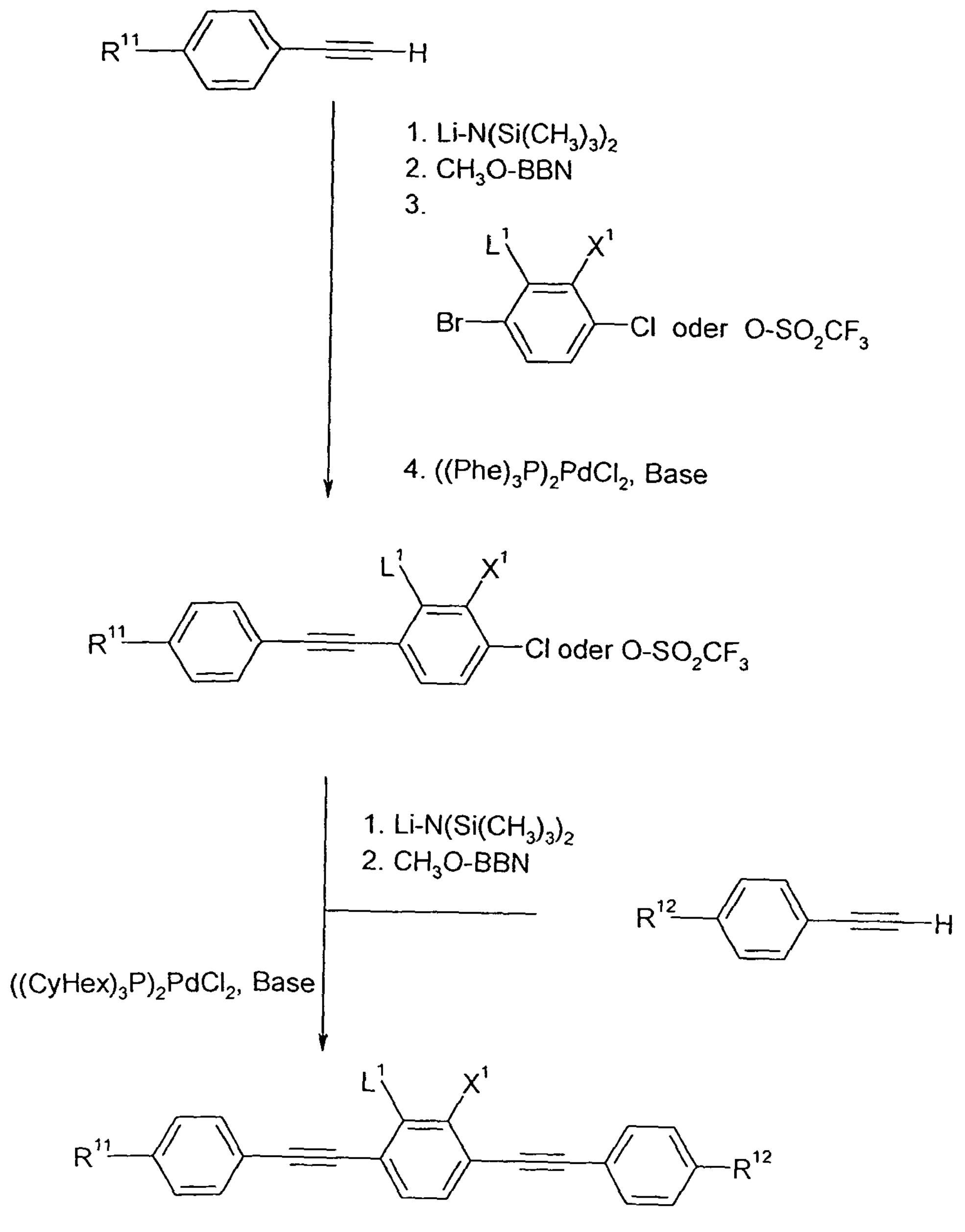


**Schema 6.** (asymmetrische Substitution)

In Schema 7 bis 11 wird die Synthese von verschieden substituierten zentralen Ringen wiedergegeben. Die Phenylalkinylreste lassen sich dabei auf beliebige substituierte Phenylalkinylreste verallgemeinern.

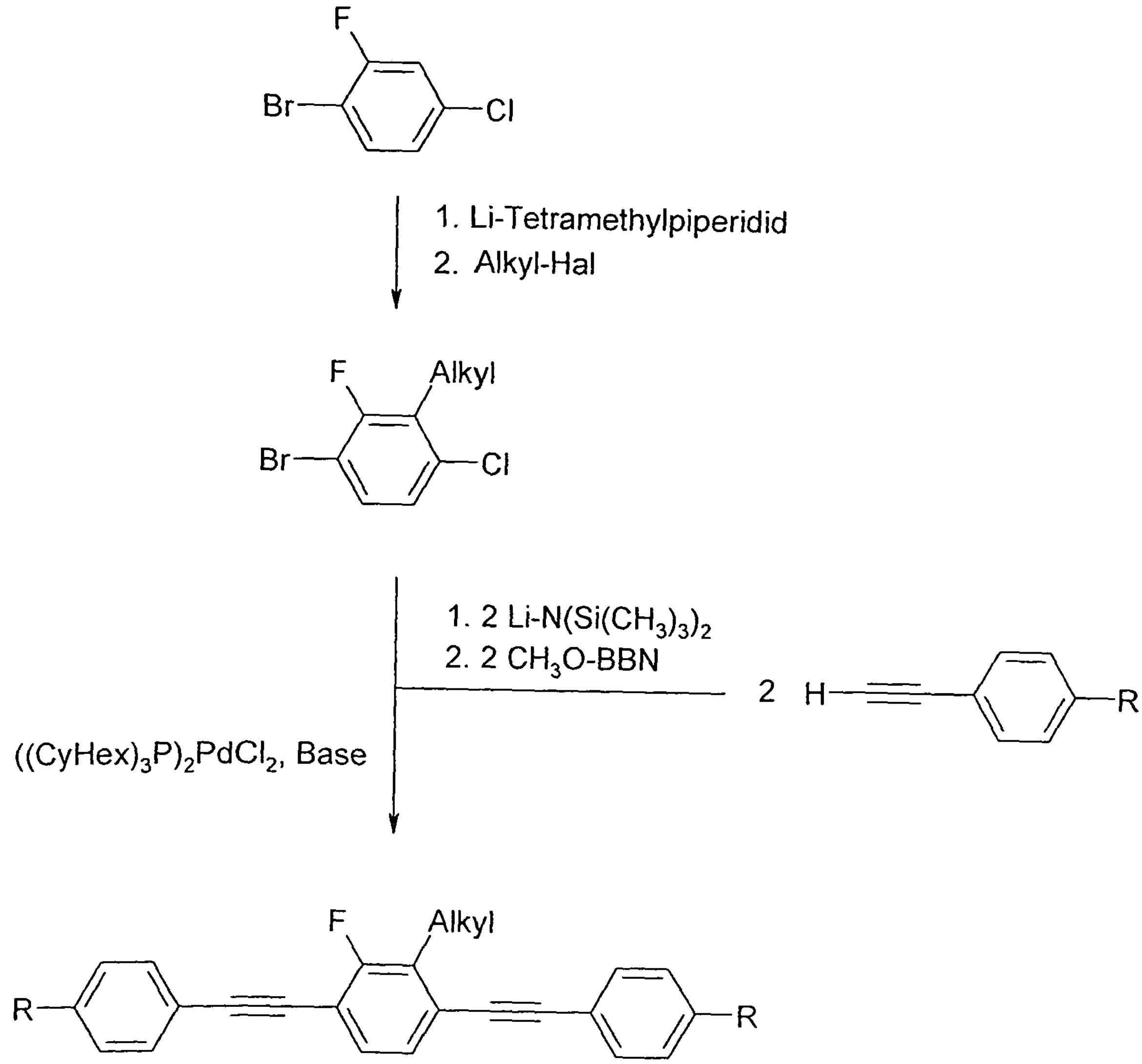
1. Li-Tetramethylpiperidid
2. Alkyl-Hal
1. 2 Li-N(Si(CH3)3)2
2. 2 CH3O-BBN
2
((CyHex)3P)2PdCl2, Base

**Schema 7.**

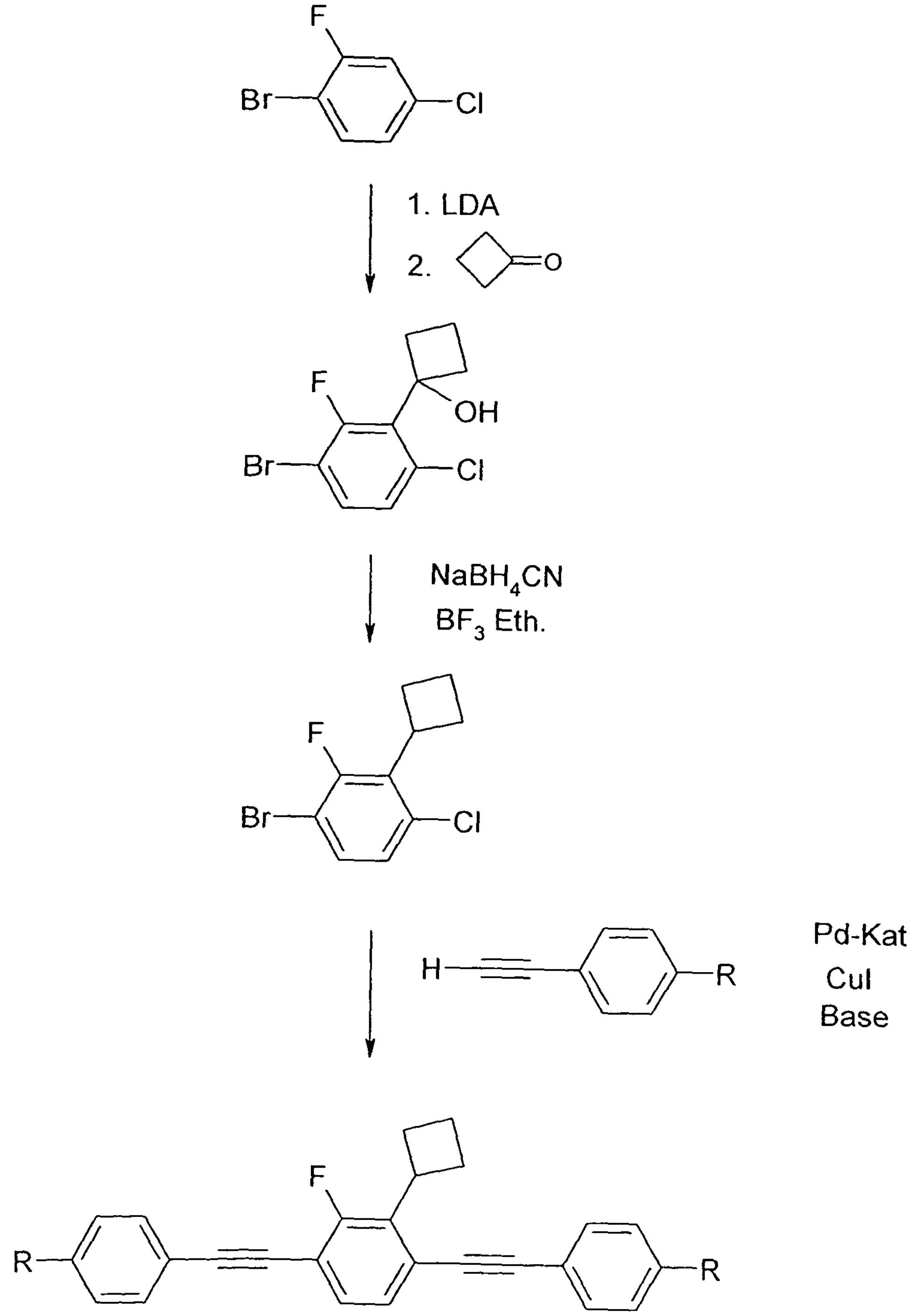


**Schema 8.**

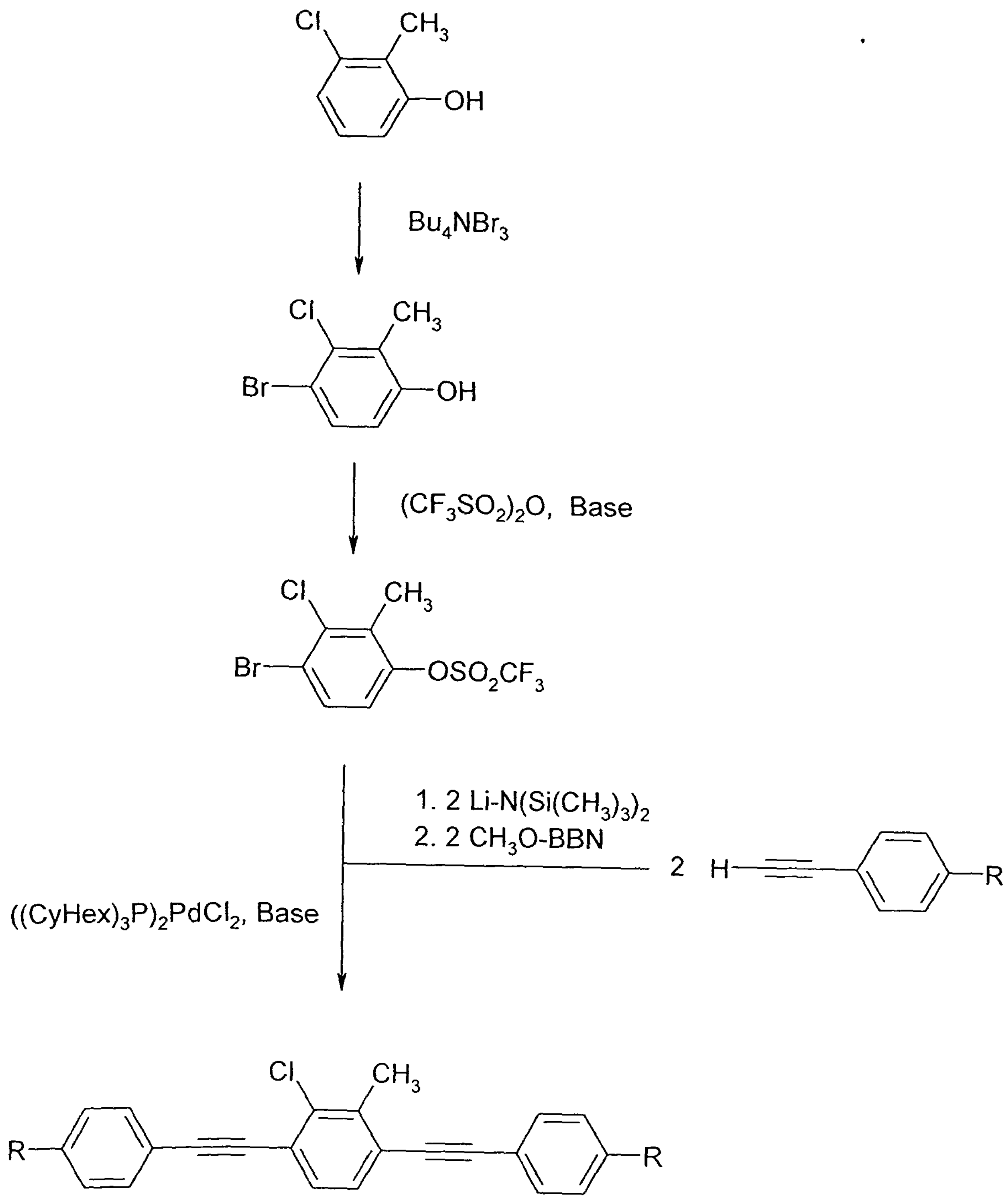

$Bu_4NBr_3$
$(CF_3SO_2)_2O$, Base
1. 2 Li-N(Si(CH3)3)2
2. 2 CH3O-BBN
2
$((CyHex)_3P)_2PdCl_2$, Base


**Schema 9.**

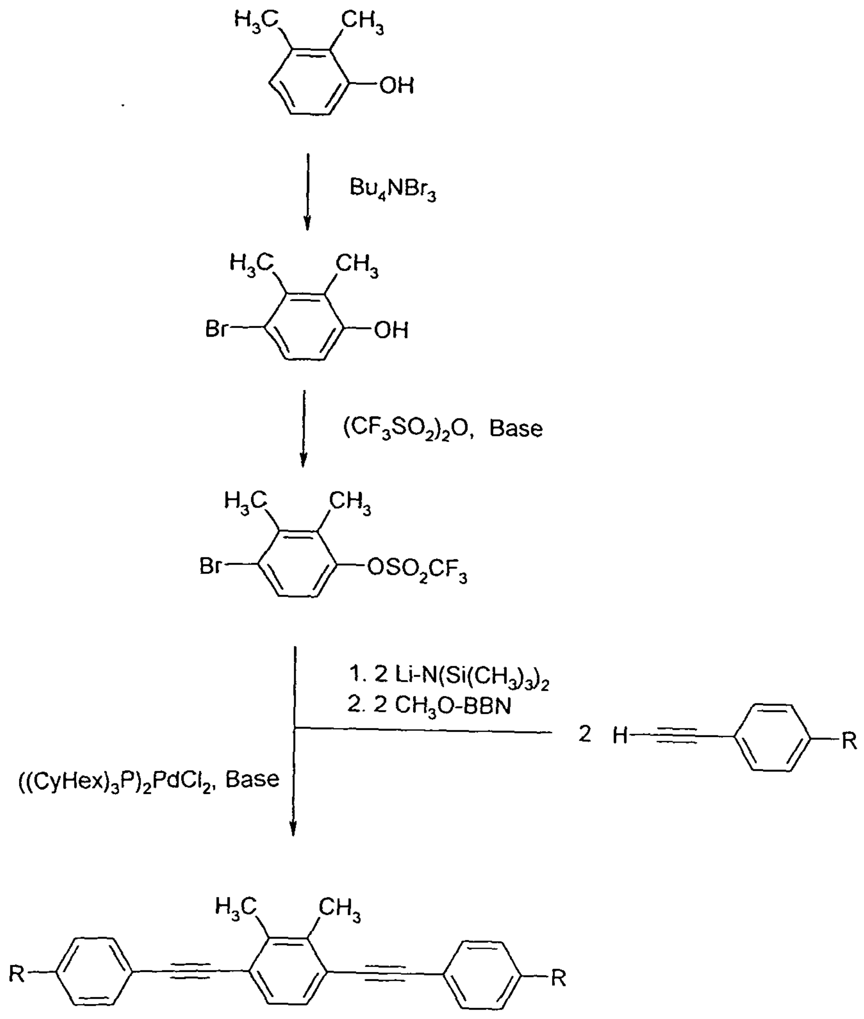
Bu$_4$NBr$_3$
(CF$_3$SO$_2$)$_2$O, Base
1. 2 Li-N(Si(CH$_3$)$_3$)$_2$
2. 2 CH$_3$O-BBN
((CyHex)$_3$P)$_2$PdCl$_2$, Base

**Schema 10.**

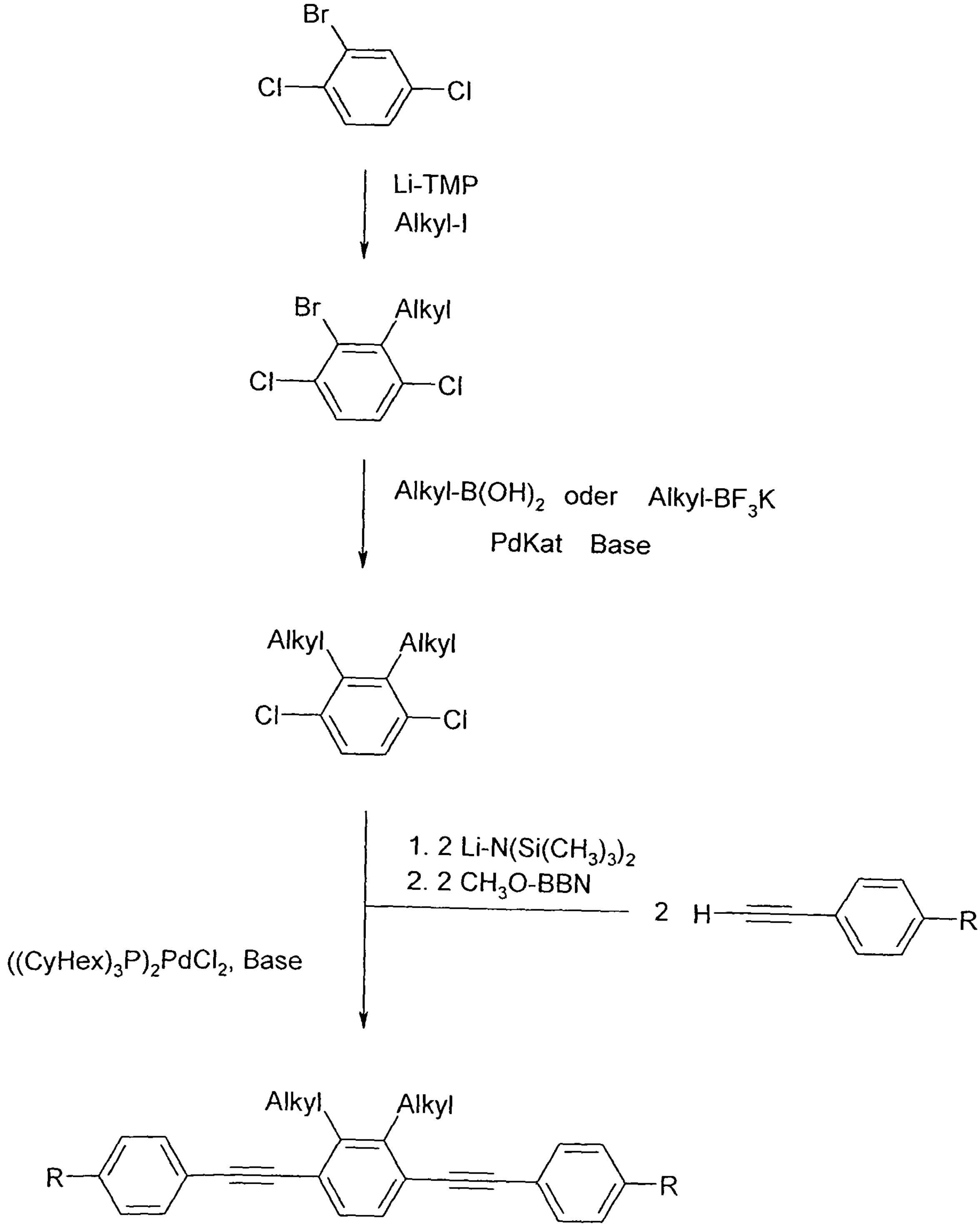


**Schema 11**.

Die Verbindungen der Formel I-2 können vorteilhaft wie an der folgenden beispielhaften Synthese ersichtlich hergestellt werden (Schema 12):

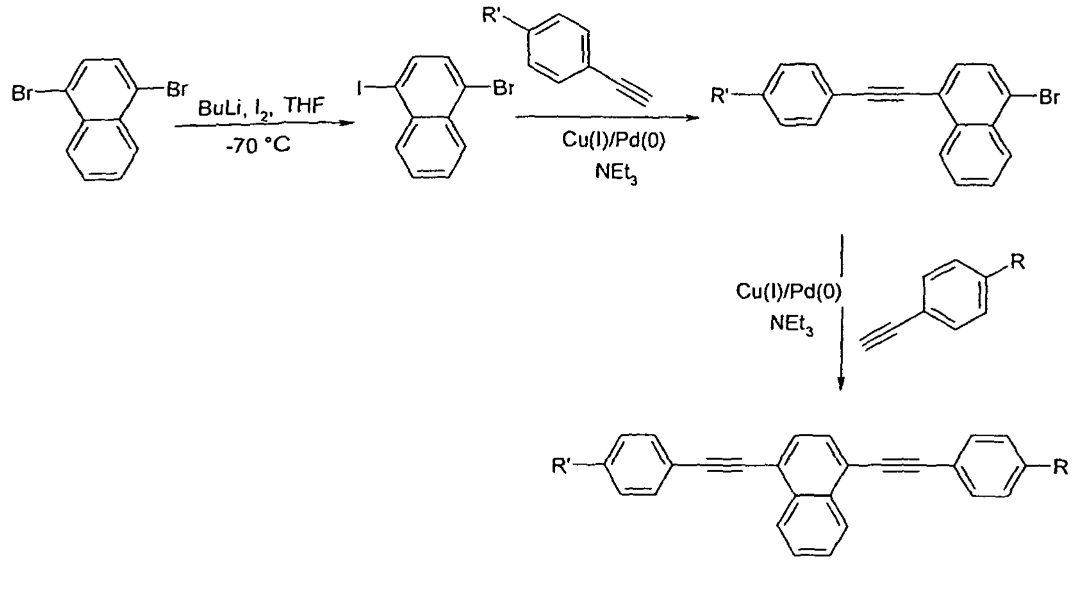


**Schema 12**. Beispielhafte Synthese der Verbindungen der Formel I-2 (asymmetrisch); R entsprechend $R^{11}$ und R' entsprechend $R^{12}$ definiert.

1,4-Dibromnaphthalin wird einer Halogen-Metall-Austauschreaktion unterzogen und in 1-Iod-4-Bromnaphthalin überführt. Dieses wird in einer Sonogashira-Kupplung selektiv zunächst in die einfach funktionalisierte Acetylen-verbrückte Verbindung überführt, gefolgt von einer zweiten Sonogashira-Reaktion, wobei die Zielverbindungen der Formel I mit zwei Acetylenbrücken erhalten werden. Sind die beiden Gruppen R gleich, so kann anstelle der Iodierung unmittelbar mit zwei Äquivalenten der Acetylenverbindung gekuppelt werden.

Die Verbindungen der Formeln I-3 und I-4 können vorteilhaft nach dem folgenden allgemeinen Reaktionsschema (Reaktionsschema 13) erhalten werden.

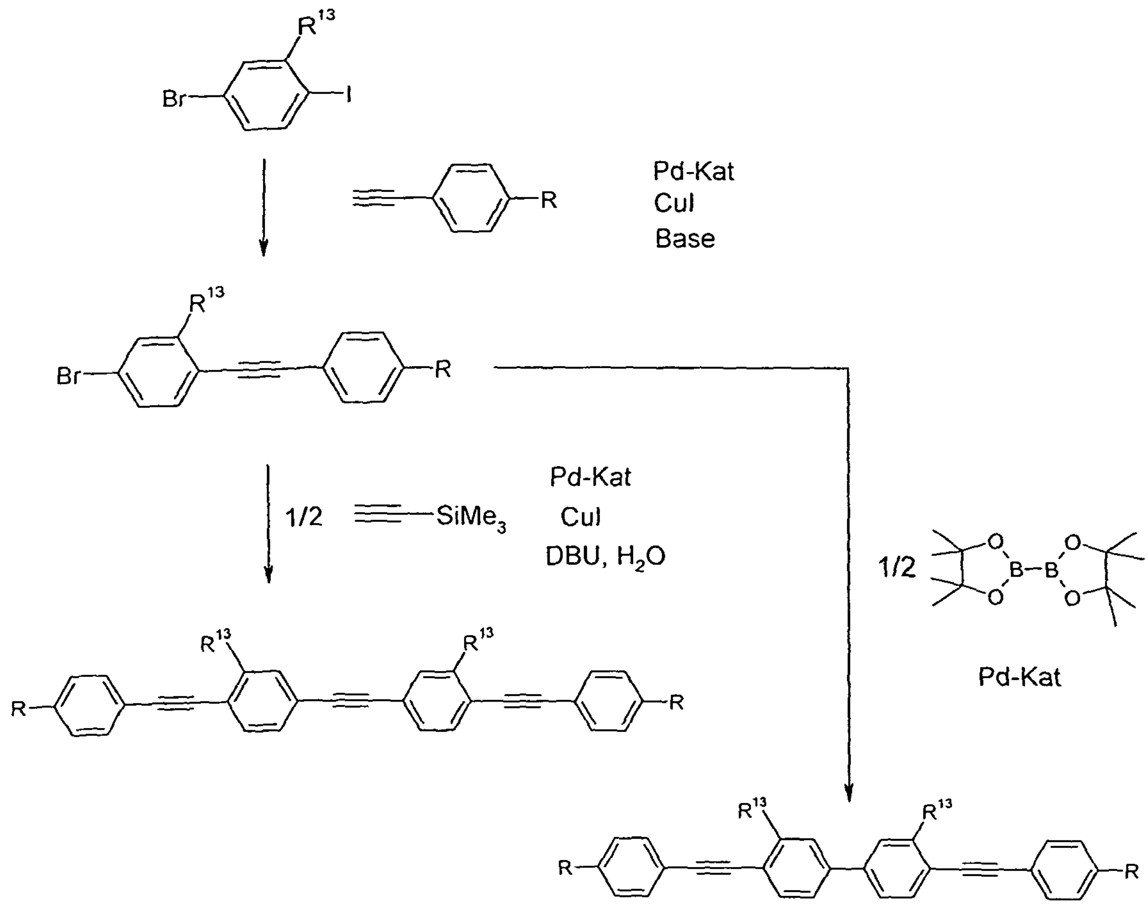


**Schema 13**. Beispielhafte Synthese der Verbindungen der Formeln I-3 und I-4 worin R die Bedeutung von $R^{11}$ bzw. $R^{12}$ hat (symmetrisch).

Bevorzugt enthalten diese erfindungsgemäßen Medien neben der Komponente A eine Komponente ausgewählt aus den beiden Komponenten B und C und gegebenenfalls zusätzlich die Komponente D und/oder die Komponente E.

Bevorzugt enthalten diese erfindungsgemäßen Medien zwei, drei oder vier, besonders bevorzugt zwei oder drei Komponenten ausgewählt aus der Gruppe der Komponenten A bis E. Bevorzugt enthalten diese Medien

- Komponente A und Komponente B, oder
- Komponente A, Komponente B und Komponente D und/oder E, oder
- Komponente A und Komponente C, oder
- Komponente A, Komponente C und Komponente D und/oder E.

Bevorzugt enthalten diese erfindungsgemäßen Medien eine Komponente B und keine Komponente C oder umgekehrt.

Bevorzugt hat die stark dielektrisch positive Komponente, Komponente B, eine dielektrische Anisotropie von 20,0 oder mehr, stärker bevorzugt von 25,0 oder mehr, besonders bevorzugt von 30,0 oder mehr und ganz besonders bevorzugt von 40,0 oder mehr.

Bevorzugt hat die stark dielektrisch negative Komponente, Komponente C, eine dielektrische Anisotropie von -7,0 oder weniger, stärker bevorzugt von-8,0 oder weniger, besonders bevorzugt von -10,0 oder weniger und ganz besonders bevorzugt von -15,0 oder weniger.

In einer bevorzugten Ausführungsform der vorliegenden Erfindung enthält die Komponente B eine oder mehrere Verbindungen ausgewählt aus der Gruppe der Verbindungen der Formeln IIA und IIB

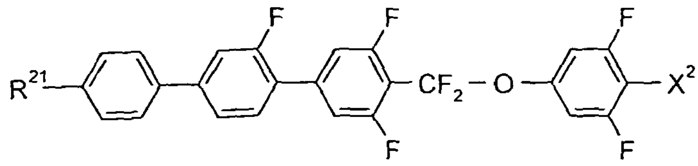

IIA

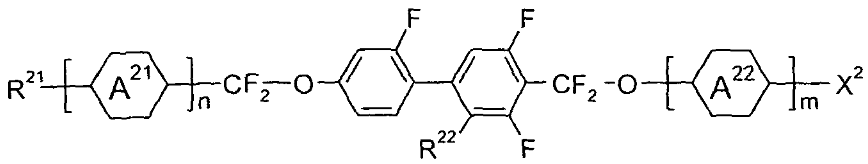

IIB

$R^{21}$ unfluoriertes Alkyl oder unfluoriertes Alkoxy jeweils mit 1 bis 15 C-Atomen oder unfluoriertes Alkenyl, unfluoriertes Alkenyloxy oder unfluoriertes Alkoxyalkyl jeweils mit 2 bis 15 C-Atomen, bevorzugt Alkyl, besonders bevorzugt *n*-Alkyl,

$R^{22}$ H, unfluoriertes Alkyl oder unfluoriertes Alkoxy jeweils mit 1 bis 5, bevorzugt mit 1 bis 3, besonders bevorzugt mit 3 C-Atomen,

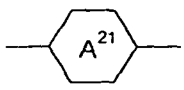 bis 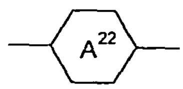

unabhängig voneinander und bei mehrfachem Auftreten auch diese untereinander jeweils unabhängig voneinander

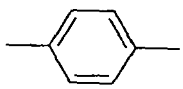, 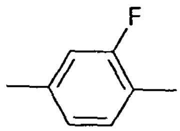, 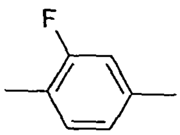,

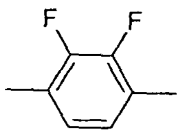, 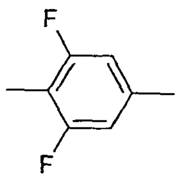, 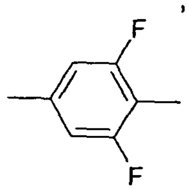,

oder 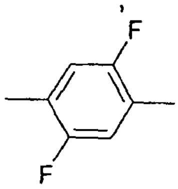, vorzugsweise

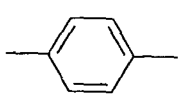, 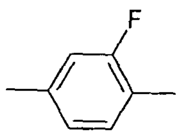

oder

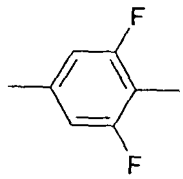

,

bedeuten,

n und m unabhängig voneinander 1 oder 2, bevorzugt

(n+m) 3 oder 4 und, besonders bevorzugt

n 2,

$X^2$ F, Cl, $-CF_3$ oder $-OCF_3$, bevorzugt F oder Cl, besonders bevorzugt F,

$Y^2$ F, Cl, $-CF_3$, $-OCF_3$, oder CN, bevorzugt CN, und

$Z^2$ H oder F,

bedeuten.

Bevorzugte Verbindungen der Formel IIA sind die Verbindungen der entsprechenden Unterformel IIA-1

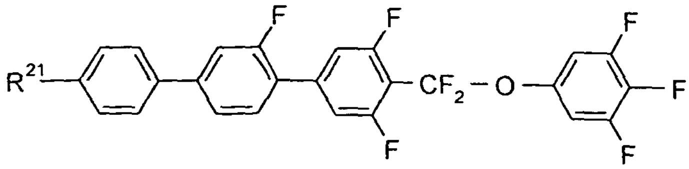

IIA-1

worin $R^{21}$ die oben gegebene Bedeutung hat.

Bevorzugte Verbindungen der Formel IIB sind die Verbindungen der entsprechenden Unterformeln IIB-1 und IIB-2

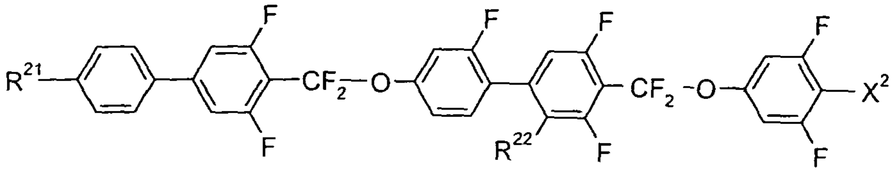

IIB-1

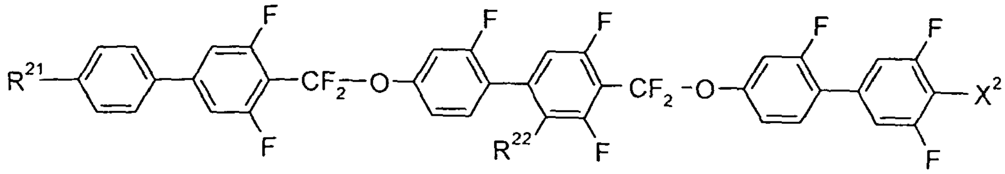

IIB-2

worin $R^{21}$ , $R^{22}$ und $X^2$ die jeweiligen oben gegebenen Bedeutungen haben.

In einer bevorzugten Ausführungsform der vorliegenden Erfindung enthält die Komponente C eine oder mehrere Verbindungen ausgewählt aus der Gruppe der Verbindungen der Formeln IIIA und IIIB:

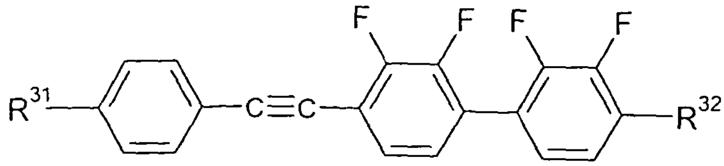

IIIA

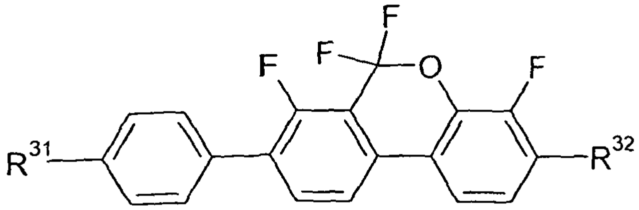

IIIB

worin

$R^{31}$ und $R^{32}$ unabhängig voneinander die oben bei Formel IIA für $R^{21}$ die oben angegebene Bedeutung haben

und bevorzugt

$R^{31}$ $C_nH_{2n+1}$ oder $CH_2$=CH-$(CH_2)_z$ und
$R^{32}$ $C_mH_{2m+1}$ oder O-$C_mH_{2m+1}$ oder $(CH_2)_z$-CH=$CH_2$

bedeutet, und worin

n und m unabhängig voneinander eine ganze Zahl im Bereich von 0 bis 15, bevorzugt im Bereich von 1 bis 7 und besonders bevorzugt 1 bis 5 bedeuten und
Z 0, 1, 2, 3 oder 4, bevorzugt 0 oder 2 bedeutet.

Die bevorzugten Kombinationen von ($R^{31}$ und $R^{32}$) sind hier insbesondere ($C_nH_{2n+1}$ und $C_mH_{2m+1}$) und ($C_nH_{2n+1}$ und O-$C_mH_{2m+1}$).

Bevorzugte Verbindungen der Formel IIIB sind die Verbindungen der Unterformeln IIIB-1 und IIIB-2

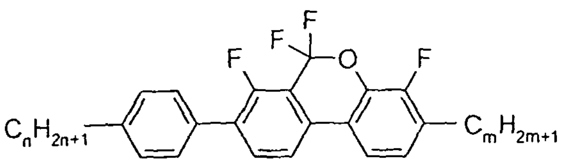

IIIB-1

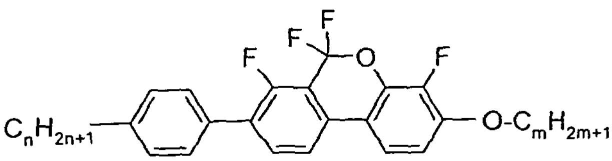

IIIB-2

worin

n und m jeweils die oben bei Formel IIIB gegebenen Bedeutungen haben und bevorzugt unabhängig voneinander eine ganze Zahl im Bereich von 1 bis 7

bedeuten.

In einer bevorzugten Ausführungsform der vorliegenden Erfindung enthält die Komponente D eine oder mehrere Verbindungen der folgenden Formel IV

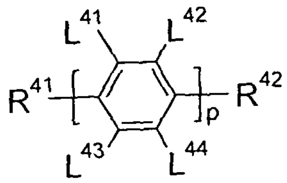

IV

worin

| | |
|---|---|
| $R^{41}$ und $R^{42}$ | unabhängig voneinander eine der oben bei Formel I für $R^{11}$ die oben angegebenen Bedeutungen haben, |
| $L^{41}$ bis $L^{44}$ | bei jedem Erscheinen, jeweils unabhängig voneinander H, Alkyl mit 1 bis 5 C-Atomen, F oder Cl und |
| p | eine ganze Zahl im Bereich von 7 bis 14, bevorzugt von 8 bis 12 und besonders bevorzugt von 9 bis 10 |

bedeuten
und bevorzugt
mindestens zwei der vorhandenen Substituenten

| | |
|---|---|
| $L^{41}$ bis $L^{44}$ | eine von H verschiedene Bedeutung haben und |
| $R^{41}$ | $C_nH_{2n+1}$ oder $CH_2{=}CH{-}(CH_2)_Z$ und |
| $R^{42}$ | $C_mH2_{m+1}$ oder $O{-}C_mH_{2m+1}$ oder $(CH_2)_Z{-}CH{=}CH_2$ |

bedeutet, und worin

| | |
|---|---|
| n und m | unabhängig voneinander eine ganze Zahl im Bereich von 0 bis 15, bevorzugt im Bereich von 1 bis 7 und besonders bevorzugt 1 bis 5 bedeuten und |
| z | 0, 1, 2, 3 oder 4, bevorzugt 0 oder 2 bedeutet. |

In einer bevorzugten Ausführungsform der vorliegenden Anmeldung enthält das Flüssigkristallmedium zusätzlich eine weitere Komponente, Komponente E, die bevorzugt aus einer oder mehreren Verbindungen ausgewählt aus der Gruppe der Verbindungen der Formeln V bis IX besteht

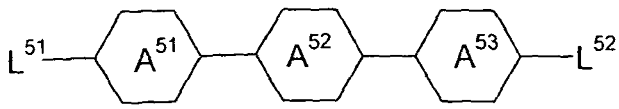

V

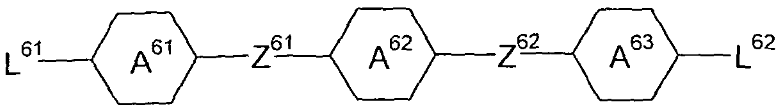

VI

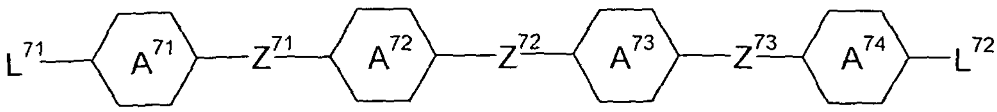

VII

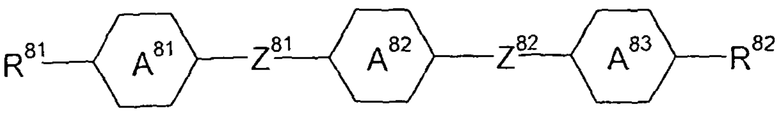

VIII

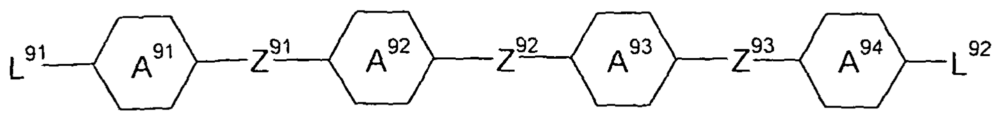

IX

worin

$L^{51}$ $R^{51}$ oder $X^{51}$,

$L^{52}$ $R^{52}$ oder $X^{52}$,

$R^{51}$ und $R^{52}$ unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl bedeuten,

$X^{51}$ und $X^{52}$ unabhängig voneinander H, F, Cl, -CN, -NCS, -$SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und

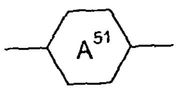 bis 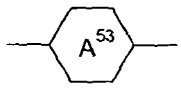

unabhängig voneinander

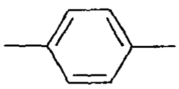, 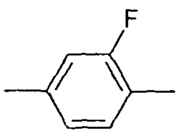, 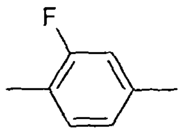,

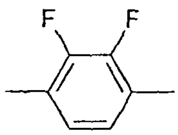, 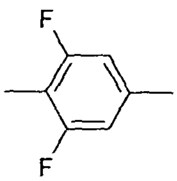, 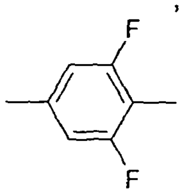,

oder 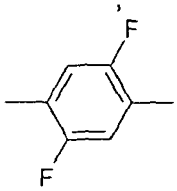, vorzugsweise

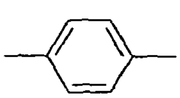, 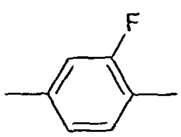, 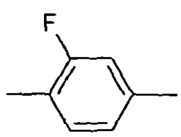,

oder 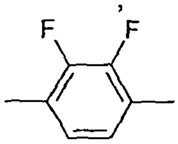, bedeuten,

$L^{61}$ $R^{61}$ und, im Fall, dass $Z^{61}$ und/oder $Z^{62}$ *trans*- -CH=CH- oder *trans*- -CF=CF-, bedeutet, alternativ auch $X^{61}$, bedeutet,

$L^{62}$ $R^{62}$ und, im Fall, dass $Z^{61}$ und/oder $Z^{62}$ *trans*- -CH=CH- oder *trans*- -CF=CF-, bedeutet, alternativ auch $X^{62}$, bedeutet,

$R^{61}$ und $R^{62}$ unabhängig voneinander H, unfluoriertes Alkyl oder unfluoriertes Alkoxy mit 1 bis 17, bevorzugt

mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl, bedeuten,

$X^{61}$ und $X^{62}$ unabhängig voneinander F oder Cl, -CN, -NCS, -$SF_5$, fluoriertes Alkyl oder Alkoxy mit 1 bis 7 C-Atomen oder fluoriertes Alkenyl, Alkenyloxy oder Alkoxyalkyl mit 2 bis 7 C-Atomen, oder -NCS, vorzugsweise -NCS, bedeuten,

einer von $Z^{61}$ und $Z^{62}$ *trans*- -CH=CH-, *trans*- -CF=CF- oder -C=C- bedeutet und der andere unabhängig davon *trans*- -CH=CH-, *trans*-CF=CF- oder eine Einfachbindung bedeutet, vorzugsweise einer von ihnen -C=C- oder *trans*- -CH=CH- und der andere eine Einfachbindung bedeutet, und

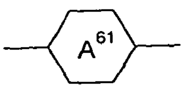 bis 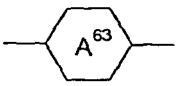

unabhängig voneinander

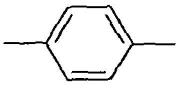, 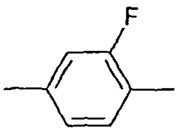, 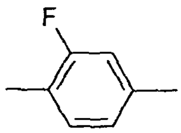,
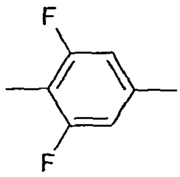, 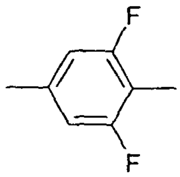, 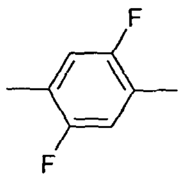,
oder 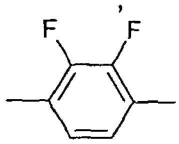, vorzugsweise

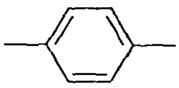, 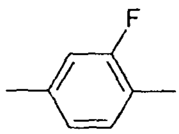, 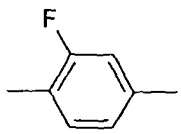,
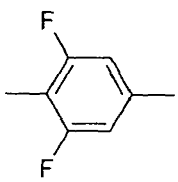, 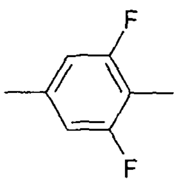, oder
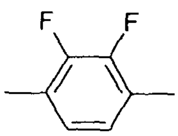, bedeuten,

$L^{71}$ $R^{71}$ oder $X^{71}$,

$L^{72}$ $R^{72}$ oder $X^{72}$,

$R^{71}$ und $R^{72}$ unabhängig voneinander H, unfluoriertes Alkyl oder unfluoriertes Alkoxy mit 1 bis 17, bevorzugt mit 3

bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl bedeuten,

$X^{71}$ und $X^{72}$ unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und

$Z^{71}$ bis $Z^{73}$ unabhängig voneinander *trans*- -CH=CH-, *trans*- -CF=CF-, -C=C- oder eine Einfachbindung bedeuten, vorzugsweise eines oder mehrere von ihnen eine Einfachbindung bedeutet, besonders bevorzugt alle eine Einfachbindung bedeuten und

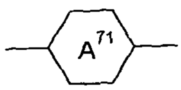 bis 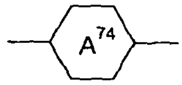

unabhängig voneinander

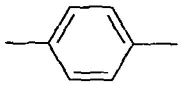, 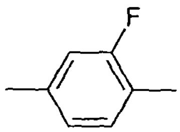, 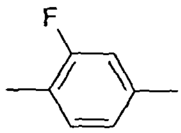,

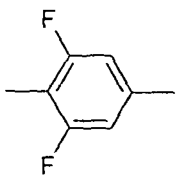, 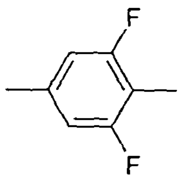, 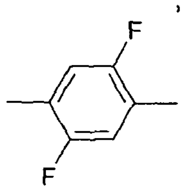,

oder 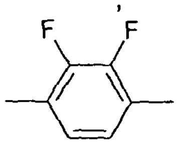, vorzugsweise

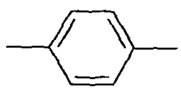, 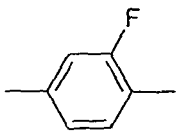, 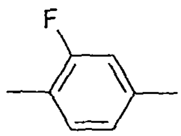,

oder 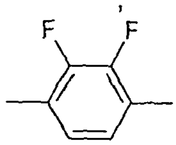, bedeuten,

$R^{81}$ und $R^{82}$ unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,

einer von $Z^{81}$ und $Z^{82}$ *trans*- -CH=CH-, *trans*- -CF=CF- oder -C=C- bedeutet und der andere unabhängig davon *trans*- -CH=CH-, *trans*-CF=CF- oder eine Einfachbindung bedeutet, vorzugsweise einer von ihnen -C=C- oder *trans*- -CH=CH- und der andere eine Einfachbindung bedeutet, und

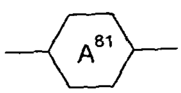 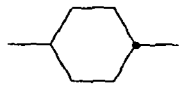

bedeutet,

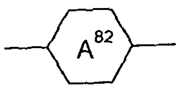 und 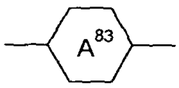

unabhängig voneinander

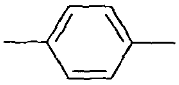, 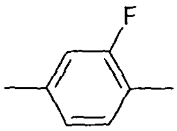, 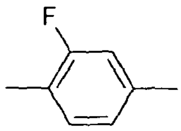,

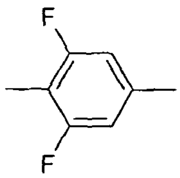, 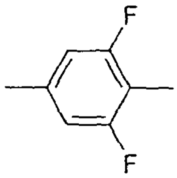, 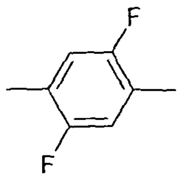,

oder 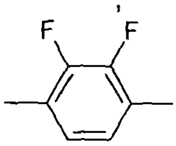 bedeuten,

$L^{91}$ $R^{91}$ oder $X^{91}$ bedeutet,

$L^{92}$ $R^{92}$ oder $X^{92}$ bedeutet,

$R^{91}$ und $R^{92}$ unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,

$X^{91}$ und $X^{92}$ unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und

$Z^{91}$ bis $Z^{93}$ unabhängig voneinander *trans*- -CH=CH-, *trans*- -CF=CF-, -C=C- oder eine Einfachbindung bedeuten bevorzugt einer oder mehrere von ihnen eine Einfachbindung bedeutet, und besonders bevorzugt alle eine Einfachbindung bedeuten,

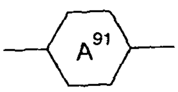 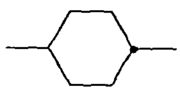, 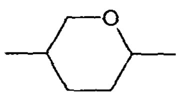

oder

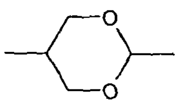

bedeutet,

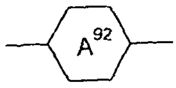 bis 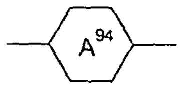

unabhängig voneinander

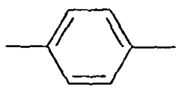, 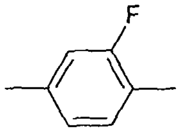, 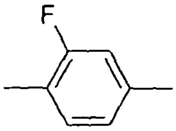,

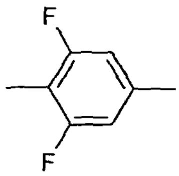, 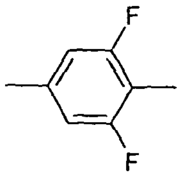, 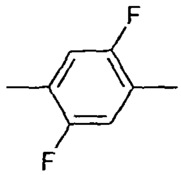,

oder 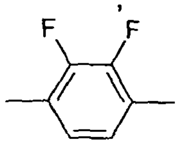 bedeuten,

und, wobei Verbindungen der Formel IIIA von den Verbindungen der Formel VI ausgeschlossen sind.

In einer bevorzugten Ausführungsform der vorliegenden Erfindung enthält das Flüssigkristallmedium eine oder mehrere Verbindungen der Formeln V, bevorzugt ausgewählt aus der Gruppe der Verbindungen der Formeln V-1 bis V-3, bevorzugt der Formeln V-1 und/oder V-2 und/oder V-3, bevorzugt der Formeln V-1 und V-2, stärker bevorzugt bestehen diese Verbindungen der Formel V überwiegend, noch stärker bevorzugt bestehen sie im Wesentlichen und ganz besonders bevorzugt bestehen sie vollständig daraus:

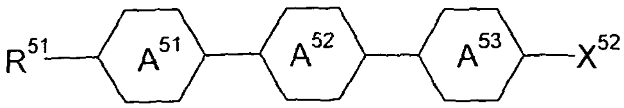

V-1

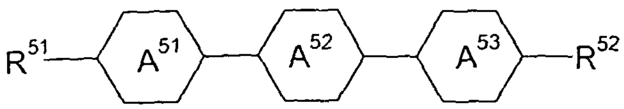

V-2

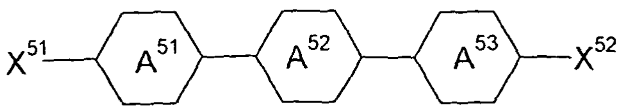

V-3

worin die Parameter die jeweiligen oben bei Formel V angegebenen Bedeutungen haben und bevorzugt

| | |
|---|---|
| $R^{51}$ | unfluoriertes Alkyl mit 1 bis 7 C-Atomen oder unfluoriertes Alkenyl mit 2 bis 7 C-Atomen, |
| $R^{52}$ | unfluoriertes Alkyl mit 1 bis 7 C-Atomen oder unfluoriertes Alkenyl mit 2 bis 7 C-Atomen, oder unfluoriertes Alkoxy mit 1 bis 7 C-Atomen, |
| $X^{51}$ und $X^{52}$ | unabhängig voneinander F, Cl, $-OCF_3$, $-CF_3$, -CN, -NCS oder $-SF_5$, bevorzugt F, Cl, $-OCF_3$, oder -CN, bedeuten. |

Bevorzugt werden die Verbindungen der Formeln V-1 ausgewählt aus der Gruppe der Verbindungen der Formeln V-1a bis V-1d, stärker bevorzugt bestehen diese Verbindungen der Formel V überwiegend, noch stärker bevorzugt bestehen sie im Wesentlichen und ganz besonders bevorzugt bestehen sie vollständig daraus:

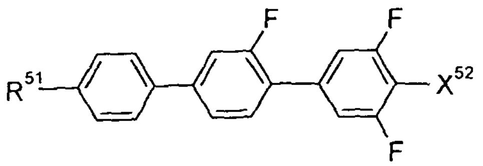

V-1a

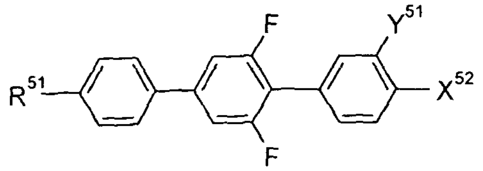

V-1b

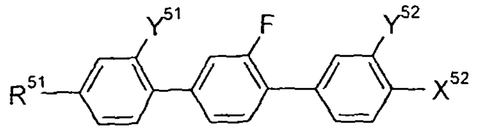

V-1c

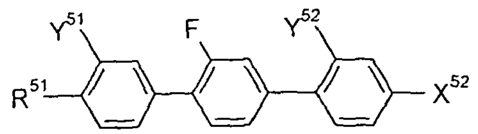

V-1d

worin die Parameter die jeweiligen oben bei Formel V-1 angegebenen Bedeutungen haben und worin

$Y^{51}$ und $Y^{52}$ jeweils unabhängig voneinander H oder F bedeuten, und bevorzugt

$R^{51}$ Alkyl oder Alkenyl, und

$X^{51}$ F, Cl oder $-OCF_3$, bedeuten.

Bevorzugt werden die Verbindungen der Formeln V-2 ausgewählt aus der Gruppe der Verbindungen der Formeln V-2a bis V-2e und/oder aus der Gruppe der Verbindungen der Formeln V-2f und V-2g, stärker bevorzugt bestehen diese Verbindungen der Formel V überwiegend, noch stärker bevorzugt bestehen sie im Wesentlichen und ganz besonders bevorzugt bestehen sie vollständig daraus:

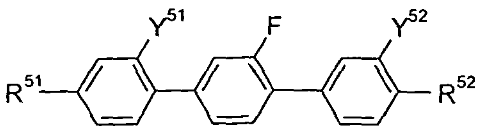

V-2a

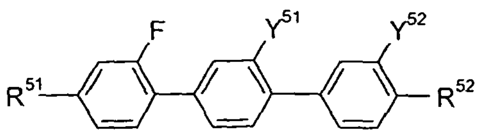

V-2b

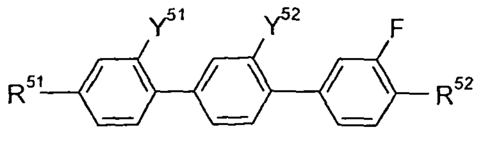

V-2c

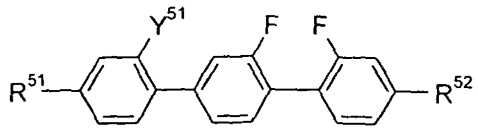

V-2d

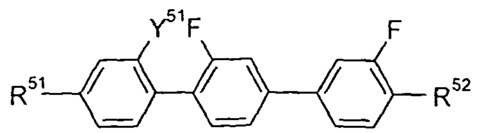

V-2e

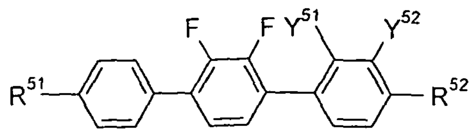

V-2f

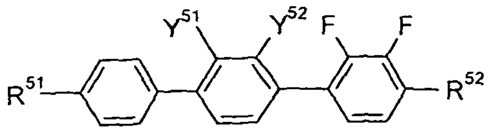

V-2g

wobei jeweils die Verbindungen der Formel V-2a von den Verbindungen der Formeln V-2b und V-2C, die Verbindungen der Formel V-2b von den Verbindungen der Formel V-2c und die Verbindungen der Formel V-2e von den Verbindungen der Formel V-2f ausgeschlossen sind, und
worin die Parameter die jeweiligen oben bei Formel V-1 angegebenen Bedeutungen haben und worin

$Y^{51}$ und $Y^{52}$ jeweils unabhängig voneinander H oder F bedeuten, und bevorzugt

$R^{51}$ Alkyl oder Alkenyl,

$X^{51}$ F, Cl oder $-OCF_3$ bedeuten, und bevorzugt einer von

$Y^{51}$ und $Y^{52}$ H und der andere H oder F bevorzugt ebenfalls H bedeutet.

Bevorzugt sind die Verbindungen der Formel V-3 Verbindungen der Formel V-3a:

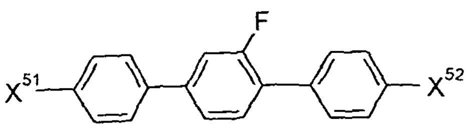

V-3a

worin die Parameter die jeweiligen oben bei Formel V-1 angegebenen Bedeutungen haben und worin bevorzugt

$X^{51}$ F, Cl, bevorzugt F,

$X^{52}$ F, Cl oder $-OCF_3$, bevorzugt $-OCF_3$ bedeutet.

In einer noch stärker bevorzugten Ausführungsform der vorliegenden Erfindung werden die Verbindungen der Formel V ausgewählt aus der Gruppe der Verbindungen V-1a bis V-1d, bevorzugt ausgewählt aus der Gruppe der

Verbindungen V-1c und V-1d, stärker bevorzugt bestehen die Verbindungen der Formel V überwiegend, noch stärker bevorzugt bestehen sie im Wesentlichen und ganz besonders bevorzugt bestehen sie vollständig daraus:

Bevorzugt werden die Verbindungen der Formeln V-1 a ausgewählt aus der Gruppe der Verbindungen der Formeln V-1a-1 und V-1a-2, stärker bevorzugt bestehen diese Verbindungen der Formel V überwiegend, noch stärker bevorzugt bestehen sie im Wesentlichen und ganz besonders bevorzugt bestehen sie vollständig daraus:

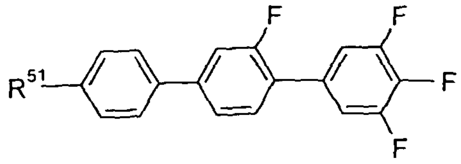

V-1a-1

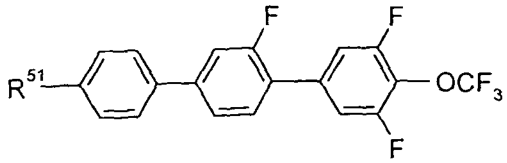

V-1a-2

worin

$R^{51}$ die oben angegebene Bedeutung hat und bevorzugt $C_nH_{2n+1}$ bedeutet, worin

n eine ganze Zahl im Bereich von 0 bis 7, bevorzugt im Bereich von 1 bis 5 und besonders bevorzugt 3 oder 7 bedeutet.

Bevorzugt sind die Verbindungen der Formeln V-1 b Verbindungen der Formel V-2b-1:

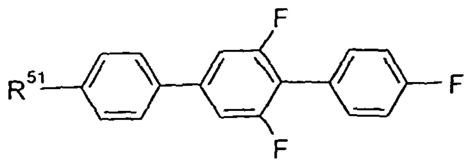

V-1b-1

worin

$R^{51}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln V-1c ausgewählt aus der Gruppe der Verbindungen der Formeln V-1c-1 bis und V-1c-4, bevorzugt ausgewählt aus der Gruppe der Verbindungen der Formeln V-1 c-1 und V-1c-2,stärker bevorzugt bestehen diese Verbindungen der Formel V überwiegend, noch stärker bevorzugt bestehen sie im Wesentlichen und ganz besonders bevorzugt bestehen sie vollständig daraus:

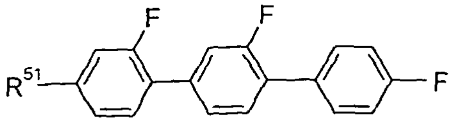

V-1c-1

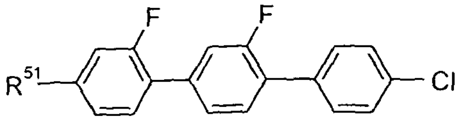

V-1c-2

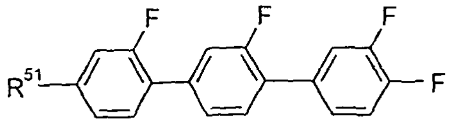

V-1c-3

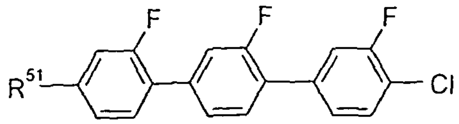

V-1c-4

worin

$R^{51}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln V-1d ausgewählt aus der Gruppe der Verbindungen der Formeln V-1d-1 und V-1d-2, bevorzugt der Verbindung der Formeln V-1d-2, stärker bevorzugt bestehen diese Verbindungen der Formel V überwiegend, noch stärker bevorzugt bestehen sie im Wesentlichen und ganz besonders bevorzugt bestehen sie vollständig daraus:

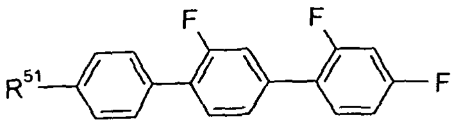

V-1d-1

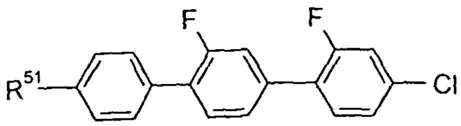

V-1d-2

worin

$R^{51}$ die oben angegebene Bedeutung hat und bevorzugt $C_nH_{2n}+_1$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln V-2a ausgewählt aus der Gruppe der Verbindungen der Formeln V-2a-1 und V-2a-2, bevorzugt der Verbindungen der Formeln V-1 a-1, stärker bevorzugt bestehen diese Verbindungen der Formel V überwiegend, noch stärker bevorzugt bestehen sie im Wesentlichen und ganz besonders bevorzugt bestehen sie vollständig daraus:

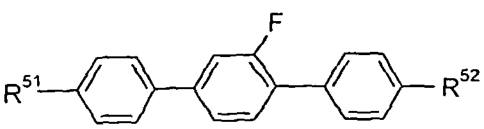

V-2a-1

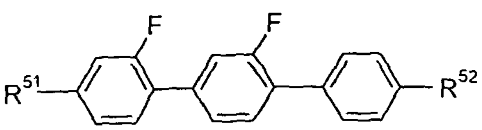

V-2a-2

worin

$R^{51}$ die oben angegebene Bedeutung hat und bevorzugt $C_nH_{2n+1}$ oder $CH_2=CH-(CH_2)_z$ bedeutet, und

$R^{52}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Bevorzugte Kombinationen von ($R^{51}$ und $R^{52}$), insbesondere bei Formel V-2a-1 sind ($C_nH_{2n+1}$ und $C_mH_{2m+1}$), ($C_nH_{2n+1}$ und $O-C_mH_{2m+1}$), ($CH_2=CH-(CH_2)_z$ und $C_mH_{2m+1}$), ($CH_2=CH-(CH_2)_z$ und $O-C_mH_{2n+1}$) und ($C_nH_{2n+1}$ und $(CH_2)_z-CH=CH_2$).
Bevorzugte Verbindungen der Formel V-2b sind die Verbindungen der Formel V-2b-1:

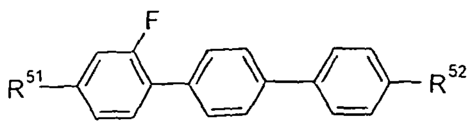

V-2b-1

worin

$R^{51}$ die oben angegebene Bedeutung hat und bevorzugt $C_nH_{2n+1}$ oder $CH_2=CH-(CH_2)_z$ bedeutet, und

$R^{52}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m}+1$).
Bevorzugte Verbindungen der Formel V-2c sind die Verbindungen der Formel V-2c-1:

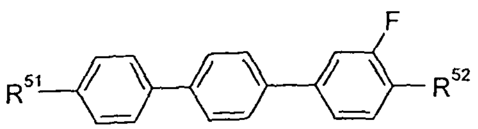

V-2c-1

worin

$R^{51}$ die oben angegebene Bedeutung hat und bevorzugt $C_nH_{2n+1}$ oder $CH_2=CH-(CH_2)_z$ bedeutet, und

$R^{52}$ die oben angegebene Bedeutung hat und bevorzugt $C_mH_{2m+1}$ oder $O-C_mH_{2m+1}$ oder $(CH_2)_z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m+1}$).
Bevorzugte Verbindungen der Formel V-2d sind die Verbindungen der Formel V-2d-1:

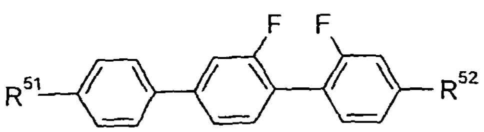

V-2d-1

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m+1}$).

Bevorzugte Verbindungen der Formel V-2e sind die Verbindungen der Formel V-2e-1:

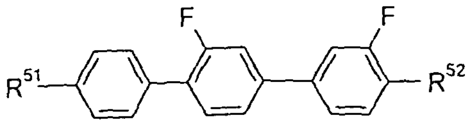

V-2e-1

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und O-$C_mH_{2m+1}$).

Bevorzugte Verbindungen der Formel V-2f sind die Verbindungen der Formel V-2f-1:

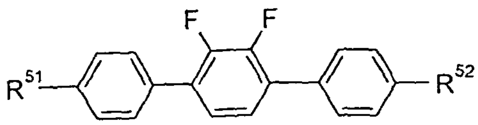

V-2f-1

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_{2m+1}$ oder $(CH_2)_z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{51}$ und $R^{52}$) sind hier insbesondere ($C_nH_{2n+1}$ und $C_mH_{2m+1}$) und ($C_nH_{2n+1}$ und O-$C_mH_{2m+1}$), besonders bevorzugt ($C_nH_{2n+1}$ und $C_mH_{2m+1}$).

Bevorzugte Verbindungen der Formel V-2g sind die Verbindungen der Formel V-2g-1:

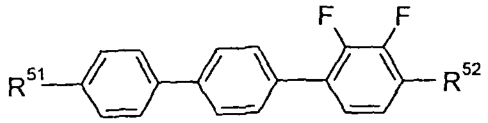

V-2g-1

worin

R$^{51}$ die oben angegebene Bedeutung hat und bevorzugt $C_nH_{2n+1}$ oder $CH_2$=CH-$(CH_2)_z$ bedeutet, und

R$^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von (R$^{51}$ und R$^{52}$) sind hier insbesondere ($C_nH_{2n+1}$ und $C_mH_{2m+1}$) und ($C_nH_{2n+1}$ und O-$C_mH_{2m+1}$), besonders bevorzugt ($C_nH_{2n+1}$ und 4-$C_mH_{2n+1}$).

Bevorzugt werden die Verbindungen der Formeln VI ausgewählt aus der Gruppe der Verbindungen der Formeln VI-1 bis VI-4, stärker bevorzugt bestehen diese Verbindungen der Formel VI überwiegend, noch stärker bevorzugt bestehen sie im Wesentlichen und ganz besonders bevorzugt bestehen sie vollständig daraus:

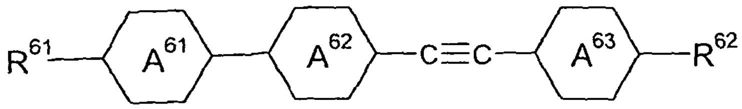

VI-1

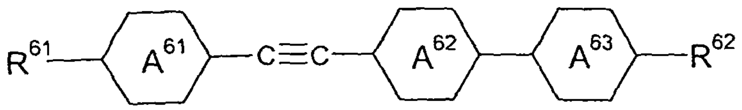

VI-2

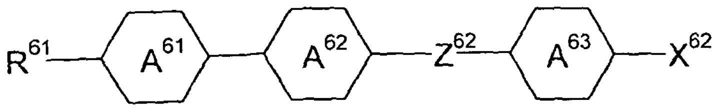

VI-3

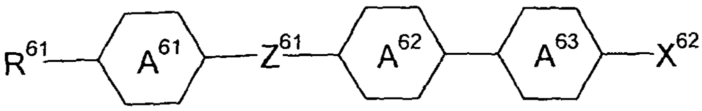

VI-4

worin

Z$^{61}$ und Z$^{62}$ *trans*- -CH=CH- oder *trans*- -CF=CF-, bevorzugt *trans*- -CH=CH-, bedeutet, und die übrigen Parameter die oben unter Formel VI gegebene Bedeutung haben und bevorzugt

R$^{61}$ und R$^{62}$ unabhängig voneinander H, unfluoriertes Alkyl oder Alkoxy mit 1 bis 7 C-Atomen oder unfluoriertes Alkenyl mit 2 bis 7 C-Atomen, bedeuten,

X$^{62}$ F, Cl, -CN oder -NCS, vorzugsweise -NCS, bedeutet,

und einer von

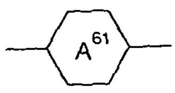 bis 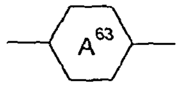

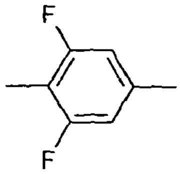, 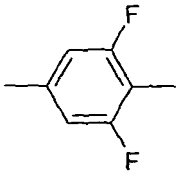,

oder 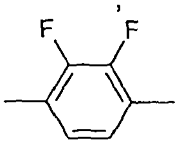 bedeutet

oder bedeutet und die anderen unabhängig voneinander

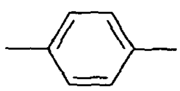, 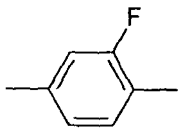, 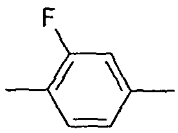,

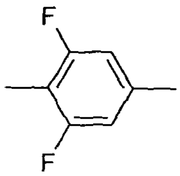, 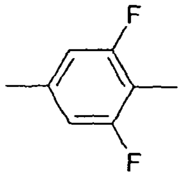, 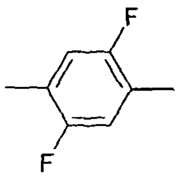,

oder 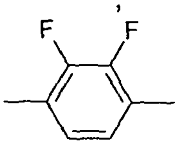, vorzugsweise

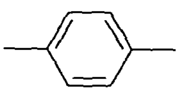, 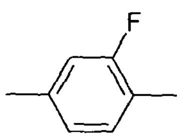, 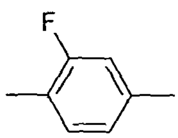,

oder 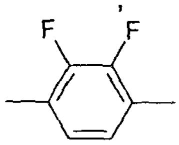, bedeuten und bevorzugt

| | |
|---|---|
| $R^{61}$ | $C_nH_{2n+1}$ oder $CH_2{=}CH{-}(CH_2)_z$ bedeutet, und |
| $R^{62}$ | $C_mH_{2m+1}$ oder $O{-}C_mH_{2m+1}$ oder $(CH_2)_z{-}CH{=}CH_2$ bedeutet, und worin |
| n und m | unabhängig voneinander eine ganze Zahl im Bereich von 0 bis 15, bevorzugt im Bereich von 1 bis 7 und besonders bevorzugt 1 bis 5 bedeuten und |
| z | 0, 1, 2, 3 oder 4, bevorzugt 0 oder 2 bedeutet. |

Bevorzugt werden die Verbindungen der Formeln VI-1 ausgewählt aus der Gruppe der Verbindungen der Formeln VI-1 a und VI-1b, bevorzugt ausgewählt Verbindungen der Formeln VI-1a, stärker bevorzugt bestehen diese Verbindungen der Formel VI überwiegend, noch stärker bevorzugt bestehen sie im Wesentlichen und ganz besonders

bevorzugt bestehen sie vollständig daraus:

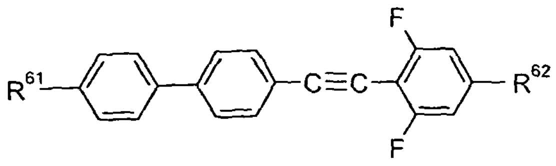

VI-1a

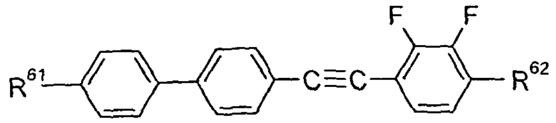

VI-1b

worin

$R^{61}$ die oben angegebene Bedeutung hat und bevorzugt $C_nH_{2n+1}$ oder $CH_2$=CH-$(CH_2)_Z$ bedeutet, und

$R^{62}$ die oben angegebene Bedeutung hat und bevorzugt $C_mH_{2n+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{61}$ und $R^{62}$) sind hier insbesondere ($C_nH_{2n+1}$ und $C_mH_{2m+1)}$ und ($C_nH_{2n+1}$ und O-$C_mH_{2m+1}$), bei Formel VI-1a besonders bevorzugt ($C_nH_{2n+1}$ und $C_mH_{2m+1}$) und bei Formel VI-1b besonders bevorzugt ($C_nH_{2n+1}$ und O-$C_mH_{2m+1}$).

Bevorzugt sind die Verbindungen der Formel VI-3 Verbindungen der Formel VI-3a:

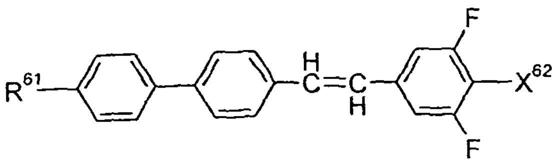

VI-3a

worin die Parameter die oben unter Formel VI-3 gegebene Bedeutung haben und bevorzugt

$R^{61}$ die oben angegebene Bedeutung hat und bevorzugt $C_nH_{2n+1}$ bedeutet, worin

n eine ganze Zahl im Bereich von 0 bis 7, bevorzugt im Bereich von 1 bis 5, und

$X^{62}$ -F, _Cl, $OCF_3$, -CN oder -NCS, besonders bevorzugt-NCS, bedeutet.

Bevorzugt sind die Verbindungen der Formeln VI-4 Verbindungen der Formel VI-4a:

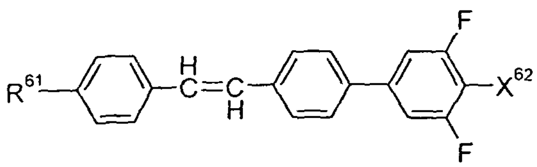

VI-4a

worin die Parameter die oben unter Formel VI-4 gegebene Bedeutung haben und bevorzugt

$R^{61}$ die oben angegebene Bedeutung hat und bevorzugt $C_nH_{2n+1}$ bedeutet, worin

n eine ganze Zahl im Bereich von 0 bis 7, bevorzugt im Bereich von 1 bis 5, und

$X^{62}$ F, Cl, $OCF_3$, -CN oder -NCS, besonders bevorzugt -NCS, bedeutet.

Weitere bevorzugte Verbindungen der Formel VI sind die Verbindungen der folgenden Formeln

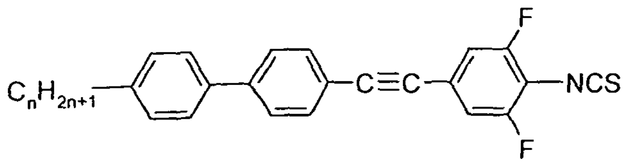

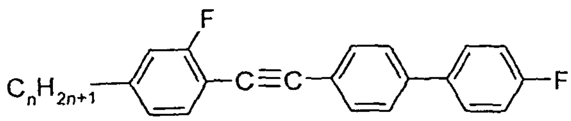

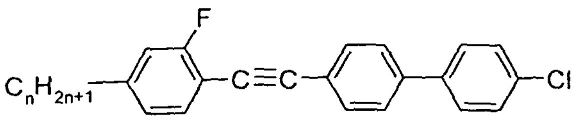

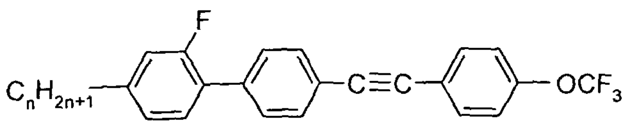

worin

n eine ganze Zahl im Bereich von 0 bis 7, bevorzugt im Bereich von 1 bis 5 bedeutet.

Bevorzugt werden die Verbindungen der Formeln VII ausgewählt aus der Gruppe der Verbindungen der Formeln VII-1 bis VII-6, stärker bevorzugt bestehen diese Verbindungen der Formel VII überwiegend, noch stärker bevorzugt bestehen sie im Wesentlichen und ganz besonders bevorzugt bestehen sie vollständig daraus:

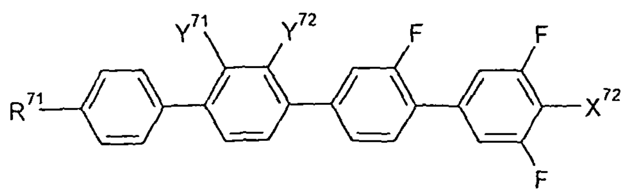

VII-1

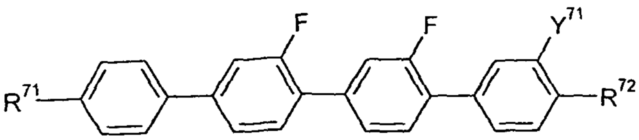

VII-2

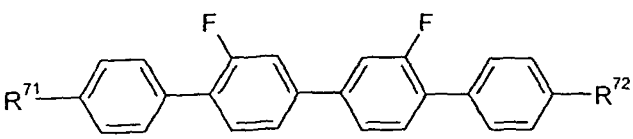

VII-3

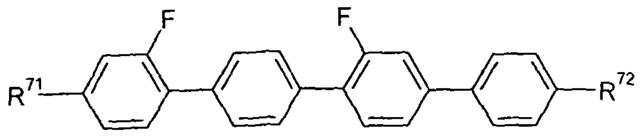

VII-4

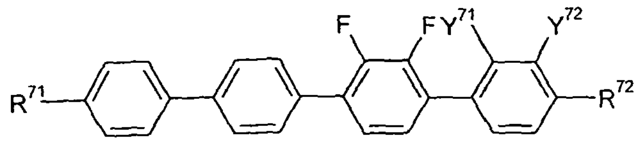

VII-5

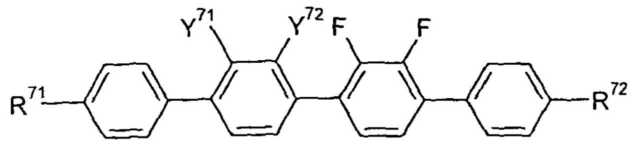

VII-6

wobei die Verbindungen der Formel VII-5 von den Verbindungen der Formel VII-6 ausgeschlossen sind, und worin die Parameter die jeweiligen oben bei Formel VII angegebenen Bedeutungen haben und bevorzugt

$R^{71}$ unfluoriertes Alkyl oder Alkoxy jeweils mit 1 bis 7 C-Atomen oder unfluoriertes Alkenyl mit 2 bis 7 C-Atomen,
$R^{72}$ unfluoriertes Alkyl oder Alkoxy, jeweils mit 1 bis 7 C-Atomen oder unfluoriertes Alkenyl mit 2 bis 7 C-Atomen, und
$X^{72}$ F, Cl, oder $-OCF_3$, bevorzugt F, bedeutet, und

besonders bevorzugt

$R^{71}$ die oben angegebene Bedeutung hat und bevorzugt $C_nH_{2n+1}$ oder $CH_2=CH-(CH_2)_Z$ bedeutet, und

$R^{72}$ die oben angegebene Bedeutung hat und bevorzugt $C_mH_{2m+1}$ oder $O-C_nH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Bevorzugt werden die Verbindungen der Formeln VII-1 ausgewählt aus der Gruppe der Verbindungen der Formeln VII-1a bis VII-1d, stärker bevorzugt bestehen diese Verbindungen der Formel VII-1 überwiegend, noch stärker bevorzugt bestehen sie im Wesentlichen und ganz besonders bevorzugt bestehen sie vollständig daraus:

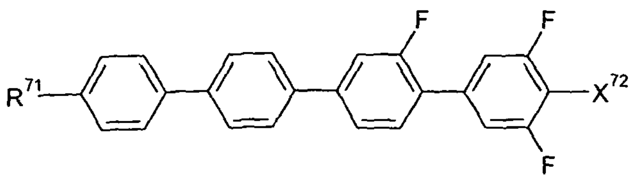

VII-1a

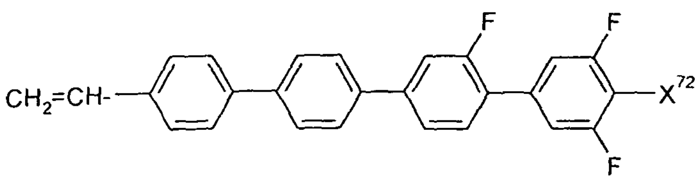

VII-1b

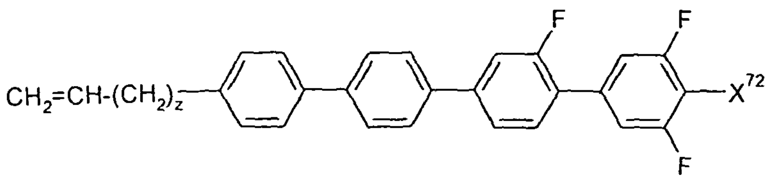

VII-1c

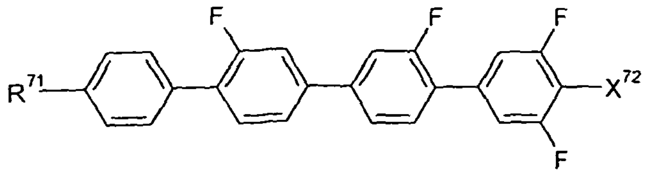

VII-1d

worin $X^{72}$ die oben bei Formel VII-2 gegebene Bedeutung hat und

$R^{71}$ die oben angegebene Bedeutung hat und bevorzugt $C_nH_{2n+1}$ bedeutet, worin

n 1 bis 7, bevorzugt 2 bis 6, besonders bevorzugt 2, 3 oder 5 und

z 0, 1, 2, 3 oder 4, bevorzugt 0 oder 2, und

$X^{72}$ bevorzugt F

bedeutet.

Bevorzugt werden die Verbindungen der Formeln VII-2 ausgewählt aus der Gruppe der Verbindungen der Formeln VII-2a und VII-2b, bevorzugt der Formel VII-2a, stärker bevorzugt bestehen diese Verbindungen der Formel VII-2 überwiegend, noch stärker bevorzugt bestehen sie im Wesentlichen und ganz besonders bevorzugt bestehen sie vollständig daraus:

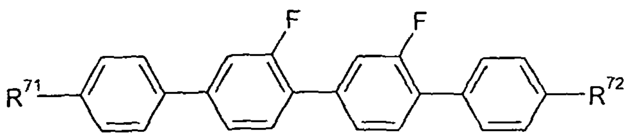

VII-2a

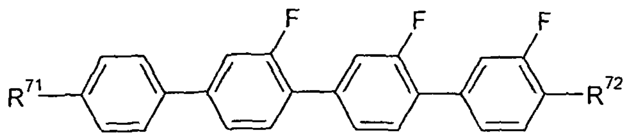

VII-2b

worin

$R^{71}$ die oben angegebene Bedeutung hat und bevorzugt $C_nH_{2n+1}$ oder $CH_2$=CH-$(CH_2)_Z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt sind die Verbindungen der Formel VII-3 Verbindungen der Formel VII-3a:

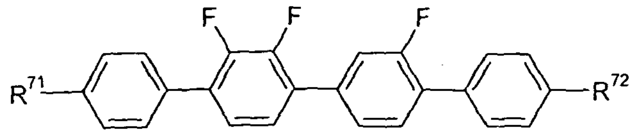

VII-3a

worin

$R^{71}$ die oben angegebene Bedeutung hat und bevorzugt $C_nH_{2n+1}$ oder $CH_2$=CH-$(CH_2)_Z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt sind die Verbindungen der Formel VII-4 Verbindungen der Formel VII-4a:

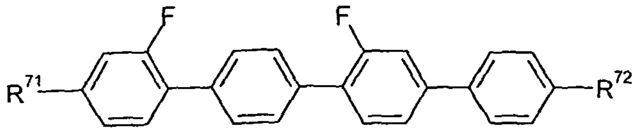

VII-4a

worin

$R^{71}$ die oben angegebene Bedeutung hat und bevorzugt $C_nH_{2n+1}$ oder $CH_2$=CH-$(CH_2)_Z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_{nH2n+1}$ und $C_mH_{2m+1}$).

Bevorzugt werden die Verbindungen der Formeln VII-5 ausgewählt aus der Gruppe der Verbindungen der Formeln VII-5a und VII-5b, bevorzugt der Formel VII-5a stärker bevorzugt bestehen diese Verbindungen der Formel VII-5 überwiegend, noch stärker bevorzugt bestehen sie im Wesentlichen und ganz besonders bevorzugt bestehen sie vollständig daraus:

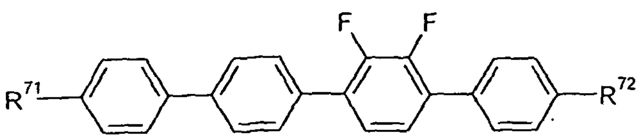

VII-5a

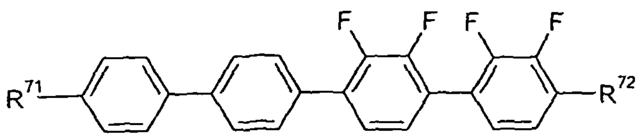

VII-5b

worin

$R^{71}$ die oben angegebene Bedeutung hat und bevorzugt $C_nH_{2n+1}$ oder $CH_2$=CH-$(CH_2)_z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt werden die Verbindungen der Formeln VII-6 ausgewählt aus der Gruppe der Verbindungen der Formeln VII-6a und VII-6b, stärker bevorzugt bestehen diese Verbindungen der Formel VII-6 überwiegend, noch stärker bevorzugt bestehen sie im Wesentlichen und ganz besonders bevorzugt bestehen sie vollständig daraus:

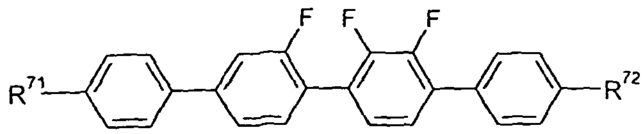

VII-6a

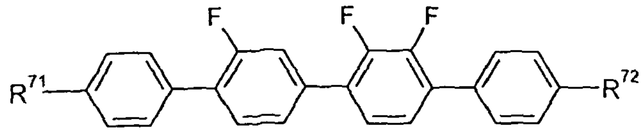

VII-6b

worin

$R^{71}$ die oben angegebene Bedeutung hat und bevorzugt $C_nH_{2n+1}$ oder $CH_2$=CH-$(CH_2)_z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_2m_{+1}$) und ($C_nH_{2n+1}$ und O-$C_mH_{2m+1}$), besonders bevorzugt ($C_nH_{2n+1}$ und $C_mH_{2m+1}$).

Bevorzugt enthalten die flüssigkristallinen Medien gemäß der vorliegenden Anmeldung insgesamt 0 bis 40 %, bevorzugt 0 bis 30 % und besonders bevorzugt 5 bis 25 % an Verbindungen der Formel VIII.

Bevorzugt werden die Verbindungen der Formeln VIII ausgewählt aus der Gruppe der Verbindungen der Formeln VIII-1 bis VIII-3, stärker bevorzugt bestehen diese Verbindungen der Formel VIII überwiegend, noch stärker bevorzugt bestehen sie im Wesentlichen und ganz besonders bevorzugt bestehen sie vollständig daraus:

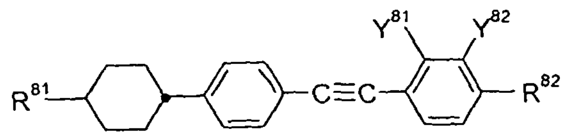

VIII-1

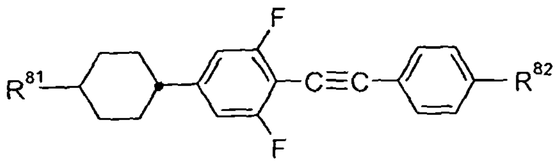

VIII-2

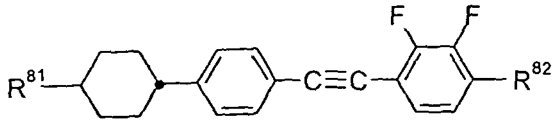

VIII-3

worin
einer von

| | |
|---|---|
| $Y^{81}$ und $Y^{82}$ | H bedeutet und der andere H oder F bedeutet, und |
| $R^{81}$ | die oben angegebene Bedeutung hat und bevorzugt $C_nH_{2n+1}$ oder $CH_2=CH-(CH_2)_z$ bedeutet, und |
| $R^{82}$ | die oben angegebene Bedeutung hat und bevorzugt $C_mH_{2m+1}$ oder $O-C_mH_{2m+1}$ oder $(CH_2)_z-CH=CH_2$ bedeutet, und worin |
| n und m | unabhängig voneinander eine ganze Zahl im Bereich von 0 bis 15, bevorzugt im Bereich von 1 bis 7 und besonders bevorzugt 1 bis 5 bedeuten und |
| z | 0, 1, 2, 3 oder 4, bevorzugt 0 oder 2 bedeutet. |

Die bevorzugten Kombinationen von ($R^{81}$ und $R^{82}$) sind hier insbesondere ($C_nH_{2n+1}$ und $C_mH_{2m+1}$) und ($C_nH_{2n+1}$ und $O-C_mH_{2m+1}$) besonders bevorzugt ($C_nH_{2n+1}$ und $C_mH_{2m+1}$).

Bevorzugt werden die Verbindungen der Formeln VIII-1 ausgewählt aus der Gruppe der Verbindungen der Formeln VIII-1a bis VIII-1c, stärker bevorzugt bestehen diese Verbindungen der Formel VIII-1 überwiegend, noch stärker bevorzugt bestehen sie im Wesentlichen und ganz besonders bevorzugt bestehen sie vollständig daraus:

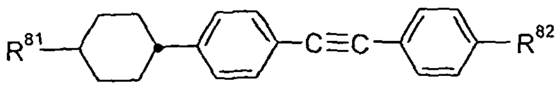

VIII-1a

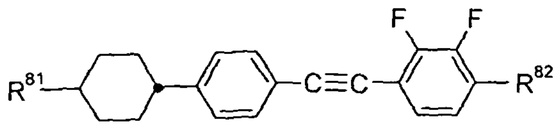

VIII-1b

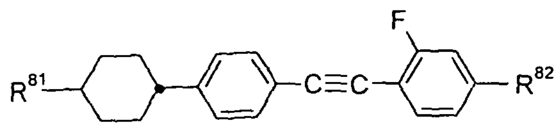

VIII-1c

worin

| | |
|---|---|
| $R^{81}$ | die oben angegebene Bedeutung hat und bevorzugt $C_nH_{2n+1}$ oder $CH_2=CH-(CH_2)_Z$ bedeutet, und |
| $R^{82}$ | die oben angegebene Bedeutung hat und bevorzugt $C_mH_{2m+1}$ oder $O-C_mH_{2m+1}$ oder $(CH_2)_Z-CH=CH_2$ bedeutet, und worin |
| n und m | unabhängig voneinander eine ganze Zahl im Bereich von 0 bis 15, bevorzugt im Bereich von 1 bis 7 und besonders bevorzugt 1 bis 5 bedeuten und |
| z | 0, 1, 2, 3 oder 4, bevorzugt 0 oder 2 bedeutet. |

Die bevorzugten Kombinationen von ($R^{81}$ und $R^{82}$) sind hier insbesondere ($C_nH_{2n+1}$ und $C_mH_{2m+1}$) und ($C_nH_{2n+1}$ und O-$C_mH_{2m+1}$) besonders bevorzugt ($C_nH_{2n+1}$ und $C_mH_{2m+1}$).

Bevorzugt sind die Verbindungen der Formel VIII-2 Verbindungen der Formel VIII-2a:

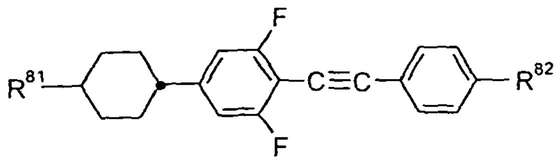

VIII-2a

worin

| | |
|---|---|
| $R^{81}$ | die oben angegebene Bedeutung hat und bevorzugt $C_nH_{2n+1}$ oder $CH_2$=CH-$(CH_2)_Z$ bedeutet, und |
| $R^{82}$ | die oben angegebene Bedeutung hat und bevorzugt $C_mH_{2m+1}$ oder O-$C_mH_{2m+1}$ oder $(CH_2)_Z$-CH=$CH_2$ bedeutet, und worin |
| n und m | unabhängig voneinander eine ganze Zahl im Bereich von 0 bis 15, bevorzugt im Bereich von 1 bis 7 und besonders bevorzugt 1 bis 5 bedeuten und |
| z | 0, 1, 2, 3 oder 4, bevorzugt 0 oder 2 bedeutet. |

Die bevorzugten Kombinationen von ($R^{81}$ und $R^{82}$) sind hier insbesondere ($C_nH_{2n+1}$ und $C_mH_{2m+1}$), $C_nH_{2n+1}$ und O-$C_mH_{2m+1}$) und ($CH_2$=CH-$(CH_2)_Z$ und $C_mH_{2m+1}$) besonders bevorzugt ($C_nH_{2n+1}$ und $C_mH_{2m+1}$).

Bevorzugt sind die Verbindungen der Formel VIII-3 Verbindungen der Formel VIII-3a:

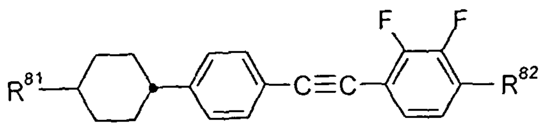

VIII-3a

worin

| | |
|---|---|
| $R^{81}$ | die oben angegebene Bedeutung hat und bevorzugt $C_nH_{2n+1}$ oder $CH_2$=CH-$(CH_2)_Z$ bedeutet, und |
| $R^{82}$ | die oben angegebene Bedeutung hat und bevorzugt $C_mH_{2m+1}$ oder O-$C_mH_{2m+1}$ oder $(CH_2)_Z$-CH=$CH_2$ bedeutet, und worin |
| n und m | unabhängig voneinander eine ganze Zahl im Bereich von 0 bis 15, bevorzugt im Bereich von 1 bis 7 und besonders bevorzugt 1 bis 5 bedeuten und |
| z | 0, 1, 2, 3 oder 4, bevorzugt 0 oder 2 bedeutet. |

Die bevorzugten Kombinationen von ($R^{81}$ und $R^{82}$) sind hier insbesondere ($C_nH_{2n+1}$ und $C_mH_{2m+1}$) und ($C_nH_{2n+1}$ und O-$C_mH_{2m+1}$).

Bevorzugt werden die Verbindungen der Formeln IX ausgewählt aus der Gruppe der Verbindungen der Formeln IX-1 bis IX-3, stärker bevorzugt bestehen diese Verbindungen der Formel IX überwiegend, noch stärker bevorzugt bestehen sie im Wesentlichen und ganz besonders bevorzugt bestehen sie vollständig daraus:

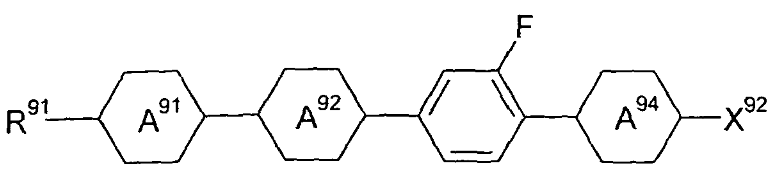

IX-1

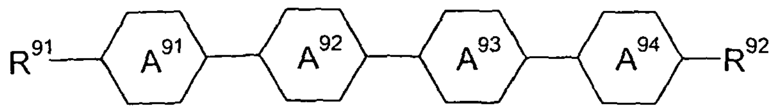

IX-2

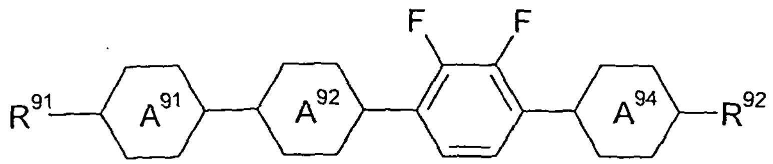

IX-3

worin die Parameter die jeweilige oben unter Formel IX angegebene Bedeutung haben und bevorzugt einer von

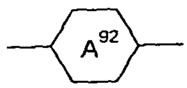 bis 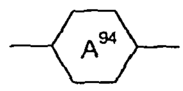

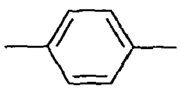, 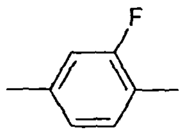, 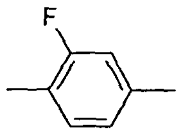,

bedeutet
und
worin

- $R^{91}$ die oben angegebene Bedeutung hat und bevorzugt $C_nH_{2n+1}$ oder $CH_2$=CH-$(CH_2)_Z$ bedeutet, und
- $R^{92}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin
- n und m unabhängig voneinander eine ganze Zahl im Bereich von 0 bis 15, bevorzugt im Bereich von 1 bis 7 und besonders bevorzugt 1 bis 5 bedeuten und
- z 0, 1, 2, 3 oder 4, bevorzugt 0 oder 2 bedeutet.

Die bevorzugten Kombinationen von ($R^{91}$ und $R^{92}$) sind hier insbesondere ($C_nH_{2n+1}$ und $C_mH_{2m+1}$) und ($C_nH_{2n+1}$ und O-$C_mH_{2m+1}$).

Bevorzugt enthalten die flüssigkristallinen Medien gemäß der vorliegenden Anmeldung insgesamt 5 bis 30 %, bevorzugt 10 bis 25 % und besonders bevorzugt 15 bis 20 % an Verbindungen der Formel IX.

Bevorzugt werden die Verbindungen der Formeln IX-1 ausgewählt aus der Gruppe der Verbindungen der Formeln IX-1a bis IX-1e, stärker bevorzugt bestehen diese Verbindungen der Formel IX-1 überwiegend, noch stärker bevorzugt bestehen sie im Wesentlichen und ganz besonders bevorzugt bestehen sie vollständig daraus:

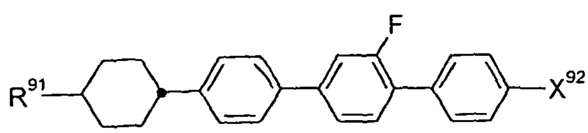

IX-1a

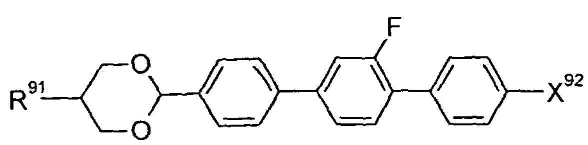

IX-1b

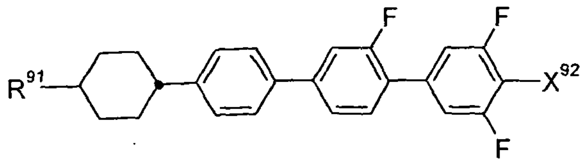

IX-1c

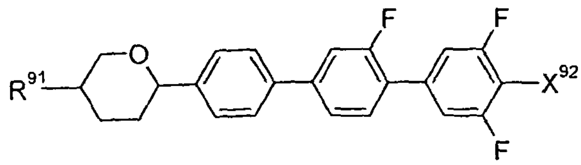

IX-1d

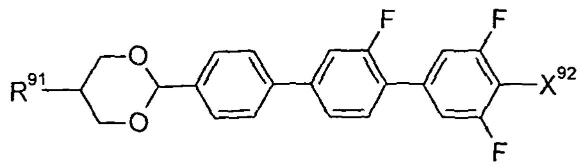

IX-1e

worin die Parameter die oben gegebene Bedeutung haben und bevorzugt

$R^{91}$ die oben angegebene Bedeutung hat und bevorzugt $C_nH_{2n+1}$ bedeutet, und

n eine ganze Zahl im Bereich von 0 bis 15, bevorzugt im Bereich von 1 bis 7 und besonders bevorzugt 1 bis 5 bedeutet und

$X^{92}$ bevorzugt F oder Cl bedeutet.

Bevorzugt werden die Verbindungen der Formeln IX-2 ausgewählt aus der Gruppe der Verbindungen der Formeln IX-2a und IX-2b, stärker bevorzugt bestehen diese Verbindungen der Formel IX-2 überwiegend, noch stärker bevorzugt bestehen sie im Wesentlichen und ganz besonders bevorzugt bestehen sie vollständig daraus:

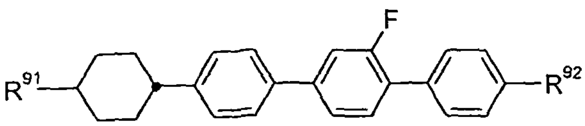

IX-2a

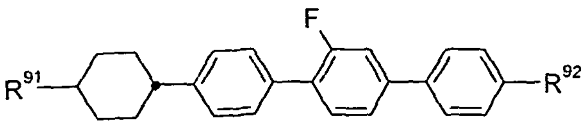

IX-2b

worin

$R^{91}$ die oben angegebene Bedeutung hat und bevorzugt $C_nH_{2n+1}$ oder $CH_2$=CH-$(CH_2)_Z$ bedeutet, und

$R^{92}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{91}$ und $R^{92}$) ist hier insbesondere ($C_nH_{2n+1}$ und $C_mH_{2m+1}$).

Bevorzugt sind die Verbindungen der Formel IX-3 Verbindungen der Formel IX-3a und IX-3b:

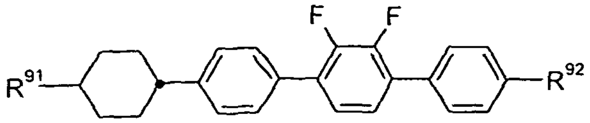

IX-3a

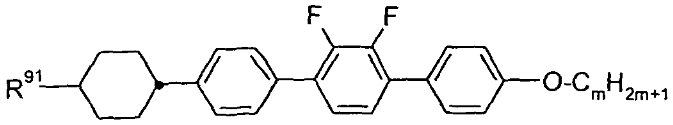

IX-3b

worin

$R^{91}$ die oben angegebene Bedeutung hat und bevorzugt $C_nH_{2n+1}$ oder $CH_2$=CH-$(CH_2)_Z$ bedeutet, und

$R^{92}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{91}$ und $R^{92}$) sind hier insbesondere ($C_nH_{2n+1}$ und $C_mH_{2m+1}$) und ($C_nH_{2n+1}$ und O-$C_mH_{2m+1}$), besonders bevorzugt ($C_nH_{2n+1}$ und O-$C_mH_{2m+1}$).

In einer bevorzugten Ausführungsform der vorliegenden Erfindung enthält das Medium eine oder mehrere dielektrisch positive Verbindungen mit einer dielektrischen Anisotropie von mehr als 3 der Formel V-1.

Bevorzugt enthalten die flüssigkristallinen Medien gemäß der vorliegenden Erfindung 10 % oder weniger, bevorzugt 5 % oder weniger, besonders bevorzugt 2 % oder weniger, ganz besonders bevorzugt 1 % oder weniger, und insbesondere überhaupt keine Verbindung mit nur zwei oder weniger fünf und/oder sechsgliedrigen Ringen.

In einer bevorzugten Ausführungsform der vorliegenden Erfindung enthält das Medium eine oder mehrere Verbindungen der Formel VI.

In einer weiteren bevorzugten Ausführungsform der vorliegenden Erfindung enthält das Medium eine oder mehrere Verbindungen der Formel VII.

Die Definitionen der in der vorliegenden Anmeldung für die Verbindungen benutzten Abkürzungen (Akronyme) sind unten in Tabelle D angegeben, bzw. aus den Tabellen A bis C zu ersehen.

In einer bevorzugten Ausführungsform der vorliegenden Erfindung enthält das Flüssigkristallmedium, bzw. die Komponente A des Flüssigkristallmediums, eine oder mehrere Verbindungen der Formeln I-1 und/oder I-2 und/oder I-3 und/oder I-4.

Bevorzugt enthält das Flüssigkristallmedium, bzw. die Komponente A des Flüssigkristallmediums, eine oder mehrere Verbindungen ausgewählt aus den Verbindungen der Formeln I-1a-1 bis I-1a-12, besonders bevorzugt der Formel I-1a-2, ganz besonders bevorzugt eine oder mehrere Verbindungen der Formel I-1a-2 und eine oder mehrere Verbindungen ausgewählt aus der Gruppe der Verbindungen der Formel I-1a-1 und Formel I-1a-3 bis I-1a-12, und eine oder mehrere Verbindungen der Formeln I-1b-1 bis I-1b-12 und/oder I-2 und/oder I-3 und/oder I-4.

In einer weiteren bevorzugten Ausführungsform der vorliegenden Erfindung enthält das Flüssigkristallmedium, bzw. die Komponente A des Flüssigkristallmediums, eine oder mehrere Verbindungen ausgewählt aus der Gruppe der Verbindungen der Formeln I-1b-1 bis I-1b-12, besonders bevorzugt ausgewählt aus der Gruppe der Verbindungen der Formeln I-1b-5 und/oder I-1b-7 und/oder I-1b-8 und/oder I-1b-9 und/oder I-1b-10, und eine oder mehrere Verbindungen ausgewählt aus der Gruppe der Verbindungen der Formeln I-1a-1 bis I-1a-12, bevorzugt der Formel I-1a-2 und/oder eine oder mehrere Verbindungen der Formeln I-2 und/oder I-3 und/oder I-4.

In einer weiteren bevorzugten Ausführungsform der vorliegenden Erfindung enthält das Flüssigkristallmedium, bzw. die Komponente A des Flüssigkristallmediums, eine oder mehrere Verbindungen der Formel I-2, und eine oder mehrere Verbindungen der Formeln I-1, bevorzugt der Formeln I-1a, bevorzugt der Formel I-1a-2, und/oder I-1b, und/oder eine oder mehrere Verbindungen der Formeln I-3 und/oder I-4.

In einer weiteren bevorzugten Ausführungsform der vorliegenden Erfindung enthält das Flüssigkristallmedium, bzw. die Komponente A des Flüssigkristallmediums, eine oder mehrere Verbindungen der Formel I-3, und eine oder mehrere Verbindungen der Formeln I-1, bevorzugt der Formeln I-1a, bevorzugt der Formel I-1a-2, und/oder I-1b, und/oder eine oder mehrere Verbindungen der Formeln I-2 und/oder I-4.

In einer weiteren bevorzugten Ausführungsform der vorliegenden Erfindung enthält das Flüssigkristallmedium, bzw. die Komponente A des Flüssigkristallmediums, eine oder mehrere Verbindungen der Formel I-4, und eine oder mehrere Verbindungen der Formeln I-1, bevorzugt der Formeln I-1a, bevorzugt der Formel I-1a-2, und/oder I-1b, und/oder eine oder mehrere Verbindungen der Formeln I-2 und/oder I-3.

Vorzugsweise enthalten die flüssigkristallinen Medien gemäß der vorliegenden Erfindung Verbindungen ausgewählt aus der Gruppe der Verbindungen der Formeln I, II, IV und V, vorzugsweise I, II und IV oder ausgewählt aus der Gruppe der Verbindungen der Formeln I, III, IV und V, vorzugsweise I, III und IV, stärker bevorzugt bestehen sie überwiegend, noch stärker bevorzugt bestehen sie im Wesentlichen und ganz bevorzugt bestehen sie vollständig daraus.

In dieser Anmeldung bedeutet enthalten im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

Überwiegend bestehen bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

Im Wesentlichen bestehen bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

Vollständig bestehen bedeutet in diesem Zusammenhang, dass die betreffende Entität 98 % oder mehr, vorzugsweise 99 % oder mehr und ganz bevorzugt 100,0 % der angegebenen Komponente oder Komponenten oder Verbindung oder Verbindungen enthält.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Die Flüssigkristallmedien gemäß der vorliegenden Erfindung weisen bevorzugt einen Klärpunkt von 90°C oder mehr, stärker bevorzugt von 100°C oder mehr, noch stärker bevorzugt von 120°C oder mehr, besonders bevorzugt von 150°C oder mehr und ganz besonders bevorzugt von 170°C oder mehr auf.

Vorzugsweise erstreckt sich die nematische Phase der erfindungsgemäßen Medien mindestens von 20°C oder weniger bis 90°C oder mehr, bevorzugt bis 100°C oder mehr, stärker bevorzugt mindestens von 0°C oder weniger bis 120°C oder mehr, ganz bevorzugt mindestens von -10°C oder weniger bis 140°C oder mehr und insbesondere mindestens von -20°C oder weniger bis 150°C oder mehr.

Das $\Delta\varepsilon$ des Flüssigkristallmediums gemäß der Erfindung bei 1 kHz und 20°C beträgt vorzugsweise 1 oder mehr, stärker bevorzugt 2 oder mehr und ganz bevorzugt 3 oder mehr.

Das $\Delta n$ der Flüssigkristallmedien gemäß der vorliegenden Erfindung liegt bei 589 nm ($Na^D$) und 20°C vorzugsweise im Bereich von 0,200 oder mehr bis 0,90 oder weniger, stärker bevorzugt im Bereich von 0,250 oder mehr bis 0,90 oder weniger, noch stärker bevorzugt im Bereich von 0,300 oder mehr bis 0, 85 oder weniger und ganz besonders bevorzugt im Bereich von 0,350 oder mehr bis 0,800 oder weniger.

In einer bevorzugten Ausführungsform der vorliegenden Anmeldung beträgt das $\Delta n$ der Flüssigkristallmedien gemäß der vorliegenden Erfindung vorzugsweise 0,40 oder mehr, stärker bevorzugt 0,45 oder mehr.

Gemäß der vorliegenden Erfindung werden die einzelnen Verbindungen der Formel I in den Flüssigkristallmedien vorzugsweise in einer Gesamtkonzentration von 10 % bis 100 %, stärker bevorzugt von 30 % bis 95 %, noch stärker bevorzugt von 40 % bis 90 % und ganz bevorzugt von 50 % bis 90 % der Gesamtmischung verwendet.

In der Ausführungsform der vorliegenden Erfindung in der die Flüssigkristallmedien eine oder mehrere Verbindungen ausgewählt aus der Gruppe der Verbindungen der Formeln IIA und IIB enthalten, werden die weiteren Verbindungen vorzugsweise wie folgt eingesetzt.

Die Verbindungen ausgewählt aus der Gruppe der Verbindungen der Formeln IIA und IIB werden vorzugsweise in einer Gesamtkonzentration von 1 % bis 30 %, stärker bevorzugt von 2 % bis 20 %, stärker bevorzugt von 3 % bis 18 % und ganz bevorzugt von 4 % bis 16 % der Gesamtmischung verwendet.

Die Verbindungen der Formel IV werden vorzugsweise in einer Gesamtkonzentration von 1 % bis 20 %, stärker bevorzugt von 2 % bis 15 %, noch stärker bevorzugt von 3 % bis 12 % und ganz bevorzugt von 5 % bis 10 % der Gesamtmischung verwendet.

Die Flüssigkristallmedien enthalten vorzugsweise insgesamt 70 % bis 100 %, stärker bevorzugt 80 % bis 100 % und ganz bevorzugt 90 % bis 100 % und insbesondere 95 % bis 100 % der Verbindungen der Formeln I, IIA, IIB und IV bis IX, vorzugsweise der Formeln I, IIA, IIB und IV, vorzugsweise bestehen sie überwiegend daraus und ganz bevorzugt bestehen sie vollständig daraus.

In der Ausführungsform der vorliegenden Erfindung in der die Flüssigkristallmedien eine oder mehrere Verbindungen ausgewählt aus der Gruppe der Verbindungen der Formel IIIA und IIIB enthalten, werden die weiteren Verbindungen vorzugsweise wie folgt eingesetzt.

Die Verbindungen ausgewählt aus der Gruppe der Verbindungen der Formel III A und IIIB werden vorzugsweise in einer Gesamtkonzentration von 1 % bis 60 %, stärker bevorzugt von 5 % bis 55 %, stärker bevorzugt von 7 % bis 50 % und ganz bevorzugt von 10 % bis 45 % der Gesamtmischung verwendet.

Wenn die Flüssigkristallmedien nur eine oder mehrere Verbindungen der Formel IIIA aber keine Verbindungen der Formel IIIB enthält, werden die Verbindungen der Formel IIIA vorzugsweise in einer Gesamtkonzentration von 10 % bis 60 %, stärker bevorzugt von 20 % bis 55 %, stärker bevorzugt von 30 % bis 50 % und ganz bevorzugt von 35 % bis 45 % der Gesamtmischung verwendet.

Wenn die Flüssigkristallmedien nur eine oder mehrere Verbindungen der Formel IIIB aber keine Verbindungen der Formel IIIA enthält, werden die Verbindungen der Formel IIIB vorzugsweise in einer Gesamtkonzentration von 5 % bis 45 %, stärker bevorzugt von 10 % bis 40 %, stärker bevorzugt von 15 % bis 35 % und ganz bevorzugt von 20 % bis 30 % der Gesamtmischung verwendet.

Wenn die Flüssigkristallmedien sowohl eine oder mehrere Verbindungen der Formel IIIA, als auch eine oder mehrere Verbindungen der Formel IIIB enthält, werden die Verbindungen der Formel IIIA vorzugsweise in einer Gesamtkonzentration von 5 % bis 50 %, stärker bevorzugt von 10 % bis 45 %, stärker bevorzugt von 15 % bis 30 % und ganz bevorzugt von 20 % bis 25 % der Gesamtmischung und die Verbindungen der Formel IIIB in einer Gesamtkonzentration von 1 % bis 35 %, stärker bevorzugt von 5 % bis 30 %, stärker bevorzugt von 7 % bis 25 % und ganz bevorzugt von 10 % bis 20 % der Gesamtmischung verwendet.

Die Verbindungen der Formel IV werden vorzugsweise in einer Gesamtkonzentration von 1 % bis 20 %, stärker bevorzugt von 2 % bis 15 %, noch stärker bevorzugt von 3 % bis 12 % und ganz bevorzugt von 5 % bis 10 % der Gesamtmischung verwendet.

Die Flüssigkristallmedien enthalten vorzugsweise insgesamt 70 % bis 100 %, stärker bevorzugt 80 % bis 100 % und ganz bevorzugt 90 % bis 100 % und insbesondere 95 % bis 100 % der Verbindungen der Formeln I, IIIA, IIIB, und IV bis IX, vorzugsweise der Formeln I, IIIA und/oder IIIB, vorzugsweise bestehen sie überwiegend daraus und ganz bevorzugt bestehen sie vollständig daraus.

In einer besonders bevorzugten Ausführungsform der vorliegenden Erfindung enthalten die flüssigkristallinen Medien eine oder mehrere Verbindungen der Formel V und eine oder mehrere Verbindungen der Formel VI.

In einer weiteren besonders bevorzugten Ausführungsform der vorliegenden Erfindung enthalten die flüssigkristallinen Medien eine oder mehrere Verbindungen der Formel V und eine oder mehrere Verbindungen der Formel VII.

Ebenfalls bevorzugt enthalten die flüssigkristallinen Medien gemäß der vorliegenden Erfindung eine oder mehrere Verbindungen der Formel V, eine oder mehrere Verbindungen der Formel VI und eine oder mehrere Verbindungen der Formel VIII.

Wenn die flüssigkristallinen Medien gemäß der vorliegenden Anmeldung eine oder mehrere Verbindungen der Formel V enthalten, beträgt die Konzentration dieser Verbindungen bevorzugt insgesamt 10 bis 30 %, bevorzugt 15 bis 25 % und besonders bevorzugt 18 bis 22 %.

Wenn die flüssigkristallinen Medien gemäß der vorliegenden Anmeldung eine oder mehrere Verbindungen der Formel VI enthalten, beträgt die Konzentration dieser Verbindungen bevorzugt insgesamt 15 bis 35 %, bevorzugt 18 bis 30 % und besonders bevorzugt 22 bis 26 %. Wenn die flüssigkristallinen Medien gemäß der vorliegenden Anmeldung eine oder mehrere Verbindungen der Formel VII enthalten, beträgt die Konzentration dieser Verbindungen bevorzugt insgesamt 4 bis 25 %, bevorzugt 8 bis 20 % und besonders bevorzugt 10 bis 14 %.

Wenn die flüssigkristallinen Medien gemäß der vorliegenden Anmeldung eine oder mehrere Verbindungen der Formel VIII enthalten, beträgt die Konzentration dieser Verbindungen bevorzugt insgesamt 15 bis 35 %, bevorzugt 18 bis 30 % und besonders bevorzugt 22 bis 26 %.

Wenn die flüssigkristallinen Medien gemäß der vorliegenden Anmeldung eine oder mehrere Verbindungen der Formel IX enthalten, beträgt die Konzentration dieser Verbindungen bevorzugt insgesamt 5 bis 25 %, bevorzugt 10 bis 20 % und besonders bevorzugt 13 bis 17 %.

In der vorliegenden Anmeldung beschreibt der Ausdruck dielektrisch positiv Verbindungen oder Komponenten mit $\Delta\varepsilon > 3{,}0$, dielektrisch neutral mit $-1{,}5 \leq \Delta\varepsilon \leq 3{,}0$ und dielektrisch negativ mit $\Delta\varepsilon < -1{,}5$. $\Delta\varepsilon$ wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 μm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Hierbei gelten die folgenden Definitionen.

$$\Delta\varepsilon \equiv (\varepsilon_{||} - \varepsilon_{\perp})$$

und

$$\varepsilon_{Mittel} \equiv (\varepsilon_{||} + 2\ \varepsilon_{\perp}) / 3\ .$$

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20°C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast ($V_{10}$) angegeben, der Ausdruck Sättigungsspannung bezeichnet die optische Sättigung und ist für 90 % relativen Kontrast ($V_{90}$) angegeben, in beiden Fällen, soweit nicht ausdrücklich etwas anderes angegeben ist. Die kapazitive Schwellenspannung ($V_0$), auch Freedericks-Schwelle $V_{Fr}$ genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20°C aufgeführt, wenn nicht ausdrücklich anders angegeben. Die optische Anisotropie ($\Delta n$) wird bei einer Wellenlänge von 589,3 nm bestimmt. Die dielektrische Anisotropie ($\Delta\varepsilon$) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von $\Delta\varepsilon$ besitzen eine Schichtdicke von circa 20 $\mu$m. Bei der Elektrode handelt es sich um eine kreisförmige ITO-Elektrode mit einer Fläche von 1,13 $cm^2$ und einem Schutzring. Die Ausrichtungsschichten sind SE-1211 von Nissan Chemicals, Japan, für homeotrope Ausrichtung ($\varepsilon_{\|}$) und Polyimid AL-1054 von Japan Synthetic Rubber, Japan, für homogene Ausrichtung ($\varepsilon_{\perp}$). Die Bestimmung der Kapazitäten erfolgt mit einem Frequenzgang-Analysegerät Solatron 1260 unter Verwendung einer Sinuswelle mit einer Spannung von 0,3 $V_{rms}$.

Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen wurden unter senkrechter Beobachtung bestimmt. Die Schwellenspannung ($V_{10}$), "Mittgrau-Spannung" ($V_{50}$) und Sättigungsspannung ($V_{90}$) wurden für 10 %, 50 % bzw. 90 % relativen Kontrast bestimmt.

Die flüssigkristallinen Medien werden bezüglich ihrer Eigenschaften im Frequenzbereich der Mikrowellen untersucht wie in A. Penirschke et al. "Cavity Perturbation Method for Characterization of Liquid Crystals up to 35GHz", 34th European Microwave Conference - Amsterdam, S. 545-548 beschrieben. Vergleiche hierzu auch A. Gaebler et al. "Direct Simulation of Material Permittivites ...", 12MTC 2009 - International Instrumentation and Measurement Technology Conference, Singapur, 2009 (IEEE), S. 463-467 und DE 10 2004 029 429 A, in der ebenfalls detailliert ein Messverfahren beschrieben wird.

Der Flüssigkristall wird in eine zylindrische Kapillare aus Polytetrafuorethylen (PTFE) oder Quarzglas gefüllt. Die Kapillare hat einen inneren Radius von 180 $\mu$m und einen äußeren Radius von 350 $\mu$m. Die effektive Länge beträgt 2,0 cm. Die gefüllte Kapillare wird in die Mitte der zylindrischen Kavität mit einer Resonanzfrequenz von 19 GHz eingebracht. Diese Kavität hat eine Länge von 11,5 mm und einen Radius von 6 mm. Daraufhin wird das Eingangssignal ("source") angelegt und das Ergebnis des Ausgangssignals mit einem kommerziellen Netzwerkanalysator ("vector network analyzer") aufgenommen. Für andere Frequenzen werden die Abmessungen der Kavität entsprechend angepasst.

Aus der Änderung der Resonanzfrequenz und des Q-Faktors, zwischen der Messung mit der mit dem Flüssigkristall gefüllten Kapillare und der Messung ohne der mit dem Flüssigkristall gefüllten Kapillare, wird die dielektrische Konstante und der Verlustwinkel bei der entsprechenden Zielfrequenz mittels der Gleichungen 10 und 11 der zuvor

genannten Druckschrift A. Penirschke et al., 34th European Microwave Conference - Amsterdam, S. 545-548 bestimmt, wie dort beschrieben.

Die Werte für die Komponenten der Eigenschaften senkrecht bzw. and parallel zum Direktor des Flüssigkristalls werden durch Orientierung des Flüssigkristalls in einem Magnetfeld erhalten. Dazu wird das Magnetfeld eines Permanentmagneten verwendet. Die Stärke des Magnetfelds beträgt 0,35 Tesla. Die Orientierung des Magneten wird entsprechend eingestellt und dann entsprechend um 90° gedreht.

Bevorzugte Bauelemente sind Phasenschieber, Varaktoren, Funk- und Radiowellenantennenarrays, "matching circuit adaptive filters" und andere.

In der vorliegenden Anmeldung, bedeutet, wenn nicht ausdrücklich anders angegeben, der Begriff Verbindungen sowohl eine Verbindung, als auch mehrere Verbindungen.

Die erfindungsgemäßen Flüssigkristallmedien weisen bevorzugt nematische Phasen von jeweils mindestens von -20°C bis 80°C, bevorzugt von -30°C bis 85°C und ganz besonders bevorzugt von -40°C bis 100°C auf. Insbesondere bevorzugt reicht die Phase bis 120°C oder mehr, bevorzugt bis140°C oder mehr und ganz besonders bevorzugt bis 160°C oder mehr. Hierbei bedeutet der Begriff eine nematische Phase aufweisen einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen, mit einer Schichtdicke von 5 $\mu$m, für mindestens 100 Stunden überprüft. Bei hohen Temperaturen wird der Klärpunkt nach üblichen Methoden in Kapillaren gemessen.

Ferner sind die erfindungsgemäßen Flüssigkristallmedien durch hohe optische Anisotropien im sichtbaren Bereich gekennzeichnet. Die Doppelbrechung bei 589 nm beträgt bevorzugt 0,20 oder mehr, besonders bevorzugt 0,25 oder mehr, besonders bevorzugt 0,30 oder mehr, besonders bevorzugt 0,40 oder mehr und ganz besonders bevorzugt 0,45 oder mehr. Außerdem beträgt die Doppelbrechung bevorzugt 0,80 oder weniger.

In einer bevorzugten Ausführungsform der vorliegenden Erfindung weisen die eingesetzten Flüssigkristallmedien eine positive dielektrische Anisotropie ($\Delta\varepsilon$) auf. Diese ist bevorzugt 1,8 oder größer und 15,0 oder kleiner, mehr bevorzugt 2,0 oder größer und 10,0 oder kleiner, besonders bevorzugt 3,0 oder größer und 8,0 oder kleiner und ganz besonders bevorzugt 3,5 oder größer und 6,0 oder kleiner.

Wenn die eingesetzten Flüssigkristallmedien eine negative dielektrische Anisotropie ($\Delta\varepsilon$) aufweisen, ist diese bevorzugt kleiner oder gleich -2,5, besonders bevorzugt kleiner oder gleich -4,0 und ganz besonders bevorzugt kleiner oder gleich -5,0.

In dieser bevorzugten Ausführungsform der vorliegenden Erfindung, in der die eingesetzten Flüssigkristallmedien eine negative dielektrische Anisotropie ($\Delta\varepsilon$) aufweisen, ist deren Betrag bevorzugt 1,5 oder größer und 15,0 oder kleiner, besonders bevorzugt 1,8 oder größer und 12,0 oder kleiner und ganz besonders bevorzugt 2,0 oder größer und 10,0 oder kleiner. Ferner sind die erfindungsgemäßen Flüssigkristallmedien durch hohe Anisotropien im Mikrowellenbereich und/oder Millimeterwellenbereich gekennzeichnet. Die Doppelbrechung beträgt z.B. bei ca. 8,3 GHz bevorzugt 0,14 oder mehr, besonders bevorzugt 0,15 oder mehr, besonders bevorzugt 0,20 oder mehr, besonders bevorzugt 0,25 oder mehr und ganz besonders bevorzugt 0,30 oder mehr. Außerdem beträgt die Doppelbrechung bevorzugt 0,80 oder weniger.

Die dielektrische Anisotropie im $\mu$-Wellenbereich ist definiert als

$$\Delta\varepsilon_r \equiv (\varepsilon_{r,||} - \varepsilon_{r,\perp}) .$$

Die Modulierbarkeit bzw. Steuerbarkeit ("tunability", $\tau$) ist definiert als

$$\tau \equiv (\Delta\varepsilon_r / \varepsilon_{r,||}) .$$

Die Materialgüte ($\eta$) ist definiert als

$$\eta \equiv (\tau / \tan \delta_{\varepsilon\, r,Max.}) ,$$

mit dem maximalen dielektrischen Verlust

$$\tan \delta_{\varepsilon\, r,Max.} \equiv Max. \{ \tan \delta_{\varepsilon\, r,\perp}; \tan \delta_{\varepsilon\, r,||} \} .$$

Die Materialgüte (η) der bevorzugten Flüssigkristallmaterialien beträgt 6 oder mehr, bevorzugt 8 oder mehr, bevorzugt 10 oder mehr, bevorzugt 15 oder mehr, bevorzugt 17 oder mehr, bevorzugt 20 oder mehr, besonders bevorzugt 25 oder mehr und ganz besonders bevorzugt 30 oder mehr und insbesondere 40 oder mehr oder sogar 50 oder mehr.

Die bevorzugten Flüssigkristallmaterialien haben in den entsprechenden Bauteilen Phasenschiebergüten von 15°/dB oder mehr, bevorzugt von 20°/dB oder mehr, bevorzugt von 30°/dB oder mehr, bevorzugt von 40°/dB oder mehr, bevorzugt von 50°/dB oder mehr, besonders bevorzugt von 80°/dB oder mehr und ganz besonders bevorzugt von 100°/dB oder mehr.

In einigen Ausführungsformen können jedoch auch Flüssigkristalle mit eine negativen Wert der dielektrischen Anisotropie vorteilhaft verwendet werden. Die eingesetzten Flüssigkristalle sind entweder Einzelsubstanzen oder Mischungen. Bevorzugt weisen sie eine nematische Phase auf.

Der Ausdruck "Alkyl" umfasst vorzugsweise geradkettige und verzweigte Alkylgruppen, sowie Cycloalkylgruppen, jeweils mit 1 bis 15 Kohlenstoffatomen, insbesondere die geradkettigen Gruppen Methyl, Ethyl, Propyl, Butyl, Pentyl, Hexyl und Heptyl, sowie Cyclopropyl und Cyclohexyl. Gruppen mit 2 bis 10 Kohlenstoffatomen sind im Allgemeinen bevorzugt.

Der Ausdruck "Alkenyl" umfasst vorzugsweise geradkettige und verzweigte Alkenylgruppen mit 2 bis 15 Kohlenstoffatomen, insbesondere die geradkettigen Gruppen. Besonders bevorzugte Alkenylgruppen sind $C_2$ bis $C_7$-1E-Alkenyl, $C_4$ bis $C_7$-3E-Alkenyl, $C_5$ bis $C_7$-4-Alkenyl, $C_6$ bis $C_7$-5-Alkenyl und $C_7$-6-Alkenyl, insbesondere $C_2$ bis $C_7$-1E-Alkenyl, $C_4$ bis $C_7$-3E-Alkenyl und $C_5$ bis $C_7$-4-Alkenyl. Beispiele weiterer bevorzugter Alkenylgruppen sind Vinyl, 1E-Propenyl, 1 E-Butenyl, 1E-Pentenyl, 1 E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im Allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl", bzw. Alkoxyalkyl umfasst vorzugsweise geradkettige Reste der Formel $C_nH_{2n+1}$-O-$(CH_2)_m$, worin n und m jeweils unabhängig voneinander eine ganze Zahl von 1 bis 10 bedeuten. Vorzugsweise ist hier n 1 und m 1 bis 6.

Verbindungen mir einer Vinyl-Endgruppe und Verbindungen mit einer Methyl-Endgruppe haben eine geringe Rotationsviskosität.

In der vorliegenden Anmeldung bedeuten sowohl Hochfrequenztechnik als auch Höchstfrequenztechnik Anwendungen mit Frequenzen im Bereich von 1 MHz bis 100 THz, bevorzugt von 1 GHz bis 30 THz, stärker bevorzugt 2 GHz bis 10 THz, insbesondere bevorzugt von ca. 5 GHz bis 5 THz.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und Flüssigkristallverbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 15 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen $C_nH_{2n+1}$, $C_mH_{2m+1}$ und $C_lH_{2l+1}$ bzw. $C_nH_{2n-1}$, $C_mH_{2m-1}$ und $C_lH_{2l-1}$ bedeuten geradkettiges Alkyl bzw. Alkenyl, vorzugsweise 1-*E*-Alkenyl, jeweils mit n, m bzw. l C-Atomen, wobei n, m und l unabhängig voneinander eine ganze Zahl von 1 bis 9, bevorzugt bis 7 bzw. von 2 bis 9, bevorzugt bis 7 bedeuten. $C_oH_{2o+1}$, bedeutet geradkettiges Alkyl mit 1 bis 7, bevorzugt bis 4 C-Atomen, oder verzweigtes Alkyl mit 1 bis 7, bevorzugt bis 4 C-Atomen.

In der Tabelle A werden die für die Ringelemente der Kernstrukturen der Verbindungen verwendeten Codes

aufgeführt, während in der Tabelle B die Verknüpfungsgruppen gezeigt sind. Tabelle C gibt die Bedeutungen der Codes für die Endgruppen der linken bzw. rechten Seite. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 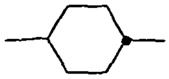 | **P** | 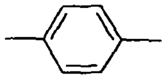 |
| **D** | 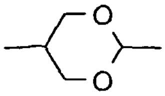 | **DI** | 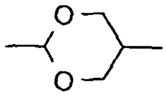 |
| **A** | 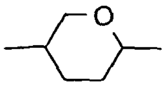 | **AI** | 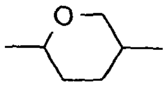 |
| **G** | 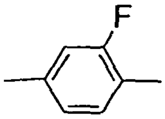 | **GI** | 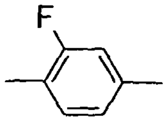 |
| **U** | 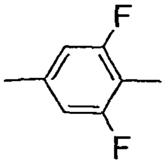 | **UI** | 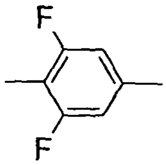 |
| **Y** | 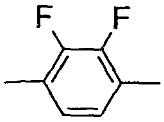 | | |
| **fX** | 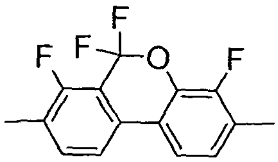 | **fXI** | 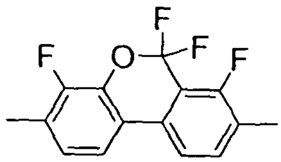 |
| **M** | 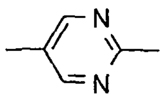 | **MI** | 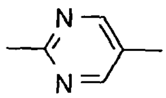 |
| **N** | 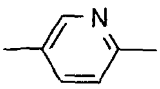 | **NI** | 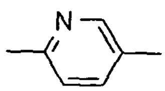 |
| **fN** | 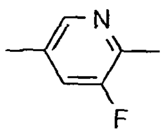 | **fNI** | 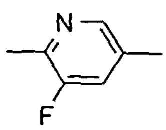 |
| **dH** | 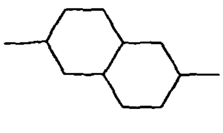 | **N(2,6)** | 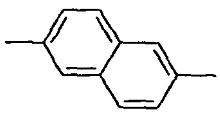 |
| **N(1,4)** | 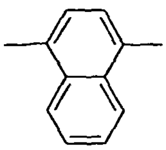 | | |

(fortgesetzt)

| | | | |
|---|---|---|---|
| **N3f** | 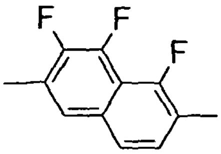 | **N3fI** | 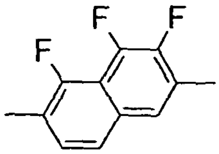 |
| **tH** | 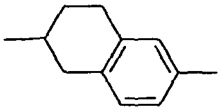 | **tHI** | 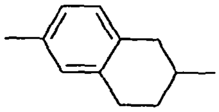 |
| **tH2f** | 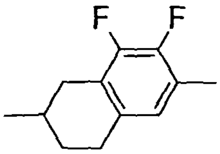 | **tH2fI** | 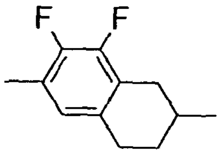 |
| **K** | 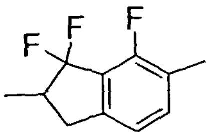 | **KI** | 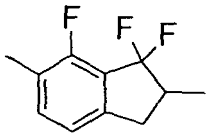 |
| **L** | 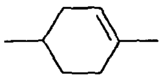 | **LI** | 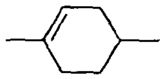 |
| **F** | 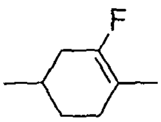 | **FI** | 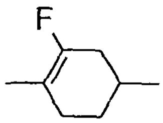 |
| **P(o)** | 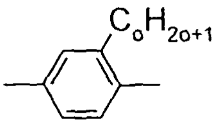 | **PI(o)** | 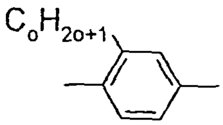 |
| **P(i3)** | 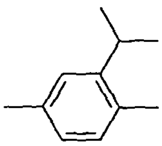 | **PI(c3)** | 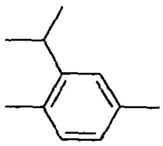 |
| **P(t4)** | 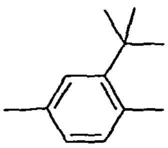 | **PI(t4)** | 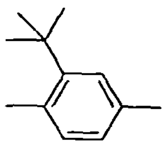 |
| **P(c3)** | 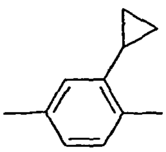 | **PI(c3)** | 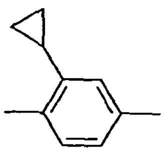 |
| **P(c4)** | 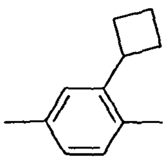 | **PI(c4)** | 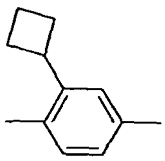 |

(fortgesetzt)

| | | | |
|---|---|---|---|
| **P(c5)** | 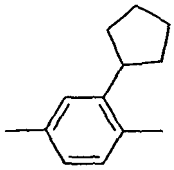 | **PI(c5)** | 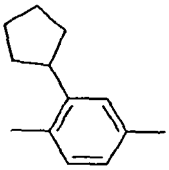 |
| **P(e5)** | 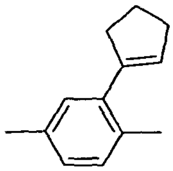 | **PI(e5)** | 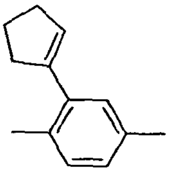 |
| **P(c6)** | 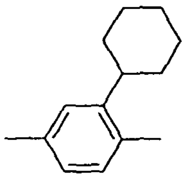 | **PI(c6)** | 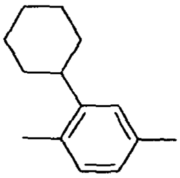 |
| **P(e6)** | 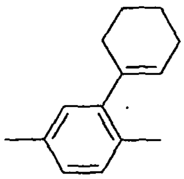 | **PI(e6)** | 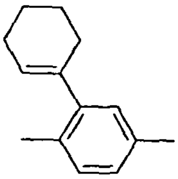 |
| **GI(o)** | 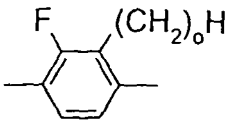 o ∈ {1;2;3;4;5;6} | **G(o)** | 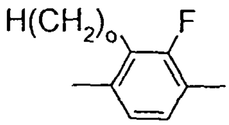 o ∈ {1;2;3;4;5;6} |
| **GI(i3)** | 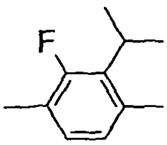 | **G(i3)** | 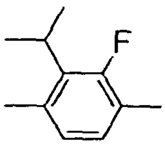 |
| **GI(t4)** | 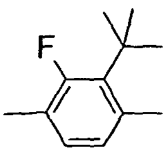 | **G(t4)** | 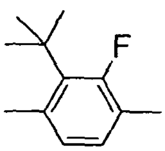 |
| **GI(c3)** | 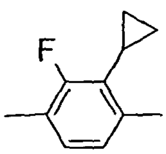 | **G(c3)** | 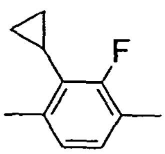 |
| **GI(c4)** | 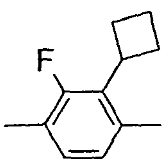 | **G(c4)** | 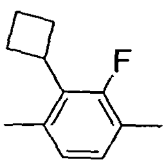 |

(fortgesetzt)

| | | | |
|---|---|---|---|
| **GI(c5)** | 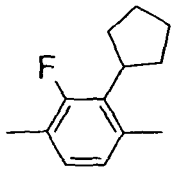 | **G(c5)** | 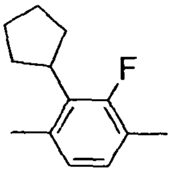 |
| **GI(e5)** | 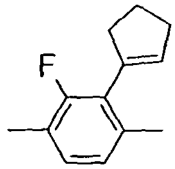 | **G(e5)** | 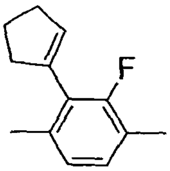 |
| **GI(c6)** | 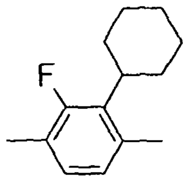 | **G(c6)** | 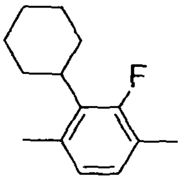 |
| **GI(e6)** | 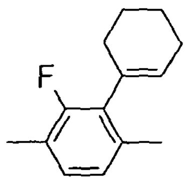 | **G(e6)** | 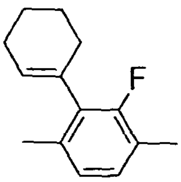 |

**Tabelle B: Verknüpfungsgruppen**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | | |

**Tabelle C: Endgruppen**

| Linke Seite | | Rechte Seite, Verwendung allein | |
|---|---|---|---|
| **-n-** | $C_nH_{2n+1}-$ | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-C_nH_{2n+1}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N=C- | **-N** | -C≡N |
| **-S-** | S=C=N- | **-S** | -N=C=S |
| **-F-** | F- | **-F** | |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |

(fortgesetzt)

| **Linke Seite** | | **Rechte Seite,** | |
|---|---|---|---|
| | | **Verwendung allein** | |
| **-DO-** | $CF_2HO$ - | **-OD** | $-OCF_2H$ |
| **-TO-** | $CF_3O$ - | **-OT** | $-OCF_3$ |
| **-OXF-** | $CF_2$=CH-O- | **-OXF** | -O-CH=$CF_2$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |
| | | **Verwendung zusammen mit anderen** | |
| **-...A...-** | -C≡C- | -...**A**... | -C≡C- |
| **-...V...-** | CH=CH- | -...**V**... | -CH=CH- |
| **-...Z...-** | -CO-O- | -...**Z**... | -CO-O- |
| **-...ZI...-** | -O-CO- | **...ZI...** | -O-CO- |
| **-...K...-** | -CO- | -...**K**... | -CO- |
| **-...W...-** | -CF=CF- | -...**W**... | -CF=CF- |

worin n und m jeweils ganze Zahlen bedeuten und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

**Tabelle D: Beispielstrukturen**

Die Beispielstrukturen zeigen besonders bevorzugt eingesetzte Verbindungen

Beispiele für Verbindungen der Komponente A

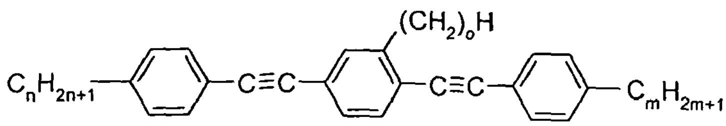

**PTP(o)TP-n-m**, o ∋ {1;2;3;4;5;6}

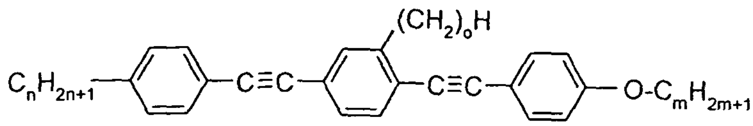

**PTP(o)TP-n-Om,** o ∋ {1;2;3;4;5;6}

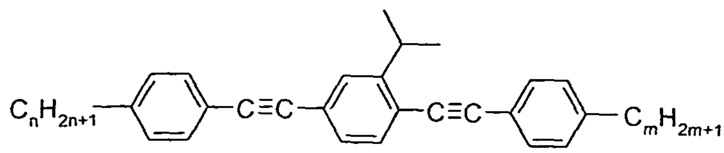

**PTP(i3)TP-n-m**

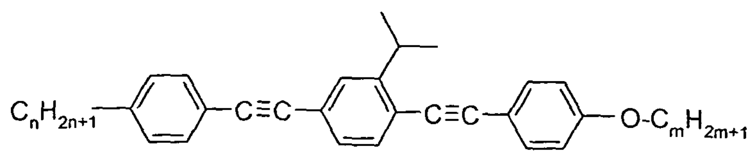

**PTP(i3)TP-n-Om**

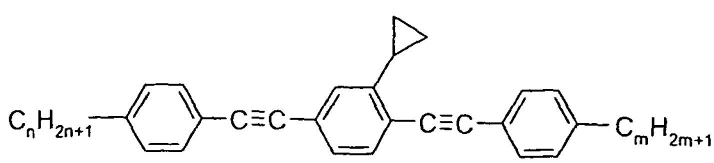

(fortgesetzt)

Die Beispielstrukturen zeigen besonders bevorzugt eingesetzte Verbindungen

Beispiele für Verbindungen der Komponente A

**PTP(c3)TP-n-m**

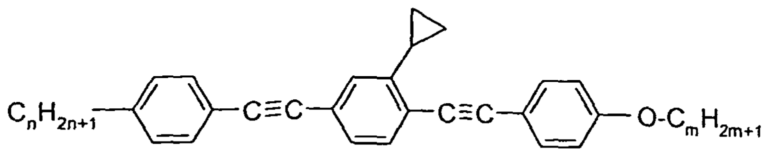

**PTP(c3)TP-n-Om**

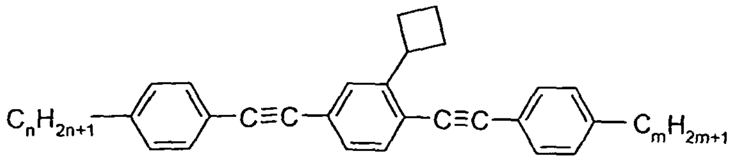

**PTP(c4)TP-n-m**

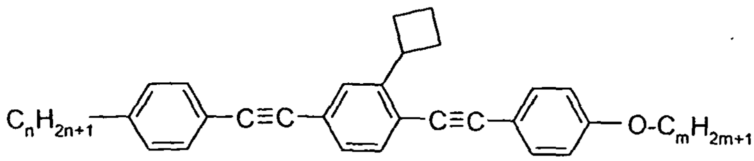

**PTP(c4)TP-n-Om**

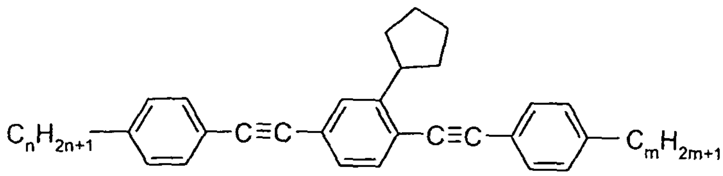

**PTP(c5)TP-n-m**

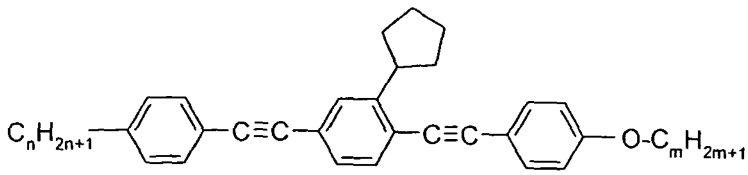

**PTP(c5)TP-n-Om**

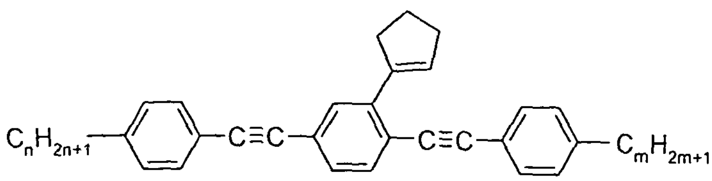

**PTP(e5)TP-n-m**

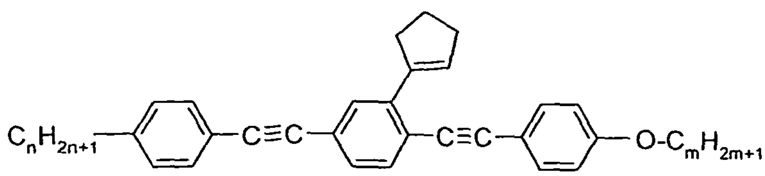

**PTP(e5)TP-n-Om**

(fortgesetzt)

Die Beispielstrukturen zeigen besonders bevorzugt eingesetzte Verbindungen

Beispiele für Verbindungen der Komponente A

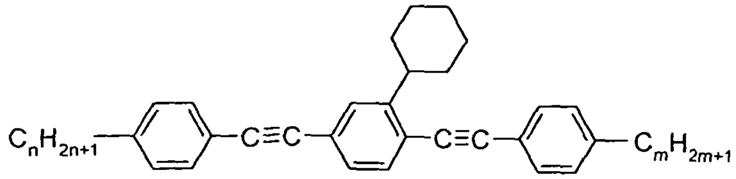

**PTP(c6)TP-n-m**

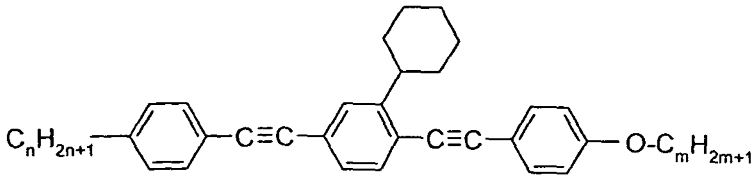

**PTP(c6)TP-n-Om**

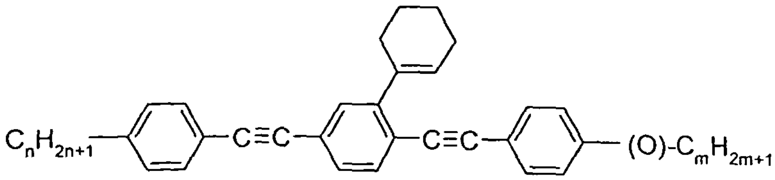

**PTP(e6)TP-n-(O)m**

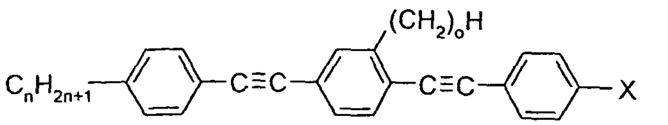

**PTP(o)TP-n-X, X=F, Cl,** o ∋ {1;2;3;4;5;6}

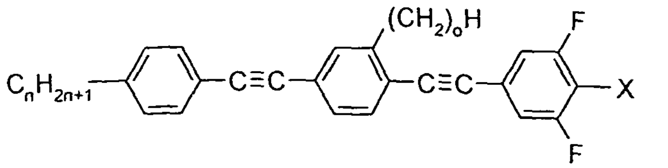

**PTP(o)TU-n-X, X= F, Cl**, o ∈ {1;2;3;4;5;6}

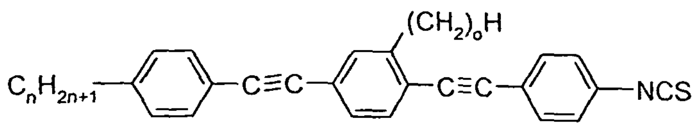

**PTP(o)TP-n-S** o ∋ {1;2;3;4;5;6}

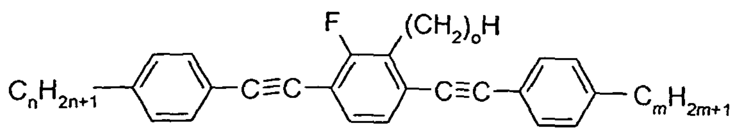

**PTGI(o)TP-n-m,** o ∋ {1;2;3;4;5;6}

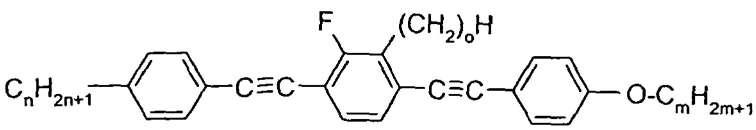

**PTGI(o)TP-n-Om,** o ∋ {1;2;3;4;5;6}

(fortgesetzt)

Die Beispielstrukturen zeigen besonders bevorzugt eingesetzte Verbindungen

Beispiele für Verbindungen der Komponente A

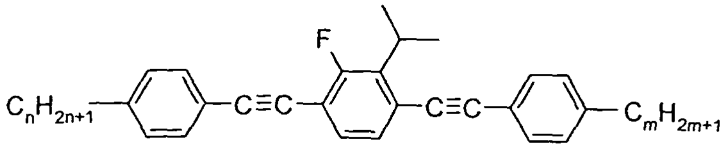

**PTGI(i3)TP-n-m**

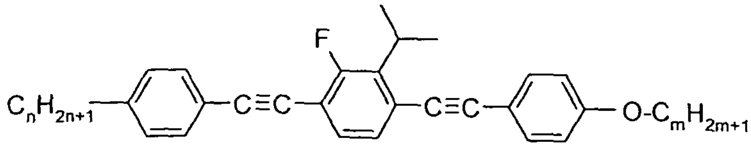

**PTGI(i3)TP-n-Om**

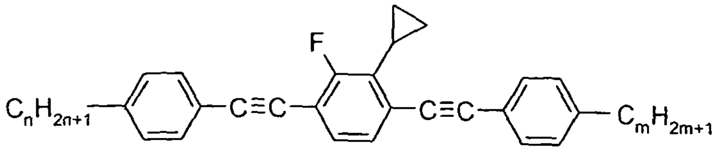

**PTGI(c3)TP-n-m**

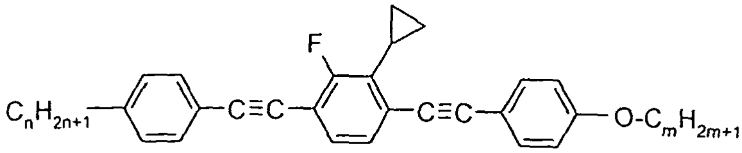

**PTGI(c3)TP-n-Om**

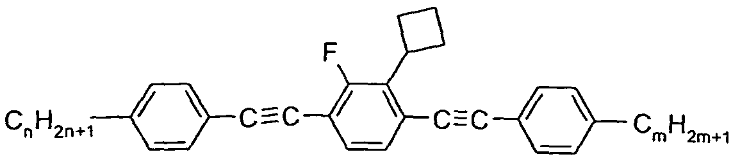

**PTGI(c4)TP-n-m**

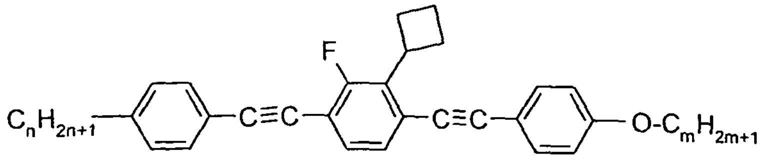

**PTGI(c4)TP-n-Om**

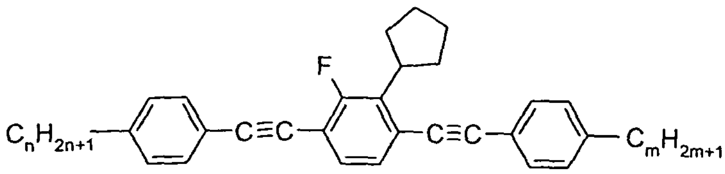

**PTGI(c5)TP-n-m**

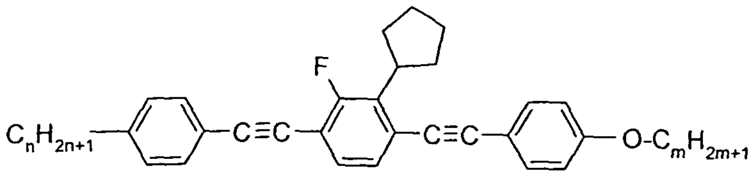

**PTGI(c5)TP-n-Om**

(fortgesetzt)

Die Beispielstrukturen zeigen besonders bevorzugt eingesetzte Verbindungen

Beispiele für Verbindungen der Komponente A

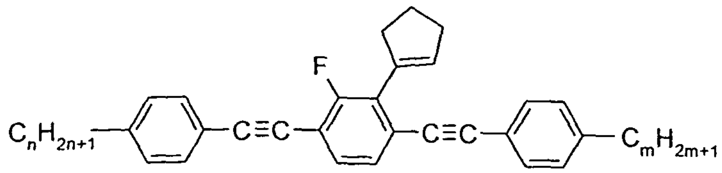

**PTGI(e5)TP-n-m**

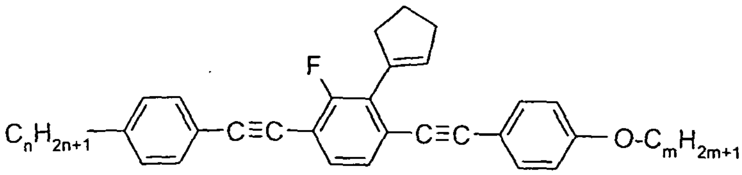

**PTGI(e5)TP-n-Om**

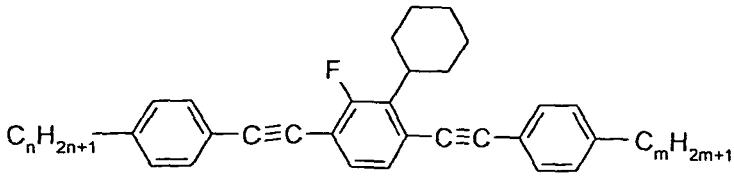

**PTGI(c6)TP-n-m**

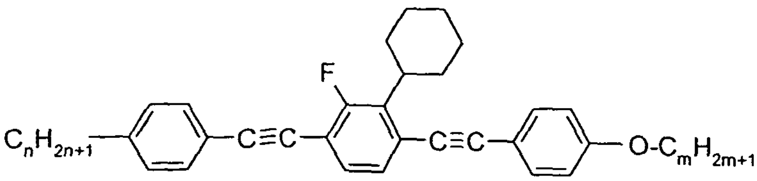

**PTGI(c6)TP-n-Om**

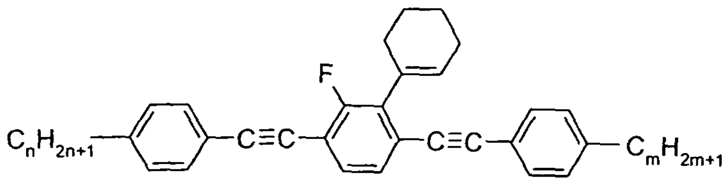

**PTGI(e6)TP-n-m**

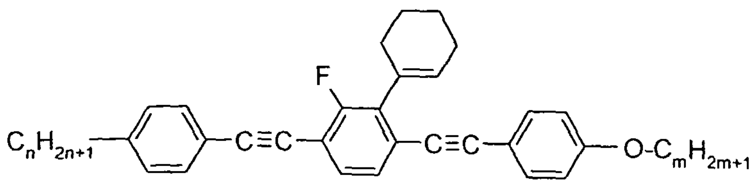

**PTGI(e6)TP-n-Om**

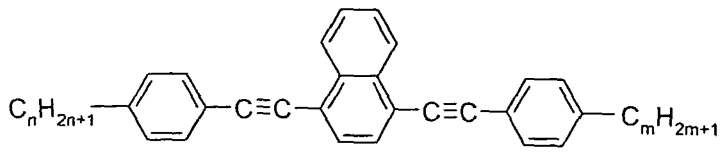

**PTN(1,4)TP-n-m**

(fortgesetzt)

Die Beispielstrukturen zeigen besonders bevorzugt eingesetzte Verbindungen

Beispiele für Verbindungen der Komponente A

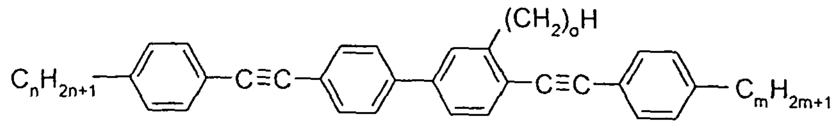

**PTPP(o)TP-n-m,** o ∋ {1;2;3;4;5;6}

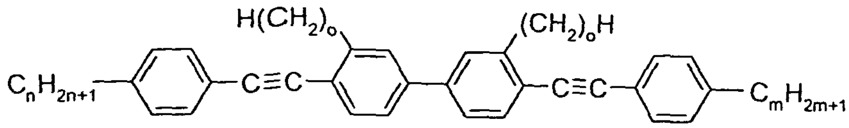

**PTPI(o)P(o)TP-n-m,** o ∋ {1;2;3;4;5;6}

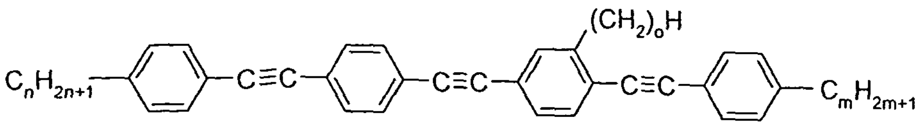

**PTPTP(o)P-n-m,** o ∋ {1;2;3;4;5;6}

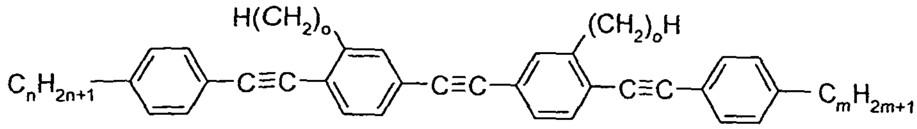

**PTPI(o)TP(o)P-n-m,** o ∋ {1;2;3;4;5;6}

(n ∋ {1;2;3;4;5;6;7} und m ∋ {1;2;3;4;5;6;7}.)

Beispiele für Verbindungen der Komponente B

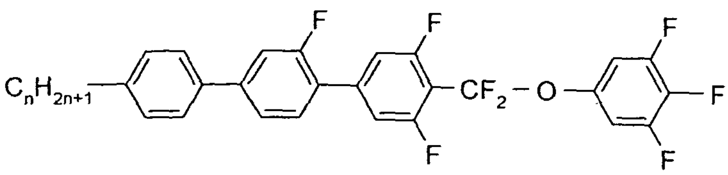

**PGUQU-n-F**

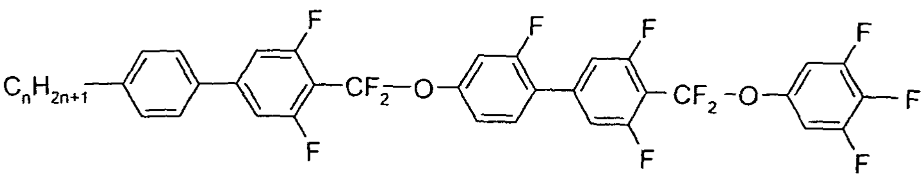

**PUQGUQU-n-F**

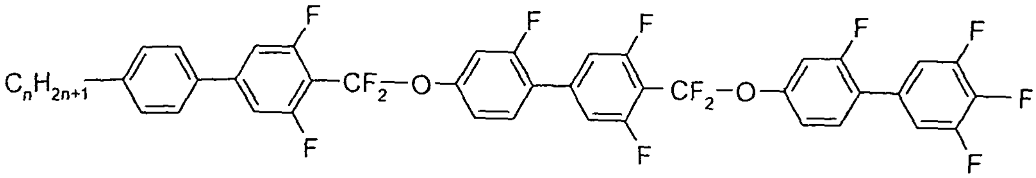

**PUQGUQGU-n-F = PU[QGU]$_2$-n-F**

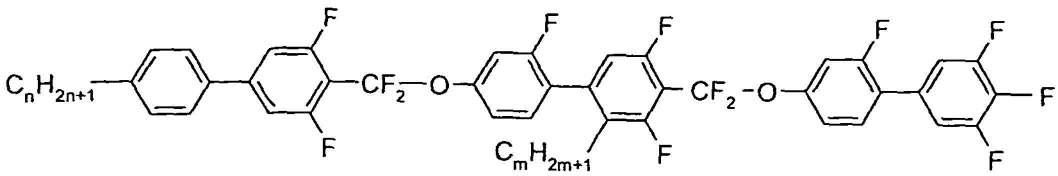

(fortgesetzt)

Die Beispielstrukturen zeigen besonders bevorzugt eingesetzte Verbindungen

Beispiele für Verbindungen der Komponente A

**PUQGU(m)QGU-n-F = PU[QGU]$_2^{(m)}$-n-F**

(n ∋ {1;2;3;4;5;6;7} und m ∋ {1;2;3;4}.)

Beispiele für Verbindungen der Komponente C

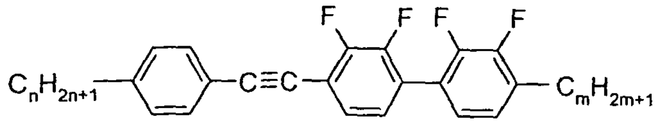

**PTYY-n-m**

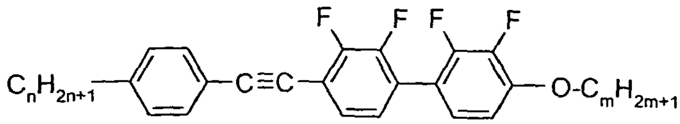

**PTYY-n-Om**

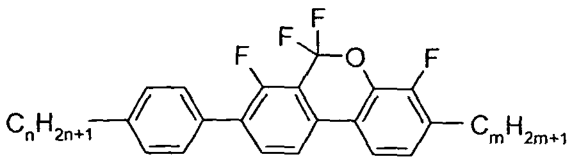

**PfX-n-m**

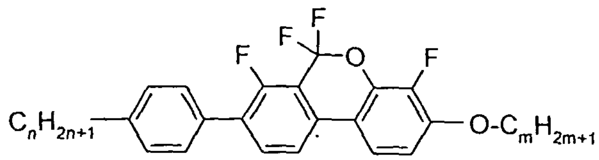

**PfX-n-Om**

(n ∋ {1;2;3;4;5;6;7} und m ∋ {1;2;3;4;5;6;7})

Beispiele für Verbindungen der Komponente E

Verbindungen mit drei 6-gliedrigen Ringen

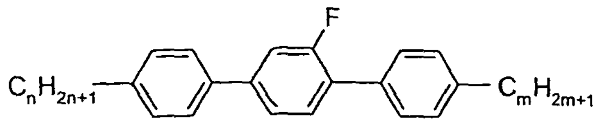

**PGP-n-m**

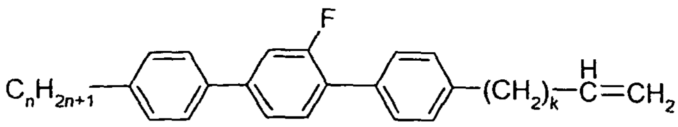

**PGP-n-kV**

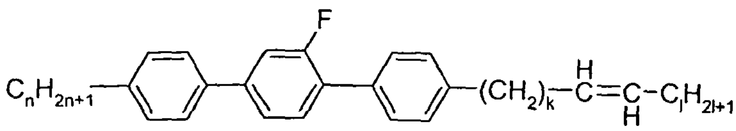

**PGP-n-kVl**

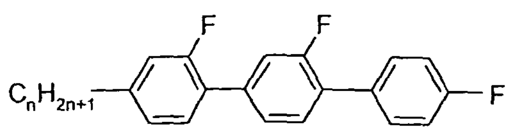

**GGP-n-F**

(fortgesetzt)

Die Beispielstrukturen zeigen besonders bevorzugt eingesetzte Verbindungen

Beispiele für Verbindungen der Komponente A

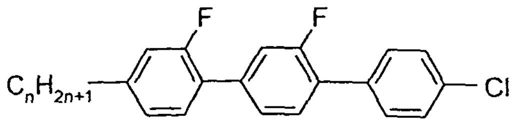

**GGP-n-CL**

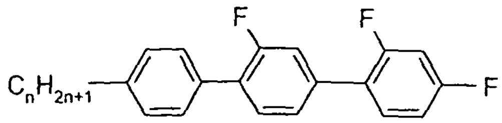

**PGIGI-n-F**

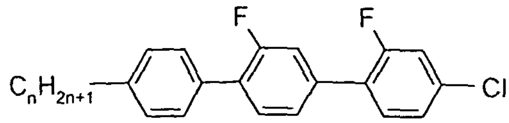

**PGIGI-n-CL**

(n ∋ {1;2;3;4;5;6;7}, m ∋ {1;2;3;4;5;6;7}, und k ∋ {0;1;2;3;4}, bevorzugt 0 oder 2, und l ∋ {0;1;2;3}.)

Verbindungen mit vier 6-gliedrigen Ringen

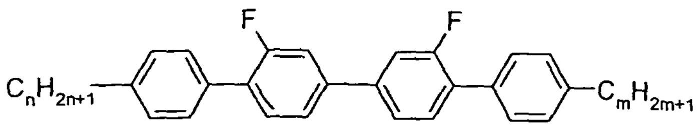

**PGIGP-n-m**

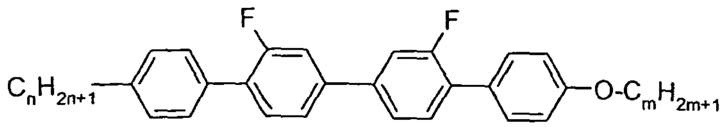

**PGIGP-n-Om**

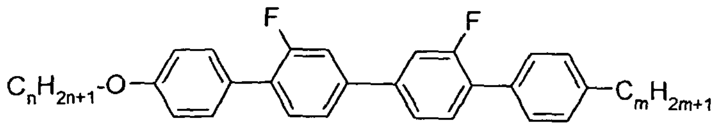

**PGIGP-nO-m**

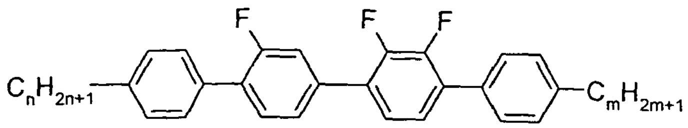

**PGIYP-n-m**

(n ∋ {1;2;3;4;5;6;7} und m ∋ {1;2;3;4;5;6;7})

Beispielstrukturen eingesetzter polarer Verbindungen:

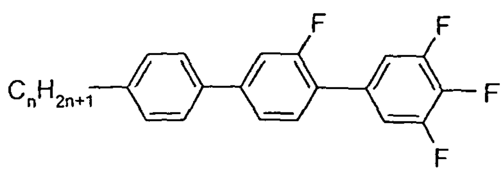

**PGU-n-F**

(fortgesetzt)

Die Beispielstrukturen zeigen besonders bevorzugt eingesetzte Verbindungen

Beispiele für Verbindungen der Komponente A

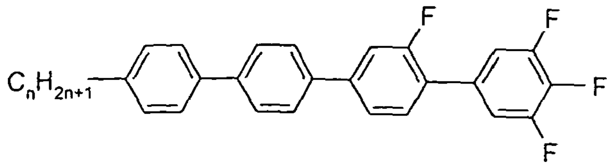

**PPGU-n-F**

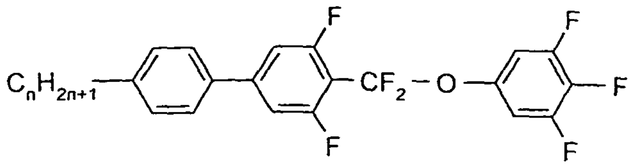

**PUQU-n-F**

(n ∋ {1;2;3;4;5;6;7}.)

Beispielstrukturen weiterer bevorzugt eingesetzter neutraler Verbindungen:

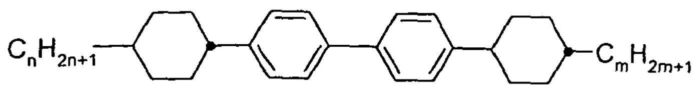

**CPPC-n-m**

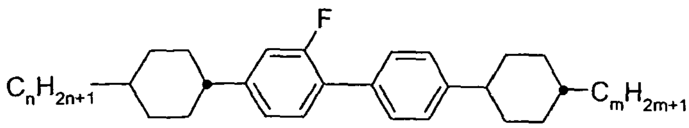

**CGPC-n-m**

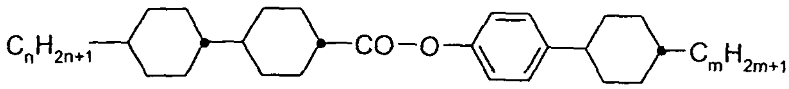

**CCZPC-n-m**

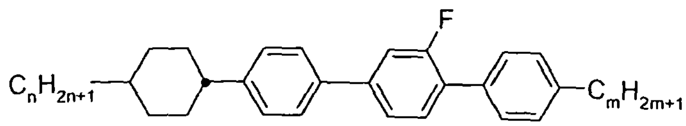

**CPGP-n-m**

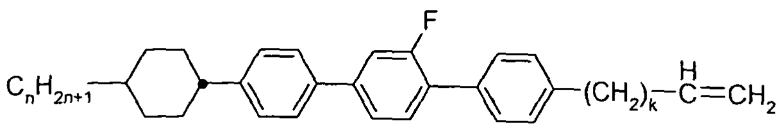

**CPGP-n-kV**

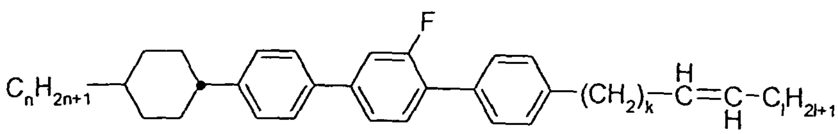

**CPGP-n-kVl**

(n ∋ {1;2;3;4;5;6;7}, m ∋ {1,2,3,4;5;6;7}, und k ∋ {0;1;2;3;4}, bevorzugt 0 oder 2, und l ∋ {0;1;2;3}.)

Beispielstrukturen weiterer eingesetzter polarer Verbindungen:

(fortgesetzt)

Die Beispielstrukturen zeigen besonders bevorzugt eingesetzte Verbindungen

Beispiele für Verbindungen der Komponente A

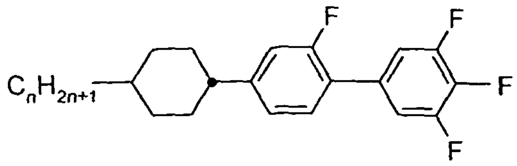

**CGU-n-F**

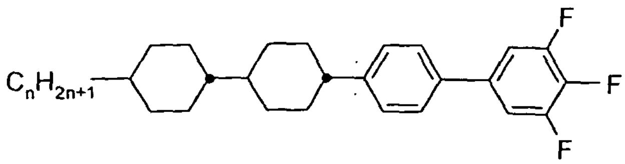

**CCPU-n-F**

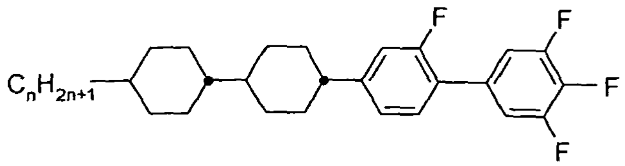

**CCGU-n-F**

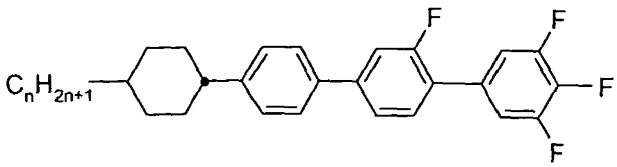

**CPGU-n-F**

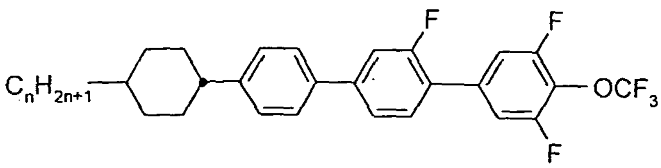

**CPGU-n-OT**

(n ∍ {1;2;3;4;5;6;7}.)

In der folgenden Tabelle, Tabelle E, sind Beispielverbindungen zusammengestellt, die in den mesogenen Medien gemäß der vorliegenden Erfindung als Stabilisator verwendet werden können. Die Gesamtkonzentration dieser bzw. ähnlicher Verbindungen in den Medien beträgt bevorzugt 5 % oder weniger.

## Tabelle E

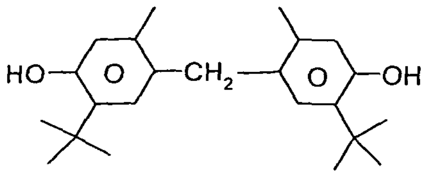

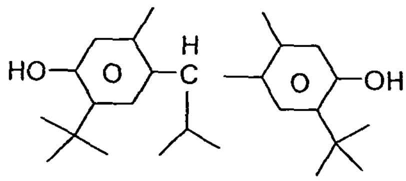

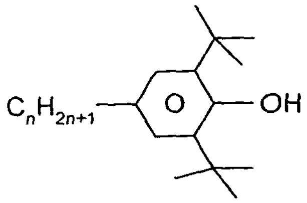

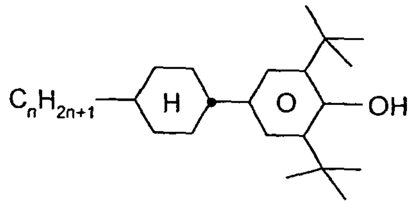

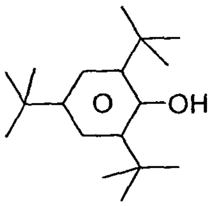

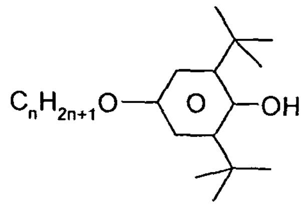

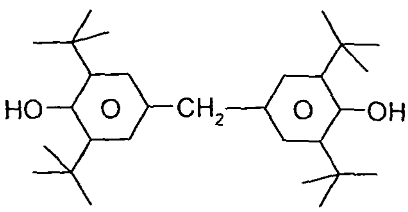

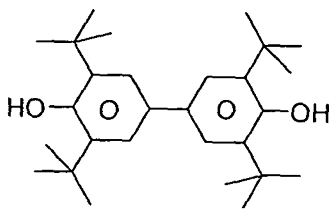

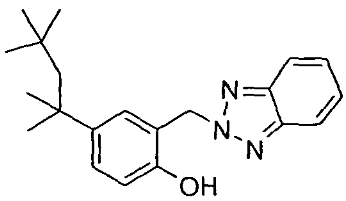

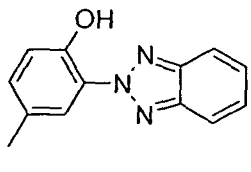

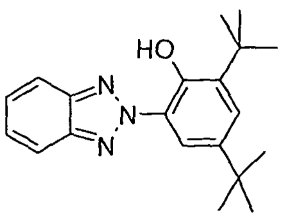

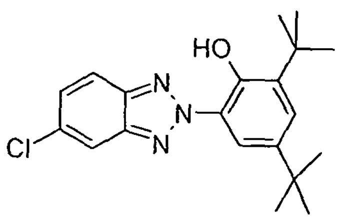

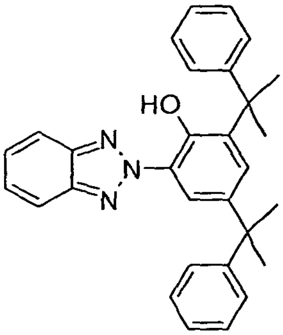

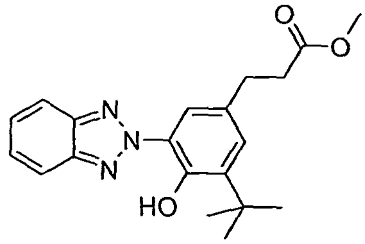

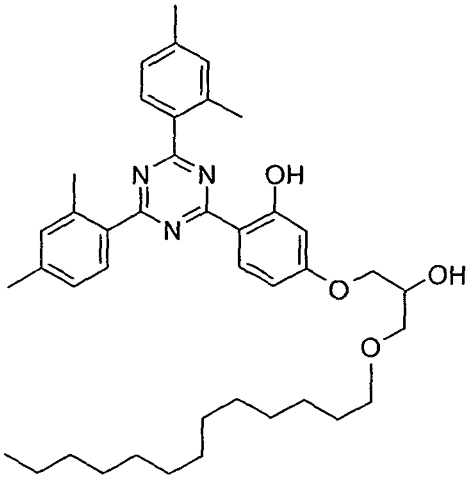

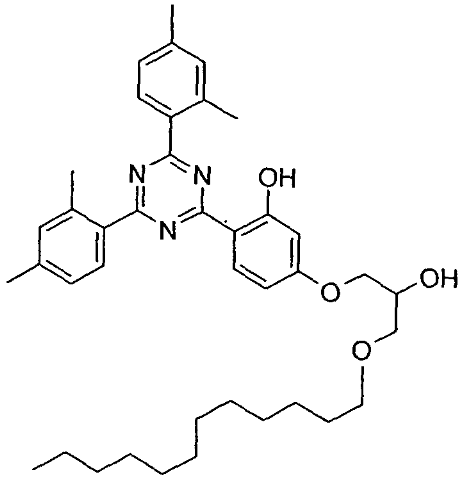

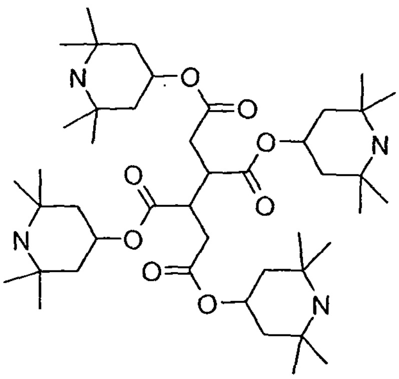

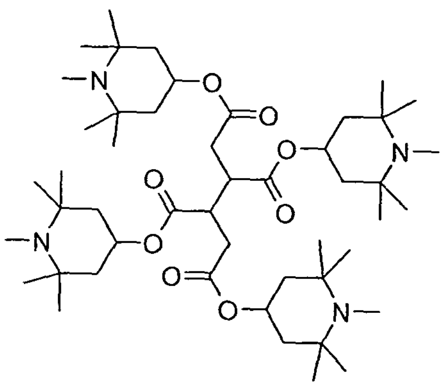

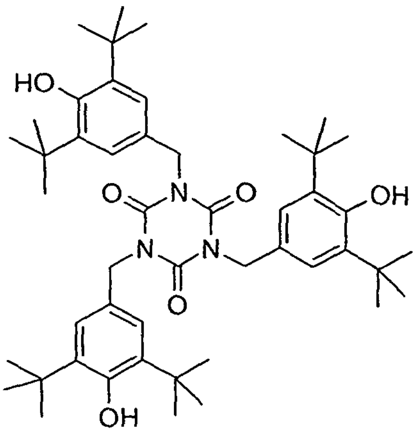

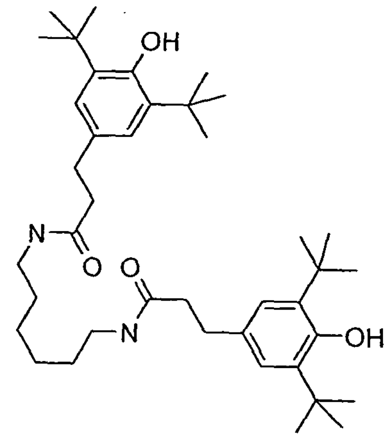

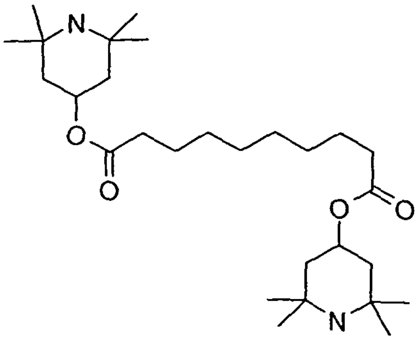

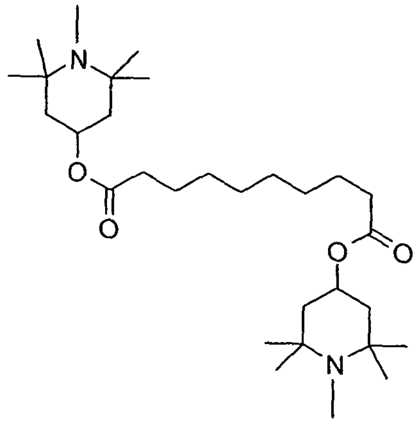

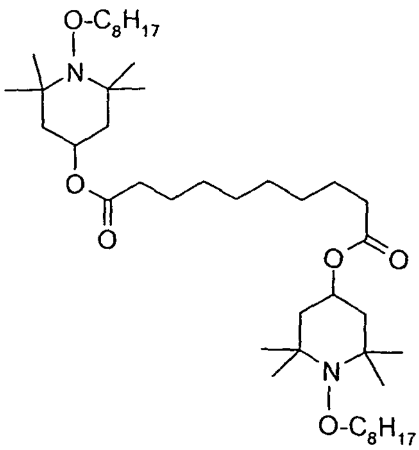

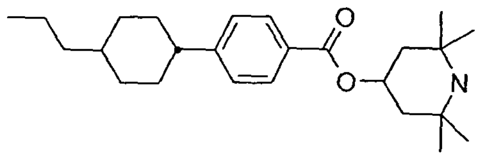

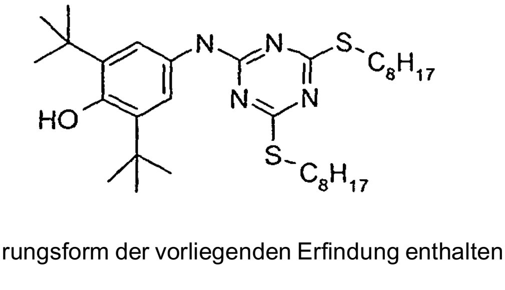

In einer bevorzugten Ausführungsform der vorliegenden Erfindung enthalten die mesogenen Medien eine oder

mehrere Verbindungen ausgewählt aus der Gruppe der Verbindungen der Tabelle E.

In der folgenden Tabelle, Tabelle F, sind Beispielverbindungen zusammengestellt, die in den mesogenen Medien gemäß der vorliegenden Erfindung vorzugsweise als chirale Dotierstoffe verwendet werden können.

**Tabelle F**

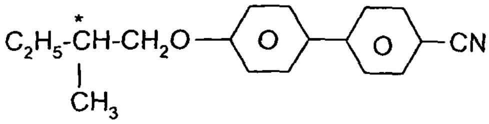

**C 15**

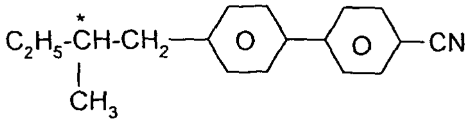

**CB 15**

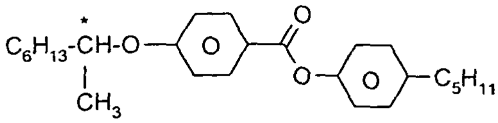

**CM 21**

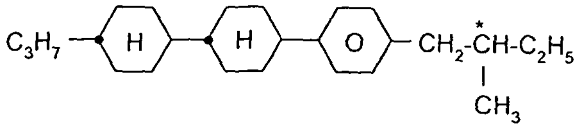

**CM 44**

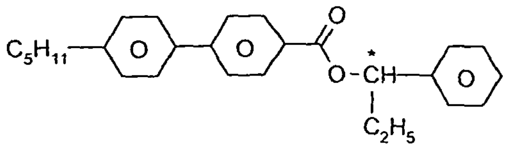

**CM 45**

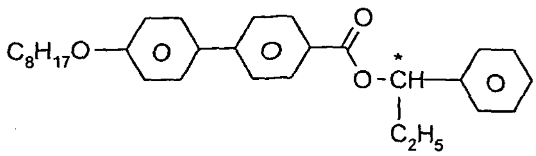

**CM 47**

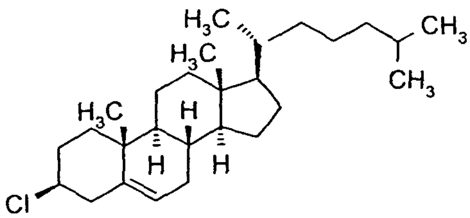

**CC**

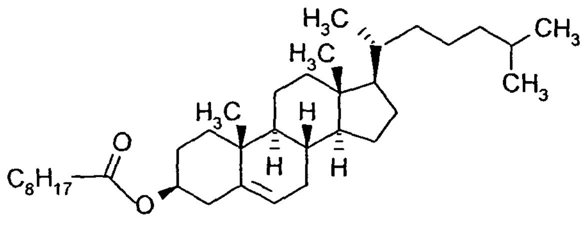

CN

(fortgesetzt)

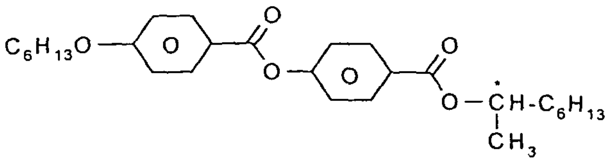

**R/S-811**

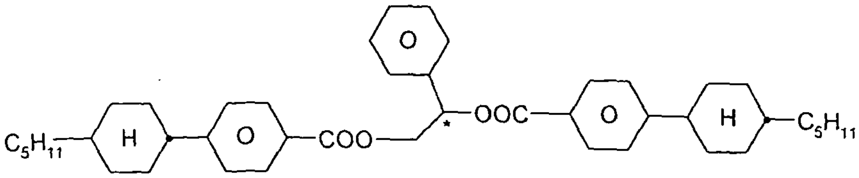

**R/S-1011**

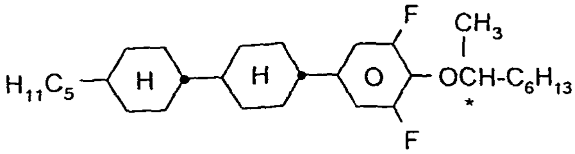

**R/S-2011**

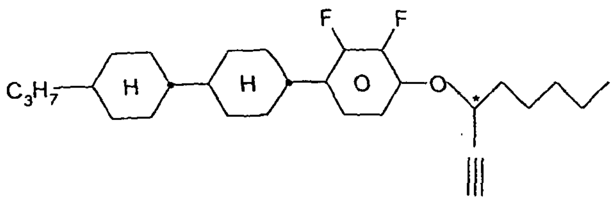

**R/S-3011**

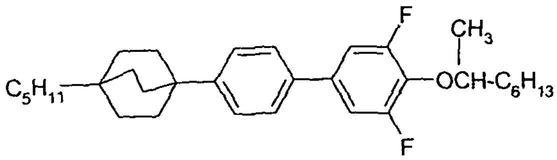

**R/S-4011**

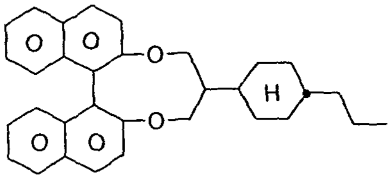

**RS-5011**

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise

- sieben oder mehr, vorzugsweise acht oder mehr Verbindungen, vorzugsweise Verbindungen mit drei oder mehr, vorzugsweise vier oder mehr unterschiedlichen Formeln, ausgewählt aus der Gruppe der Verbindungen der Tabelle D.

Beispiele

Die folgenden Beispiele erläutern die vorliegende Erfindung, ohne sie in irgendeiner Weise zu beschränken. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Die eingesetzten Acetylene, soweit nicht kommerziell erhältlich, werden nach Standard-Laborvorschriften synthetisiert.

Beispielverbindungen der Formel I für Komponente A

Substanzbeispiel 1

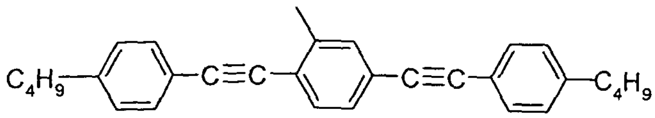

Phasenfolge: K 87°C N 178,5°C I; $\Delta n$ = 0,436; $\Delta\varepsilon$ = 2,8.

Substanzbeispiel 2

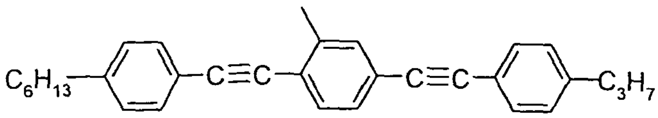

Phasenfolge: K 78°C N 172,3°C I; $\Delta n$ = 0,437; $\Delta\varepsilon$ = 2,6.

Substanzbeispiel 3

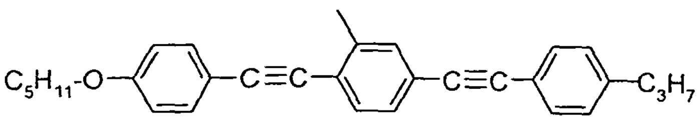

Phasenfolge: K 107°C N 211,0°C I; $\Delta n$ = 0,464; $\Delta\varepsilon$ = 3,1.

Substanzbeispiel 4

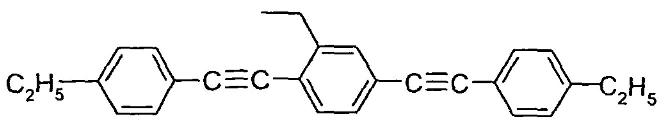

Phasenfolge: K 87°C N 130,7°C I; $\Delta n$ = 0,451; $\Delta\varepsilon$ = 2,1.

Substanzbeispiel 5

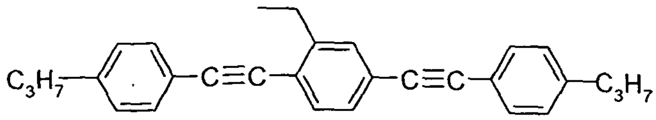

Phasenfolge: K 57°C N 151,7°C I; Δn = 0,445; Δε = 2,0.

Substanzbeispiel 6

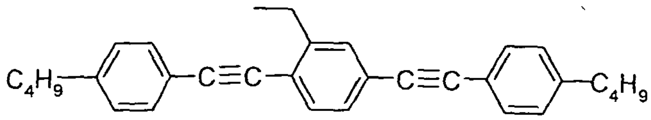

Phasenfolge: K 29°C N 119,2°C I; Δn = 0,402; Δε = 1,7.

Substanzbeispiel 7

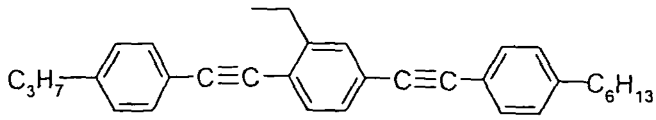

Phasenfolge: $T_g$ -54°C K 14°C N 119,2°C I; Δn = 0,393; Δε = 1,8.

Substanzbeispiel 8

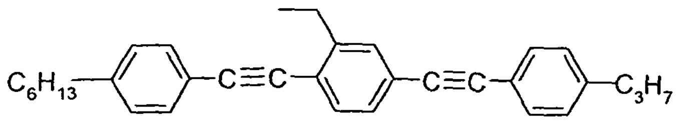

Phasenfolge: K 60°C N 121,8°C I; Δn = 0,394; Δε = 1,7.

Substanzbeispiel 9

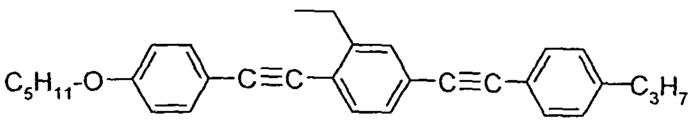

Phasenfolge: K 81 °C N 160,7°C I; Δn = 0,432; Δε = 3,2.

Substanzbeispiel 10

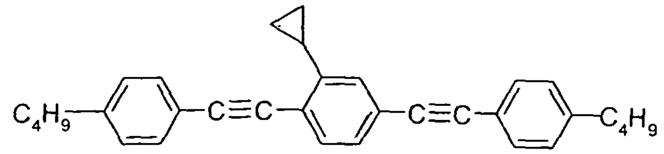

Synthesebeispiel 10: 1,4-Bis(2-(4-butylphenyl)ethinyl)-2-cyclopropylbenzol 10.1) 1,4-Dichlor-2-cyclopropylbenzol 2

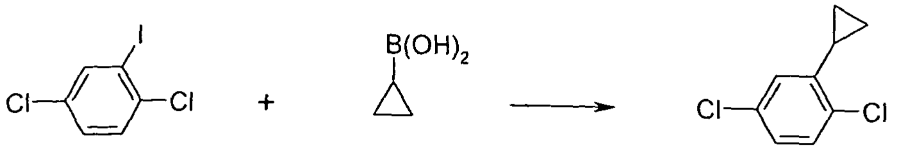

2

20 g (73 mmol) 1,4-Dichlor-2-iodbenzol, 9,4 g (110 mmol) Cyclopropylboronsäure, 32 g (147 mmol) Kaliumphosphat, 421 mg (0,7 mmol) Bis(dibenzylidenaceton)palladium(0) ($Pd(dba)_2$) und 1096 mg (1,5 mmol) 1,2,3,4,5-Pentaphenyl-1-(di-t-butylphosphan)ferrocen (CTC-Q-PHOS) werden in 600 ml Toluol gelöst und über Nacht auf 100 °C erhitzt. Zu der abgekühlten Lösung werden 100 ml Wasser zugegeben und die Mischung zweimal mit Toluol extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt. Man erhält die Titelverbindung als farblosen Feststoff .

10.2) 1,4-Bis(2-(4-butylphenyl)ethinyl)-2-cyclopropylbenzol (1)

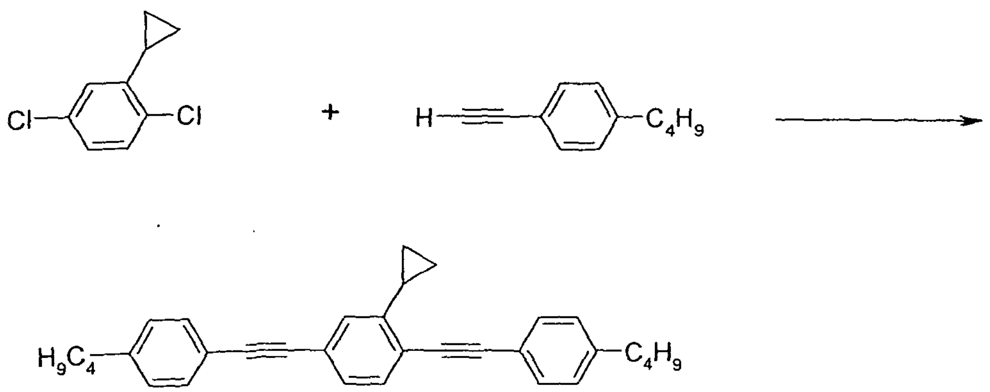

1

5 g (26 mmol) 1,4-Dichlor-2-cyclopropylbenzol, 9,4 g (58 mmol) 1-n-Butyl-4-ethinylbenzol, 19 g (58 mmol) Cesiumcarbonat, 69 mg (0,3 mmol) Bis(acetonitril)palladium(II)clorid und 382 mg (0,8 mmol) 2-Dicyclohexylphosphino-2',4',6'-triisopropybiphenyl werden unter Stickstoff in 80 ml Dioxan gelöst und über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt und aus Ethanol umkristallisiert. Man erhält die Titelverbindung **1** als Feststoff.

$^1$H-NMR (250 MHz, $CDCl_3$) : 7.4-7.08(11H, m); 2.5 (4H, m); 1.6-1.3 (9H, m); 0.96 (6H, m); 0.6-0.4 (4H, m).

Phasenfolge: K 72°C N 84,5°C I; $\Delta n$ = 0,378; $\Delta\varepsilon$ = 1,5.

Substanzbeispiel 12

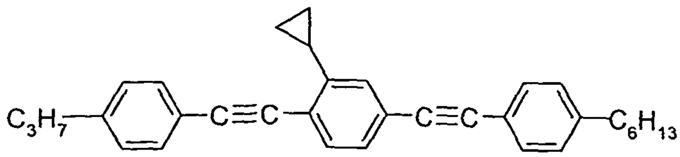

Phasenfolge: $T_g$ -43°C K 46°C N 86,0°C I; $\Delta n$ = 0,379; $\Delta\varepsilon$ = 1,1.

Substanzbeispiel 13

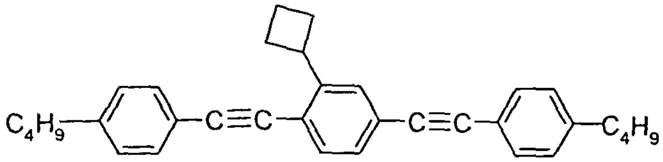

Synthesebeispiel 13: 1,4-Bis(2-(4-butylphenyl)ethinyl)-2-cyclobutylbenzol 3

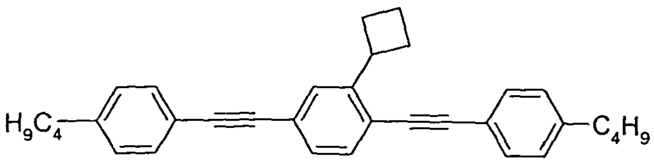

3

13.1) 1-(2,5-Dibromphenyl)-cyclobutanol 4

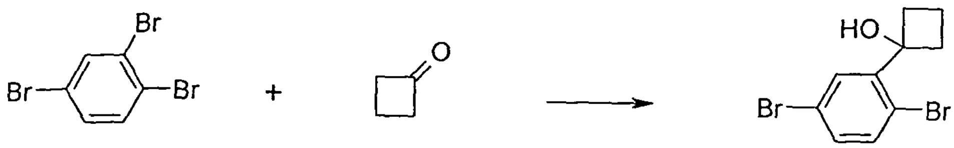

4

21,09 g (67 mmol) 1,2,4-Tribrombenzol werden unter Stickstoff in 100 ml THF vorgelegt, auf -45 °C gekühlt und eine Lösung (1,3 M) von 51,54 ml (67 mmol) Isopropylmagnesiumchlorid-Lithiumchlorid-Komplex in THF zugetropft. Nach 1 Stunde wird der Ansatz auf -10°C erwärmt und bei dieser Temperatur werden 5 ml (66,34 ml) Cyclobutanon zugetropft. Der Ansatz wird auftauen gelassen und mit gesät. $NH_4Cl$-Lösung versetzt, mit Methyl-t-butylether extrahiert, die organische Phase über Natriumsulfat getrocknet, filtriert, das Lösungsmittel im Vakuum entfernt und der Rückstand mit Dichlormethan über Kieselgel filtriert. Man erhält von **4,** das ohne weitere Aufreinigung in der nächsten Stufe eingesetzt wird.

13.2) 1,4-Dibrom-2-cyclobutylbenzol **5**

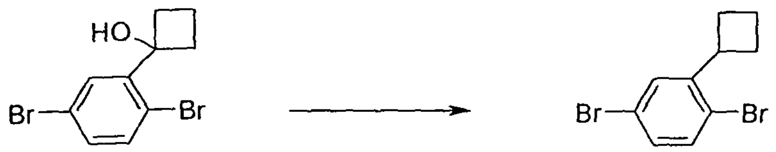

5

14,5 g (47.39 mmol) von **4** werden unter Stickstoff in 50 ml THF gelöst und bei Raumtemperatur werden 35,72 ml (284,4 mmol) Bortrifluorid-Diethylether-Komplex zugetropft. und portionsweise 12.54 g (189,6 mmol) Natriumcyanoborhydrid. Der Ansatz wird über Nacht unter Rückfluss erhitzt. Der Ansatz wird auf Raumtemperatur abkühlen gelassen, mit ges. $NaHCO_3$-Lösung versetzt, mit Methyl-t-butylether extrahiert, die organische Phase über Natriumsulfat getrocknet, filtriert, das Lösungsmittel i. Vak. entfernt und der Rückstand mit 1-Chlorbutan über Kieselgel filtriert. Man erhält **5** als gelbe Flüssigkeit.

13.3) 1,4-Bis(2-(4-butylphenyl)ethinyl)-2-cyclobutylbenzol **3**

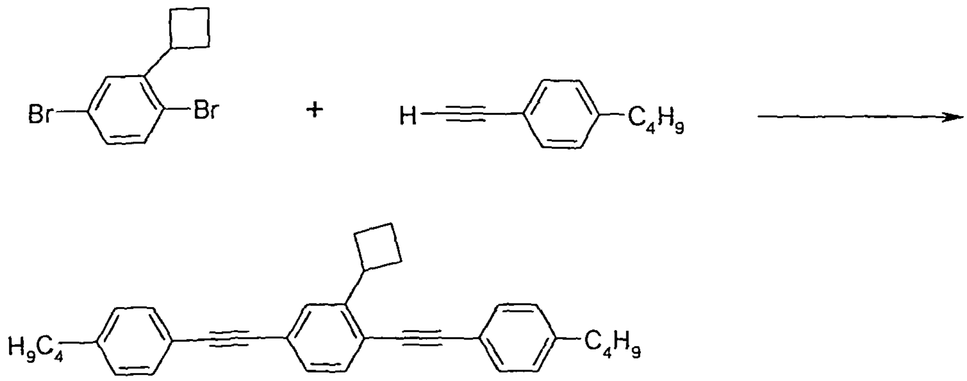

3

7,8 g (47,0 mmol) 1-Butyl-4-ethinylbenzol werden unter Stickstoff in 100 ml THF vorgelegt, auf -78 °C gekühlt und 63,32 ml (63,20 mmol) einer 1 M Lösung von Lithiurnbis(trimethylsilyl)amid in Hexan zugetropft. Nach 1 Stunde werden 63,22 ml (63,20 mmol) einer 1 M Lösung 9-Methoxy-9-BBN in Hexan zugegeben und bei -78 °C 2 Stunden rühren gelassen. In einer zweiten Apparatur werden 6,8 g (23,45 mmol) von **5,** 0,916 g (1,0 mmol) Tris(dibenzylideneacetone)dipalladium(0) und 1,64 g (4,0 mmol) 2-Dicyclohexylphosphino-2'-6'-dimethoxybiphenyl in 100 ml THF vorgelegt. Die erste Lösung wird langsam zugetropft und der Ansatz über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt und aus Isopropanol umkristallisiert. Man erhält die Titelverbindung **3** als Feststoff.

Phasenfolge: $T_g$ -39°C K 69°C N 70,1°C I; $\Delta n$ = 0,359; $\Delta\varepsilon$ = 0,9.

<u>Substanzbeispiel 14</u>

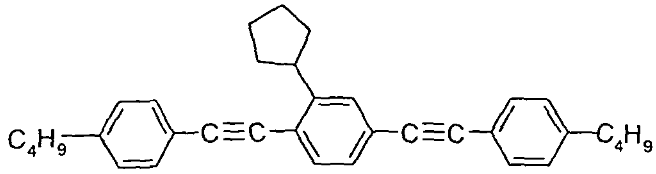

Phasenfolge: $T_g$ -36°C K 57°C N(?) (7,0)°C I; Δn = 0,334; Δε = -0,1.

Substanzbeispiel 15

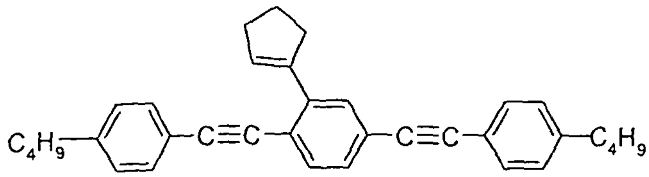

Phasenfolge: $T_g$ -34°C K 47°C N 53,1°C I; Δn = 0,337; Δε = 0,0.

Substanzbeispiel 16

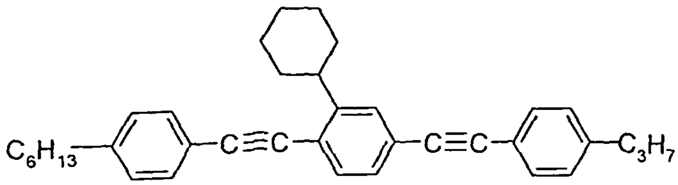

Synthesebeispiel 16: 2-Cyclohexyl-4-(4-hexyl-phenylethinyl)-1-(4-propylphenyl-ethinyl)benzol 6

16.1) 4-chloro-2-cyclohexyl-benzol-Trifluoro-methanesulfonat **7**

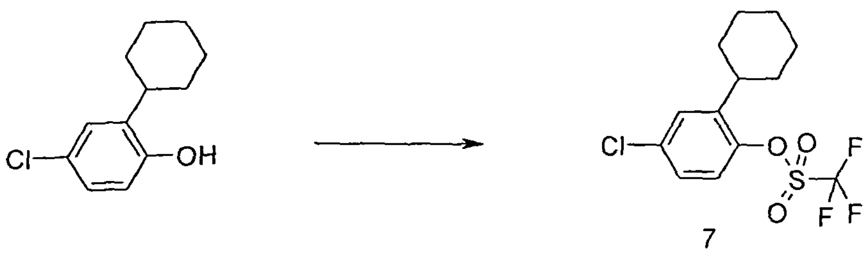

7

19 g (90,2 mmol) 4-Chlor-2-cyclohexylbenzol werden in 264 ml Dichlormethan gelöst, auf -5 °C gekühlt, 4.64 ml (33,18 mmol) Triethylamine und 223 mg (1,8 mmol) 4-(Dimethylamino)pyridin zugetropft. Der Ansatz wird über Nacht bei Raumtemperatur gerührt und mit Dichloromethan über Kieselgel filtriert. Man erhält das Produkt **7,** das ohne weitere Aufreinigung in der nächsten Stufe eingesetzt wird.

16.2) (4-Chlor-2-cyclohexyl-phenylethinyl)trimethylsilan **8**

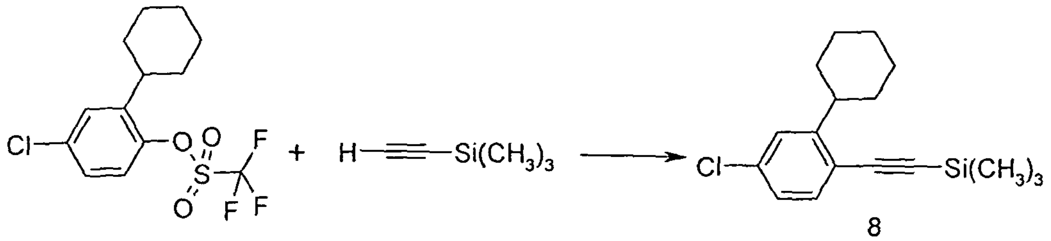

8

21 g (61,3 mmol) **7**, 25,8 ml (183,8 mmol) Trimethylsilylacetylen, 2,15 g (3 mmol) Bis(tripheny)phosphin)palladium(II)chlorid und 21,2 ml (153,2 mmol) Triethylaminl werden unter Stickstoff in 60 ml N,N-Dimethylformamid gelöst und über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt. Man erhält das Produkt **8**, das ohne weitere Aufreinigung in der nächsten Stufe eingesetzt wird.

16.3) 4-Chlor-2-cyclohexyl-1-ethinyl-benzol 9

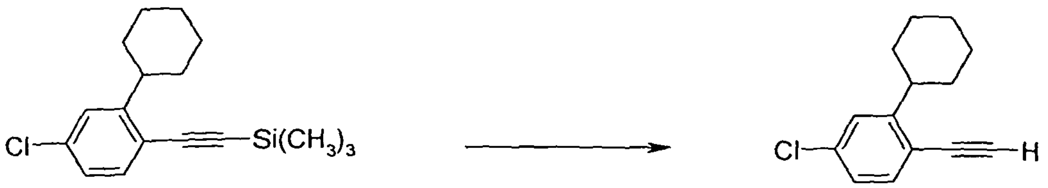

9

16,6 g (57,1 mmol) **8** werden in 154 ml Tetrahydrofuran gelöst, auf 0 °C gekühlt und 1 M Lösung von Tetra-n-butylammoniumfluorid (68,48 mmol) zugetropft. Der Ansatz wird über Nacht bei Raumtemperatur gerührt, mit Wasser versetzt, mit Methyl-t-butylether extrahiert, die organische Phase über Natriumsulfat getrocknet, filtriert, das Lösungsmittel im Vakuum entfernt und der Rückstand mit Heptan/Toluol über Kieselgel filtriert. Man erhält das Produkt **9**, das ohne weitere Aufreinigung in der nächsten Stufe eingesetzt wird.

16.4) 4-Chlor-2-cyclohexyl-1-p-tolylethinyl-benzol **10**

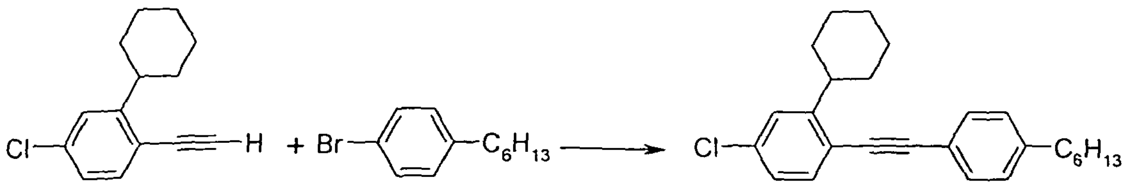

10

6,6 g (30,17 mmol) **9,** 7,28 g (30,17 mmol) 1-Brom-4-hexylbenzol, 21,63 g (66,39 mmol) Cesiumcarbonat, 78 mg (0,3 mmol) Bis(acetonitril)-palladium(II)clorid und 431 mg (0,9 mmol) 2-Dicyclohexylphosphino-2',4',6'-triisopropybiphenyl werden unter Stickstoff in 90 ml Dioxan gelöst und über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt.

16.5) 2-Cyclohexyl-4-(4-hexyl-phenylethinyl)-1-(4-propylphenylethinyl)-benzol **6**

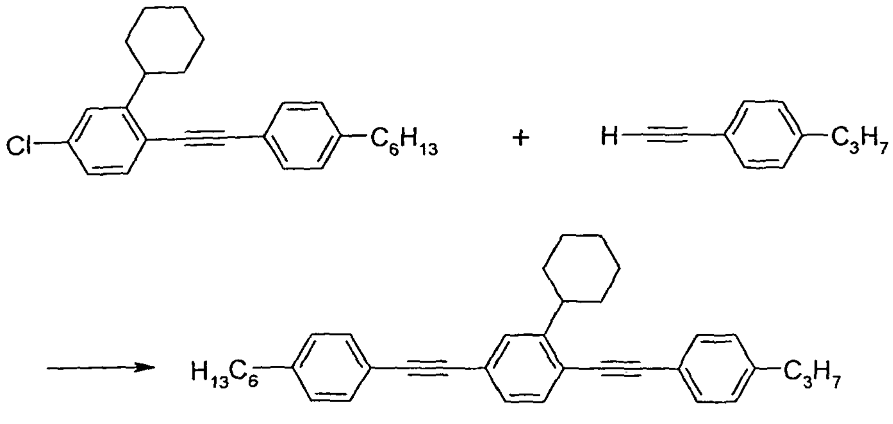

6

4,5 g (11,87 mmol) **10**, 1,7 g (11,87 mmol) 1-*n*-Propyl-4-ethinylbenzol, 8,5 g (26,12 mmol) Cesiumcarbonat, 30 mg (0,1 mmol) Bis(acetonitril)palladium(II)clorid und 170 mg (0,35 mmol) 2-Dicyclohexylphosphino-2',4',6'-triisopropybiphenyl werden unter Stickstoff in 35 ml Dioxan gelöst und über Nacht auf 100 °C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt. Man erhält die Titelverbindung **6** als Feststoff.

Phasenfolge: $T_g$ -23°C I; $\Delta n$ = 0,294; $\Delta\varepsilon$ = -0,6.

Substanzbeispiel 17

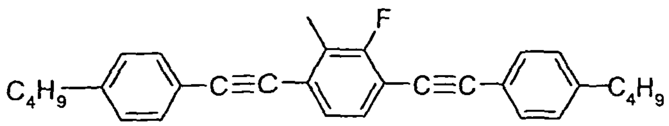

Die Verbindung wird analog zu Beispiel 11 hergestellt.

Phasenfolge: K 90°C N 193,9°C I; $\Delta n$ = 0,435; $\Delta\varepsilon$ = 3,0.

Substanzbeispiel 18

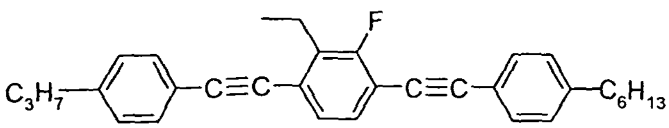

Die Verbindung wird analog zu Beispiel 11 hergestellt.

Phasenfolge: K 53°C N 143,5°C I; $\Delta n$ = 0,401; $\Delta\varepsilon$ = 2,5.

Substanzbeispiel 19

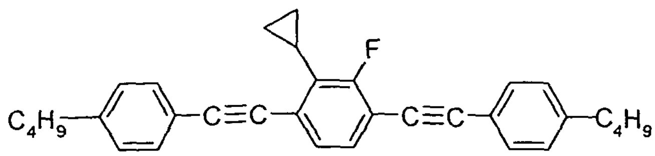

Die Verbindung wird analog zu Beispiel 11 hergestellt.
Phasenfolge: $T_g$ -49 K 32°C N 126,0°C I; Δn = 0,373; Δε = 1,6.

Substanzbeispiel 20

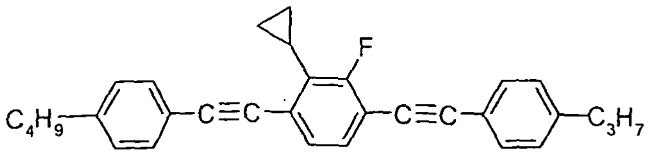

Substanzbeispiel 21

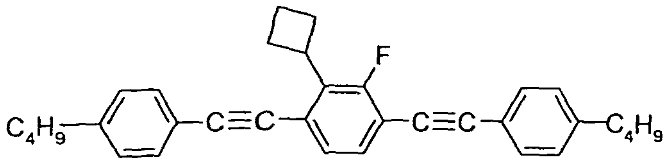

Phasenfolge: $T_g$ -45°C C 60°C N 89,1°C I; Δn = 0,348; Δε = 1,3.

Substanzbeispiel 22

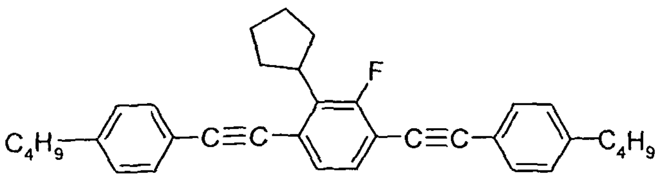

Phasenfolge: $T_g$ -32°C K 66°C N (44,1)°C I; Δn = 0,322; Δε = 0,6.

Substanzbeispiel 23

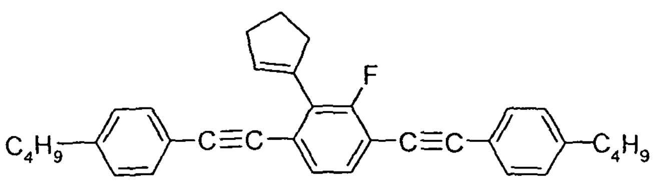

Phasenfolge: $T_g$ -37°C K 52°C N 78,2°C I; Δn = 0,339; Δε = 0,9.

Synthesebeispiel 24:

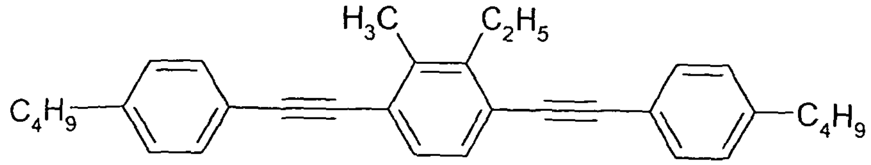

Schritt 24.1

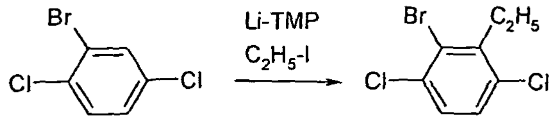


25,4 g 2-Brom-1,4-dichlorbenzol, 8,9ml Iodethan und 13,3ml DMPU werden in 230 ml THF gelöst und bei -70°C mit einer Lösung von 16,2 g Lithiumtetramethylpiperidid in THF tropfenweise versetzt. Nach weiteren 2 h bei -70°C lässt man das Reaktionsgemisch auf Umgebungstemperatur erwärmen, hydrolysiert den Ansatz mit Wasser und arbeitet extraktiv auf. Das Rohprodukt wird durch fraktionierte Destillation gereinigt.
Kp : 73°C/0,1bar. Farblose Flüssigkeit.

Schritt 24.2

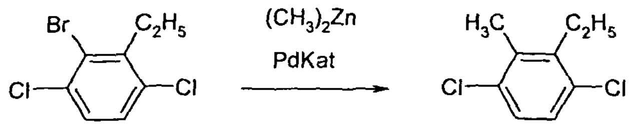


2,4 g wasserfreies Zinkbromid werden in 50ml THF mit 12,5 ml 5%iger Lösung von Methyllithium in Diethylether bei 25-40°C versetzt. Danach setzt man 0,3 g $PdCl_2$-dppf, Bis(diphenylphosphinoferrocen)palladiumdichlorid zu, erhitzt zum Sieden und tropft 4,6 g des Produkts des Schritts 1.1, gelöst in etwas THF, zu. Anschließend wird das Reaktionsgemisch für 15 h unter Rückfluss erhitzt. Man hydrolysiert den Ansatz mit Wasser und arbeitet extraktiv auf. Das Rohprodukt wird chromatographisch (Pentan / Kieselgel) aufgereinigt. Farblose Flüssigkeit.

Schritt 24.3

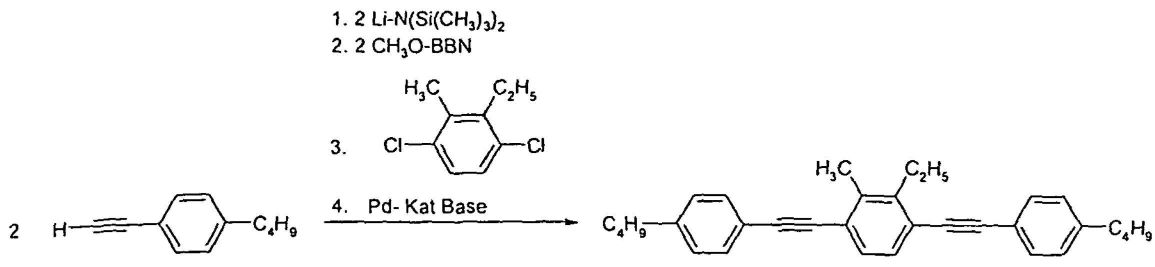


2,4g 4-Butylphenylacetylen werden in 30ml THF vorgelegt und auf -78 °C abgekühlt. Zu dieser Lösung werden 14,3 ml einer 1 M Lösung von Lithium-bis(trimethylsilyl)amid in Hexan zugetropft und bei -78°C 1 h nachreagieren lassen. Danach werden 14,3 ml einer 1 M Lösung von Methoxy-9-BBN zugetropft und 2 h bei -78°C nachgerührt. In einer zweiten Apparatur wurden 1,0g des Produkts des letzten Schritts, gelöst in 40 ml THF, mit dem Katalysator aus 0,2g Tris(dibenzylideneaceton)dipalladium und 0,35 g 2-Dicyclohexylphosphino-2'-6'-dimethoxybiphenyl, vorgelegt, und die Reaktionslösung des ersten Umsatzes bei Raumtemperatur zugesetzt. Es wird 15 h zum Sieden erhitzt. Man hydrolysiert den Ansatz mit Wasser und arbeitet extraktiv auf. Das Rohprodukt wird chromatographisch (Pentan / Kieselgel) aufgereinigt.

Nach umkristallisieren aus Pentan erhält man das gereinigte Titelprodukt.

Phasenfolge: K 45 N 180 1.

Substanzbeispiel 25:

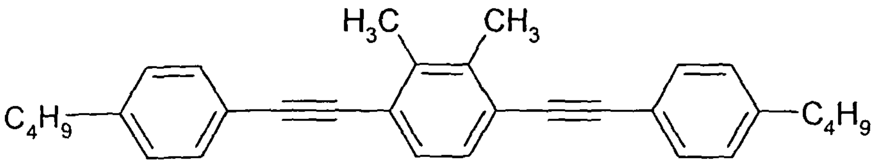

Die Verbindung wird analog zu Beispiel 24 hergestellt.

Phasenfolge: K 118 N 222 I; $\Delta n$ = 0,435; $\Delta\varepsilon$ = 2,6.

Substanzbeispiel 26:

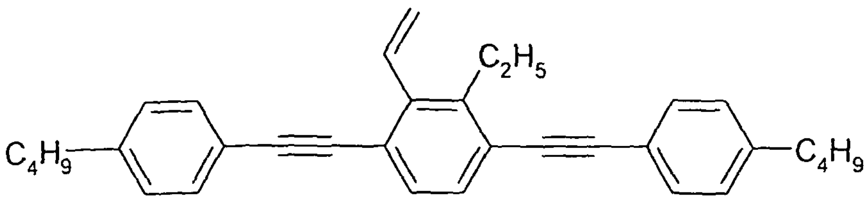

Die Titelverbindung wird analog zu Beispiel 24 hergestellt.

Phasenfolge: K 41 N 161 I.

Substanzbeispiel 27

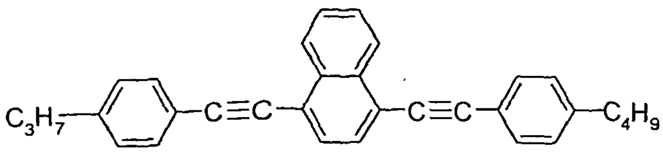

Synthesebeispiel 27:

27.1) Synthese von 1-Iod-4-Bromnaphthalin

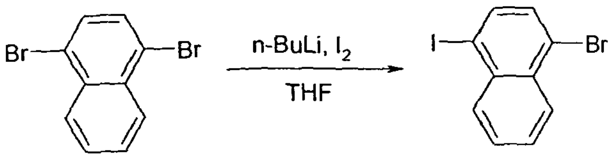


100 g (350 mmol) 1,4-Dibromnaphthalin werden in 1 l THF vorgelegt, auf -70 °C gekühlt und tropfenweise mit 235 ml n-BuLi (1,6 M in Hexan, 370 mmol) versetzt. Nach 1 h werden 103 g $I_2$ (406 mmol) in 250 ml THF zugetropft, 2 h bei -70 °C nachgerührt, auf 0 °C erwärmt und durch die Zugabe von 50 ml (644 mmol) wässriger $NaHSO_3$-Lösung (w = 39 %) gequencht. Die Phasen werden getrennt und die wässrige Phase einmal mit MTB extrahiert. Die vereinigten

organischen Phasen werden mit gesättigter Natriumchloridlsg. gewaschen, über Natriumsulfat getrocknet, abfiltriert und am Rotationsverdampfer eingeengt. Der Rückstand wird säulenchromatographisch ($SiO_2$, Heptan) gereinigt, die weitere Aufreinigung erfolgt durch Umkristallisation aus Isopropanol. 1-Iod-4-Bromnaphthalin wird als gelber Feststoff erhalten.

27.2) Synthese von 1-Brom-4-(4-*n*-propyl-phenylethynyl)-naphthalin

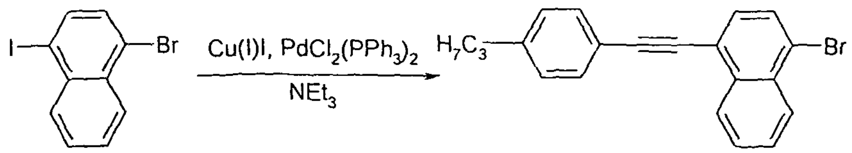


15,3 g (43,6 mmol) 1-Iod-4.-Bromnaphthalin und 7,25 g (5,3 mmol) 4-n-Propylphenylacetylen werden in 200 ml $NEt_3$ vorgelegt, mit 170 mg (0,9 mmol) Kupfer(I)iodid und 600 mg (0,9 mmol) Bis(triphenylphosphin)-palladium(II)-chlorid versetzt und 30 Minuten refluxiert. Der Ansatz wird abgekühlt, mit Wasser und Heptan versetzt und die Phasen getrennt. Die organische Phase wird mit gesättigter Natriumchloridlsg. gewaschen, über Natriumsulfat getrocknet, abfiltriert und am Rotationsverdampfer eingeengt. Der Rückstand wird säulenchromatographisch ($SiO_2$, Heptan) gereinigt, die weitere Aufreinigung erfolgt durch Umkristallisation aus Isopropanol.

27.3) Synthese von 1-(4-*n*-Butyl-phenylethynyl)-4-(4-*n*-propyl-phenylethynyl)-naphthalin

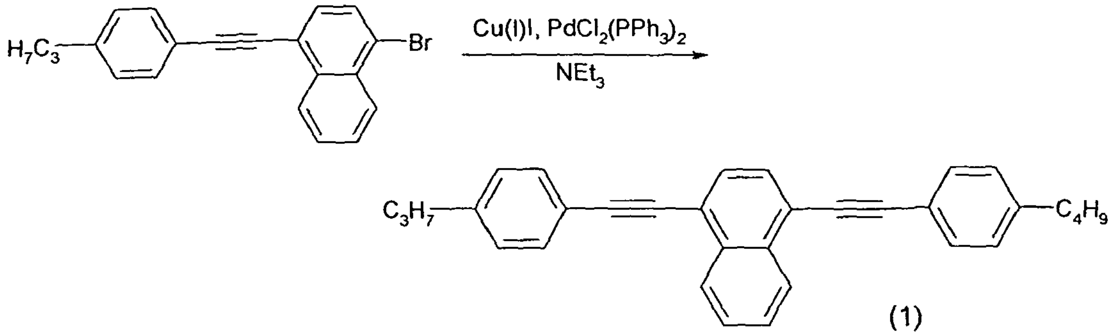


(1)

2,35 g (6,3 mmol) 1-Brom-4-(4-*n*-propyl-phenylethynyl)-naphthalin und 1,33 g (8,4 mmol) 4-*n*-Butylphenylacetylen werden in 40 ml $NEt_3$ vorgelegt, mit 60 mg (0,3 mmol) Kupfer(I)iodid und 200 mg (0,3 mmol) Bis(triphenylphosphin)-palladium(II)-chlorid versetzt und 18 h refluxiert.

Der Ansatz wird abgekühlt, mit Wasser und Heptan versetzt und die Phasen getrennt. Die organische Phase wird mit gesättigter Ammoniumchloridlösung und anschließend mit gesättigter Natriumchloridlsg. gewaschen, über Natriumsulfat getrocknet, abfiltriert und am Rotationsverdampfer eingeengt. Der Rückstand der Verbindung **(1)** wird säulenchromatographisch ($SiO_2$, Heptan) gereinigt, die weitere Aufreinigung erfolgt durch Umkristallisation aus Isopropanol.

**MS (EI):** m/z(%) = 426 (100, $M^+$), 397 (11, $[M - Ethy]^+$), 383 (16, $[M-Propyl]^+$), 354 (18, $[M - Ethy-Propyl]^+$), 177 (14, $[M - Ethy-Propyl]^{2+}$).

Phasenfolge: K 78 N 191 I: $\Delta n = 0{,}450$; $\Delta\varepsilon = 2{,}9$.

Substanzbeispiel 28

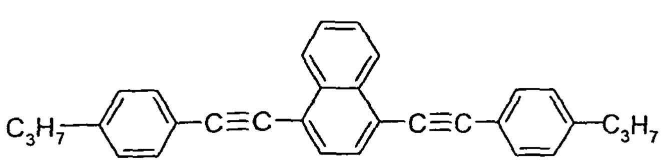

Die Verbindung wird analog zu Beispiel 27 hergestellt.

Phasenfolge: K 108°C N 194 °C I.

Substanzbeisaiel 29

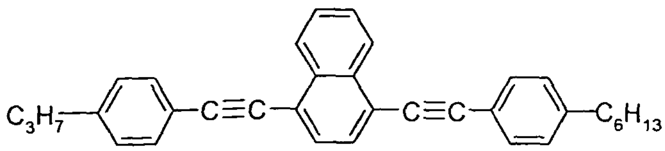

Die Verbindung wird analog zu Beispiel 27 hergestellt.

Phasenfolge: K 63°C N 1771,7°C I; Δn = 0,435; Δε = 2,3.

Substanzbeispiel 30

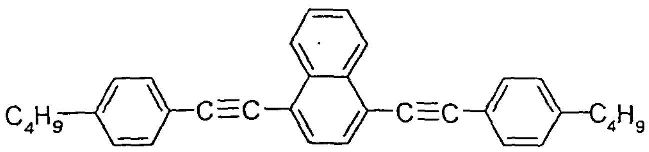

Die Verbindung wird analog zu Beispiel 27 hergestellt.

Phasenfolge: K 76°C N 176,2°C I; Δn = 0,427; Δε = 2,4.

Substanzbeispiel 31

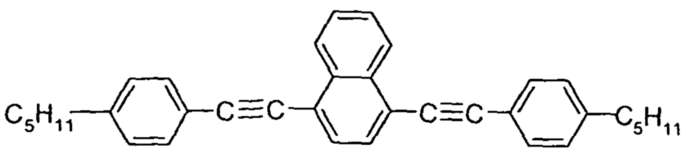

Die Verbindung wird analog zu Beispiel 27 hergestellt.

Phasenfolge: K 100°C N 162°C I.

Substanzbeispiel 32

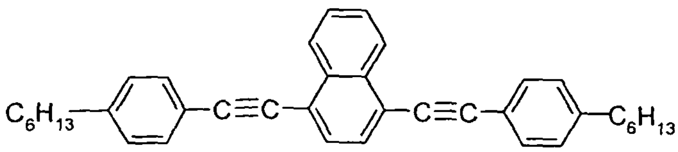

Die Verbindung wird analog zu Beispiel 27 hergestellt.

Phasenfolge: K 61 °C N 139°C I.

Substanzbeispiel 33

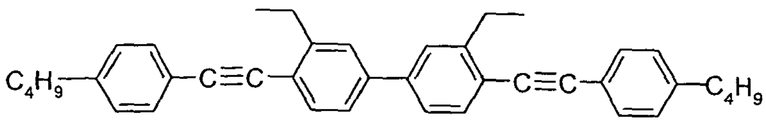

Diese Verbindung wird gemäß dem rechten Reaktionspfad des Schemas 13 analog zu den vorhergehenden Verbindungen hergestellt.

Phasenfolge: K 85°C N 202,4°C I; $\Delta n$ = 0,446; $\Delta\varepsilon$ = 2,0.

Substanzbeispiel 34

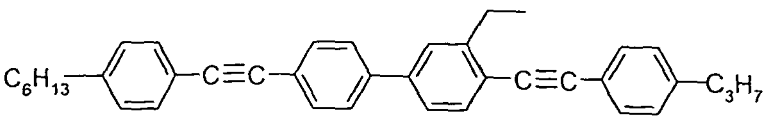

Die Verbindung wird analog zu Beispiel 33 hergestellt.

Phasenfolge: K 112°C N 253,5°C I; $\Delta n$ = 0,484; $\Delta\varepsilon$ = 4,1.

Substanzbeispiel 35

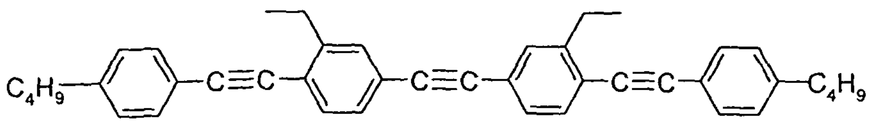

Diese Verbindung wird gemäß dem linken Reaktionspfad des Schemas 13 analog zu den vorhergehenden Verbindungen hergestellt.

Phasenfolge: K 93°C N 212,4°C I; $\Delta n$ = 0,527; $\Delta\varepsilon$ = 0,8.

Anwendungsbeispiele

Vergleichsbeispiel 1

Es wird eine flüssigkristalline Substanz mit der Kurzbezeichnung PTP(2)TP-6-3 nach Hsu, C. S. Shyu, K. F., Chuang, Y. Y. and Wu, S.-T., Liq. Cryst., 27 (2), (2000), p. 283-287 hergestellt und bezüglich ihrer physikalischen Eigenschaften, insbesondere im $\mu$-Wellenbereich, untersucht. Die Verbindung hat eine nematische Phase und einen Klärpunkt (T(N,I)) von 114,5°C. Weitere physikalische Eigenschaften bei 20°C sind: $n_e$(589,3 nm) = 1,8563; $\Delta n$(589,3 nm) = 0,3250; $\varepsilon_{\|}$(1 kHz) = 4,3; $\Delta\varepsilon$(1 kHz) = 1,8 und $\gamma_1$ = 2.100 mPa·s. Die Verbindung eignet sich für Anwendungen im Mikrowellenbereich und/oder Millimeterwellenbereich, insbesondere für Phasenschieber.

Tabelle 1: Eigenschaften der Verbindung PTP(2)TP-6-3 bei 19 GHz

| T/°C | $\varepsilon_{r,\|}$ | $\varepsilon_{r,\perp}$ | $\tau$ | tan $\delta_{\varepsilon,r.\|}$ | tan $\delta_{\varepsilon,r.\perp}$ | $\eta$ |
|---|---|---|---|---|---|---|
| 20 | 3,35 | 2,42 | 0,278 | 0,0029 | 0,0061 | 45,2 |

Tabelle 2: Vergleich der Eigenschaften der verschiedenen Beispielen bei 19 GHz und 20°C

| Beispiel | FK | $\varepsilon_{r,\parallel}$ | $\varepsilon_{r,\perp}$ | $\tau$ | tan $\delta_{\varepsilon\ r.Max.}$ | $\eta$ |
|---|---|---|---|---|---|---|
| Vergleich | P2-6-3* | 3,35 | 2,42 | 0,278 | 0,0061 | 45,2 |
| 1 | M-1 | 3,41 | 2,47 | 0,275 | 0,0059 | 46,4 |
| 2 | M-2 | 3,44 | 2,47 | 0,280 | 0,0070 | 40,1 |
| 3 | M-3 | n.z.b. | n.z.b. | n.z.b. | n.z.b. | n.z.b. |
| 4 | M-4 | n.z.b. | n.z.b. | n.z.b. | n.z.b. | n.z.b. |
| 5 | M-5 | 3,50 | 2,48 | 0,290 | 0,0044 | 66 |
| 6 | M-6 | n.z.b. | n.z.b. | n.z.b. | n.z.b. | n.z.b. |
| 7 | M-7 | n.z.b. | n.z.b. | n.z.b. | n.z.b. | n.z.b. |
| 8 | M-8 | 3,38 | 2,42 | 0,285 | 0,0057 | 50,4 |
| 9 | M-9 | 3,34 | 2,41 | 0,277 | 0,0060 | 46,4 |
| 10 | M-10 | 3,34 | 2,40 | 0,281 | 0,0060 | 46,7 |
| 11 | M-11 | n.z.b. | n.z.b. | n.z.b. | n.z.b. | n.z.b. |
| 12 | M-12 | n.z.b. | n.z.b. | n.z.b. | n.z.b. | n.z.b. |
| Bemerkungen: *) P2-6-3: PTP(2)TP-6-3, FK: Flüssigkristall und n.z.b.: noch zu bestimmen. | | | | | | |

Beispiel 1

Es wird eine Flüssigkristallmischung M-1 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 136.5 | °C |
| Nr. | Abkürzung | | $n_e$ (20°C, 589,3 nm) | = 1.553 | |
| 1 | PTGI(c3)TP-4-4 | 40,0 | $\Delta n$ (20°C, 589,3 nm) | = 0,408 | |
| 2 | PTGI(c4)TP-4-4 | 20,0 | $\varepsilon_{\parallel}$ (20°C, 1 kHz) | = 3,7 | |
| 3 | PTN(1,4)TP-4-4 | 15,0 | $\Delta\varepsilon$ (20°C, 1 kHz) | = 0,9 | |
| 4 | PTN(1,4)TP-3-6 | 25,0 | $k_{11}$ (20°C) | = 11,3 | pN |
| $\Sigma$ | | 100,0 | $k_{33}/k_{11}$ (20°C) | = 3,88 | |
| | | | $V_0$ (20°C) | = 3,71 | V |
| | | | $\gamma_1$ (20°C) | = 2.903 | mPa · s |

Diese Mischung eignet sich sehr gut für Anwendungen im Mikrowellenbereich und/oder Millimeterwellenbereich, insbesondere für Phasenschieber.

Tabelle 3: Eigenschaften der Mischung M-1 bei 19 GHz

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\perp}$ | $\eta$ |
|---|---|---|---|---|---|---|
| 20 | 3,41 | 2,47 | 0,275 | 0,0026 | 0,0059 | 46,4 |

Beispiel 2

Es wird eine Flüssigkristallmischung M-2 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 150 | °C |
| Nr. | Abkürzung | | $n_e$ (20°C, 589,3 nm) | = 1.548 | |
| 1 | PTGI(c3)TP-4-4 | 40,0 | $\Delta$n (20°C, 589,3 nm) | = 0,41 | |
| 2 | PPTUI-3-4 | 20,0 | $\varepsilon_{\|}$ (20°C, 1 kHz) | = 3,7 | |
| 3 | PTN(1,4)TP-4-4 | 15,0 | $\Delta\varepsilon$ (20°C, 1 kHz) | = 1,0 | |
| 4 | PTN(1,4)TP-3-6 | 25,0 | $k_{11}$ (20°C) | = 13,6 | pN |
| $\Sigma$ | | 100,0 | $k_{33}/k_{11}$ > (20°C) | = 3,17 | |
| | | | $V_0$ (20°C) | = 3,93 | V |
| | | | $\gamma_1$ (20°C) | = 2.114 | mPa · s |

Diese Mischung eignet sich sehr gut für Anwendungen im Mikrowellenbereich und/oder Millimeterwellenbereich, insbesondere für Phasenschieber.

Tabelle 4: Eigenschaften der Mischung M-2 bei 19 GHz

| T/°C | $\varepsilon_{r,\|}$ | $\varepsilon_{r,\perp}$ | $\tau$ | tan $\delta_{\varepsilon, r,\|}$ | tan $\delta_{\varepsilon, r, \perp}$ | $\eta$ |
|---|---|---|---|---|---|---|
| 20 | 3,44 | 2,47 | 0,280 | 0,0023 | 0,0070 | 40,1 |

Beispiel 3

Es wird eine Flüssigkristallmischung M-3 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 104 | °C |
| Nr. | Abkürzung | | $n_e$ (20°C, 589,3 nm) | = n.z.b. | |
| 1 | PTP(c3)TP-4-4 | 10,0 | $\Delta$n (20°C, 589,3 nm) | = n.z.b. | |
| 2 | PTP(c3)TP-6-3 | 20,0 | $\varepsilon_{\|}$ (20°C, 1 kHz) | = n.z.b. | |
| 3 | PTP(c4)TP-4-4 | 15,0 | $\Delta\varepsilon$ (20°C, 1 kHz) | = 1,0 | |
| 4 | PTGI(c4)TP-4-4. | 15,0 | $k_{11}$ (20°C) | = n.z.b. | pN |
| 5 | PTGI(e5)TP-4-4 | 20,0 | $k_{33}/k_{11}$ (20°C) | = n.z.b. | |
| 6 | PTPI(2)PP(2)-4-4 | 10,0 | $V_0$ (20°C) | = n.z.b. | V |
| 7 | PTPI(2)P(2)TP-4-4 | 10,0 | $\gamma$1 (20°C) | = n.z.b. | mPa·s |
| $\Sigma$ | | 100,0 | | | |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 5: Eigenschaften der Mischung M-3 bei 19 GHz

| T/°C | $\varepsilon_{r,\|}$ | $\varepsilon_{r, \perp}$ | $\tau$ | tan $\delta_{\varepsilon, r,\|}$ | tan $\delta_{\varepsilon, r,\perp}$ | $\eta$ |
|---|---|---|---|---|---|---|
| 20 | n.z.b. | n.z.b. | n.z.b. | n.z.b. | n.z.b. | n.z.b. |
| Bemerkung: n.z.b.: noch zu bestimmen. | | | | | | |

Beispiel 4

Es wird eine Flüssigkristallmischung M-4 mit der Zusammensetzung und den Eigenschaften wie in der folgenden

Tabelle angegeben hergestellt.

| Zusammensetzung | | | Physikalische Eigenschaften | | |
|---|---|---|---|---|---|
| Verbindung | | | T(N,I) | = 153 | °C |
| Nr. | Abkürzung | | $n_e$ (20°C, 589,3 nm) | = n.z.b. | |
| 1 | PTPI(2)TP(2)TP-4-4 | 10,0 | $\Delta n$ (20°C, 589,3 nm) | = n.z.b. | |
| 2 | GGP-3-CL | 10,0 | $\varepsilon_{\parallel}$ (20°C, 1 kHz) | = 7,7 | |
| 3 | GGP-5-CL | 20,0 | $\Delta\varepsilon$ (20°C, 1 kHz) | = 4,4 | |
| 4 | PPTUI-3-2 | 20,0 | $k_{11}$ (20°C) | = 16,6 | pN |
| 5 | PPTUI-3-4 | 20,0 | $k_{33}$ (20°C) | = 34,5 | pN |
| 6 | PPTUI-4-4 | 20,0 | $V_0$ (20°C) | = 2,06 | V |
| $\Sigma$ | | 100,0 | $\gamma_1$ (20°C) | = 874 | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 6: Eigenschaften der Mischung M-4 bei 19 GHZ

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\perp}$ | $\eta$ |
|---|---|---|---|---|---|---|
| 20 | n.z.b. | n.z.b. | n.z.b. | n.z.b. | n.z.b. | n.z.b. |
| Bemerkung: n.z.b.: noch zu bestimmen. | | | | | | |

Beispiel 5

Es wird eine Flüssigkristallmischung M-5 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N.I) | = 166.5 | °C |
| Nr. | Abkürzung | | $n_e$ (20°C, 589,3 nm) | = n.z.b. | |
| 1 | PTN(1,4)TP-3-3 | 5,0 | $\Delta n$ (20°C, 589,3 nm) | = n.z.b. | |
| 2 | PTN(1,4)TP-5-5 | 5,0 | $\varepsilon_{\parallel}$ (20°C, 1 kHz) | = 3,5 | |
| 3 | PTN(1,4)TP-4-4 | 30,0 | $\Delta\varepsilon$ (20°C, 1 kHz) | = 0,9 | |
| 4 | PTN(1,4)TP-6-6 | 30,0 | $k_{11}$ (20°C) | = 17,2 | pN |
| 5 | PTN(1,4)TP-3-6 | 30,0 | $k_{33}$ (20°C) | = 31,4 | pN |
| $\Sigma$ | | 100,0 | $V_0$ (20°C) | = 4,6 | V |
| | | | $\gamma_1$ (20°C) | = n.z.b. | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 7: Eigenschaften der Mischung M-5 bei 19 GHz

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\perp}$ | $\eta$ |
|---|---|---|---|---|---|---|
| 20 | 3,50 | 2,48 | 0,290 | 0,0017 | 0,0044 | 66 |

Beispiel 6

Es wird eine Flüssigkristallmischung M-6 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 125,5 | °C |
| Nr. | Abkürzung | | $n_e$ (20°C, 589,3 nm) | = n.z.b. | |
| 1 | PTPI(2)P(2)TP-4-4 | 10,0 | $\Delta n$ (20°C, 589,3 nm) | = n.z.b. | |
| 2 | PTP(2)TP-6-3 | 90,0 | $\varepsilon_{\parallel}$ (20°C, 1 kHz) | = 3,4 | |
| $\Sigma$ | | 100,0 | $\Delta\varepsilon$ (20°C, 1 kHz) | = 0,9 | |
| | | | $k_{11}$ (20°C) | = 12,7 | pN |
| | | | $k_{33}/k_{11}$ (20°C) | = 4,1 | |
| | | | $V_0$ (20°C) | = 4,08 | V |
| | | | $\gamma_1$ (20°C) | = n.z.b. | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 8: Eigenschaften der Mischung M-6 bei 19 GHz

| T/°C | $\varepsilon_{r,\parallel}$ | $\varepsilon_{r,\perp}$ | $\tau$ | tan $\delta_{\varepsilon, r.\parallel}$ | tan $\delta_{\varepsilon, r.\perp}$ | $\eta$ |
|---|---|---|---|---|---|---|
| 20 | n.z.b. | n.z.b. | n.z.b. | n.z.b. | n.z.b. | n.z.b. |
| Bemerkung: n.z.b.: noch zu bestimmen. | | | | | | |

Beispiel 7

Es wird eine Flüssigkristallmischung M-7 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 125,5 | °C |
| Nr. | Abkürzung | | $n_e$ (20°C, 589,3 nm) | = n.z.b. | |
| 1 | PTPP(2)TP-4-4 | 10,0 | $\Delta n$ (20°C, 589,3 nm) | = n.z.b. | |
| 2 | PTP(2)TP-6-3 | 90.0 | $\varepsilon_{\parallel}$ (20°C, 1 kHz) | = 3,4 | |
| $\Sigma$ | | 100,0 | $\Delta\varepsilon$ (20°C, 1 kHz) | = 0,9 | |
| | | | $k_{11}$ (20°C) | = 13,0 | pN |
| | | | $k_{33}/k_{11}$ (20°C) | = 4,7 | |
| | | | $V_0$ (20°C) | = 4,10 | V |
| | | | $\gamma_1$ (20°C) | = n.z.b. | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 9: Eigenschaften der Mischung M-7 bei 19 GHz

| T/°C | $\varepsilon_{r,\parallel}$ | $\varepsilon_{r,\perp}$ | T | tan $\delta_{\varepsilon, r.\parallel}$ | tan $\delta_{\varepsilon, r.\perp}$ | $\eta$ |
|---|---|---|---|---|---|---|

(fortgesetzt)

| T/°C | $\varepsilon_{r,\parallel}$ | $\varepsilon_{r,\perp}$ | T | tan $\delta_{\varepsilon, r.\parallel}$ | tan $\delta_{\varepsilon, r.\perp}$ | $\eta$ |
|---|---|---|---|---|---|---|
| 20 | n.z.b. | n.z.b. | n.z.b. | n.z.b. | n.z.b. | n.z.b. |
| Bemerkung: n.z.b.: noch zu bestimmen. | | | | | | |

Beispiel 8

Es wird eine Flüssigkristallmischung M-8 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 127 | °C |
| Nr. | Abkürzung | | $n_e$ (20°C, 589,3 nm) | = n.z.b. | |
| 1 | PTPI(2)TP(2)TP-4-4 | 10,0 | $\Delta n$ (20°C, 589,3 nm) | = n.z.b. | |
| 2 | PTP(2)TP-6-3 | 90,0 | $\varepsilon_{\parallel}$ (20°C, 1 kHz) | = 3,4 | |
| $\Sigma$ | | 100,0 | $\Delta\varepsilon$ (20°C, 1 kHz) | = 0,9 | |
| | | | $k_{11}$ (20°C) | = 13,3 | pN |
| | | | $k_{33}/k_{11}$ (20°C) | = 3,8 | |
| | | | $V_0$ (20°C) | = 4,14 | V |
| | | | $\gamma_1$ (20°C) | = n.z.b. | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 10: Eigenschaften der Mischung M-8 bei 19 GHz

| T/°C | $\varepsilon_{r,\parallel}$ | $\varepsilon_{r,\perp}$ | $\tau$ | tan $\delta_{\varepsilon, r.\parallel}$ | tan $\delta_{\varepsilon, r.\perp}$ | $\eta$ |
|---|---|---|---|---|---|---|
| 20 | 3,38 | 2,42 | 0,285 | 0,0024 | 0,0057 | 50,4 |

Beispiel 9

Es wird eine Flüssigkristallmischung M-9 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 116 | °C |
| Nr. | Abkürzung | | $n_e$ (20°C, 589,3 nm) | = n.z.b. | |
| 1 | PTP(c3)TP-4-4 | 10,0 | $\Delta n$ (20°C, 589,3 nm) | = n.z.b. | |
| 2 | PTP(2)TP-6-3 | 90,0 | $\varepsilon_{\parallel}$ (20°C, 1 kHz) | = n.z.b. | |
| $\Sigma$ | | 100,0 | $\Delta\varepsilon$ (20°C, 1 kHz) | = n.z.b. | |
| | | | $k_{11}$ (20°C) | = n.z.b. | pN |
| | | | $k_{33}/k_{11}$ (20°C) | = n.z.b. | |
| | | | $V_0$ (20°C) | = n.z.b. | V |
| | | | $\gamma_1$ (20°C) | = n.z.b. | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 11: Eigenschaften der Mischung M-9 bei 19 GHz

| T/°C | $\varepsilon_{r,\parallel}$ | $\varepsilon_{r,\perp}$ | $\tau$ | tan $\delta_{\varepsilon, r.\parallel}$ | tan $\delta_{\varepsilon, r.\perp}$ | $\eta$ |
|---|---|---|---|---|---|---|
| 20 | 3,34 | 2,41 | 0,277 | 0,0025 | 0,0060 | 46,4 |

Beispiel 10

Es wird eine Flüssigkristallmischung M-10 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 120 | °C |
| Nr. | Abkürzung | | $n_e$ (20°C, 589,3 nm) | = n.z.b. | |
| 1 | PTGI(c3)TP-4-4 | 10,0 | $\Delta n$ (20°C, 589,3 nm) | = n.z.b. | |
| 2 | PTP(2)TP-6-3 | 90,0 | $\varepsilon_\parallel$ (20°C, 1 kHz) | = n.z.b. | |
| $\Sigma$ | | 100,0 | $\Delta\varepsilon$ (20°C, 1 kHz) | = n.z.b. | |
| | | | $k_{11}$ (20°C) | = n.z.b. | pN |
| | | | $k_{33}/k_{11}$ (20°C) | = n.z.b. | |
| | | | $V_0$ (20°C) | = n.z.b. | V |
| | | | $\gamma_1$ (20°C) | = n.z.b. | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 12: Eigenschaften der Mischung M-10 bei 19 GHz

| T/°C | $\varepsilon_{r,\parallel}$ | $\varepsilon_{r,\perp}$ | $\tau$ | tan $\delta_{\varepsilon, r.\parallel}$ | tan $\delta_{\varepsilon, r.\perp}$ | $\eta$ |
|---|---|---|---|---|---|---|
| 20 | 3,34 | 2,40 | 0,281 | 0,0025 | 0,0060 | 46,7 |

Beispiel 11

Es wird eine Flüssigkristallmischung M-11 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 114 | °C |
| Nr. | Abkürzung | | $n_e$ (20°C, 589,3 nm) | = n.z.b. | |
| 1 | PTP(c4)TP-4-4 | 10,0 | $\Delta n$ (20°C, 589,3 nm) | = n.z.b. | |
| 2 | PTP(2)TP-6-3 | 90,0 | $\varepsilon_\parallel$ (20°C, 1 kHz) | = n.z.b. | |
| $\Sigma$ | | 100,0 | $\Delta_\varepsilon$ (20°C, 1 kHz) | = n.z.b. | |
| | | | $k_{11}$ (20°C) | = n.z.b. | pN |
| | | | $k_{33}/k_{11}$ (20°C) | = n.z.b. | |
| | | | $V_0$ (20°C) | = n.z.b. | V |
| | | | $\gamma_1$ (20°C) | = n.z.b. | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 13: Eigenschaften der Mischung M-11 bei 19 GHz

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\perp}$ | $\eta$ |
|---|---|---|---|---|---|---|
| 20 | n.z.b. | n.z.b. | n.z.b. | n.z.b. | n.z.b. | n.z.b. |
| Bemerkung: n.z.b.: noch zu bestimmen. | | | | | | |

Beispiel 12

Es wird eine Flüssigkristallmischung M-12 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 117 | °C |
| Nr. | Abkürzung | | $n_e$ (20°C, 589,3 nm) | = n.z.b. | |
| 1 | PTGI(c4)TP-4-4 | 10,0 | $\Delta n$ (20°C, 589,3 nm) | = n.z.b. | |
| 2 | PTP(2)TP-6-3 | 90,0 | $\varepsilon_{\parallel}$ (20°C, 1 kHz) | = n.z.b. | |
| $\Sigma$ | | 100,0 | $\Delta_{\varepsilon}$ (20°C, 1 kHz) | = n.z.b. | |
| | | | $k_{11}$ (20°C) | = n.z.b. | pN |
| | | | $k_{33}/k_{11}$ (20°C) | = n.z.b. | |
| | | | $V_0$ (20°C) | = n.z.b. | V |
| | | | $\gamma_1$ (20°C) | = n.z.b. | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 14: Eigenschaften der Mischung M-12 bei 19 GHz

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\tau}$ | $\eta$ |
|---|---|---|---|---|---|---|
| 20 | n.z.b. | n.z.b. | n.z.b. | n.z.b. | n.z.b. | n.z.b. |
| Bemerkung: n.z.b.: noch zu bestimmen. | | | | | | |

## Patentansprüche

1. Flüssigkristallmedium, **dadurch gekennzeichnet, dass** es eine Komponente A enthält, die aus einer oder mehreren Verbindungen der Formel I besteht,

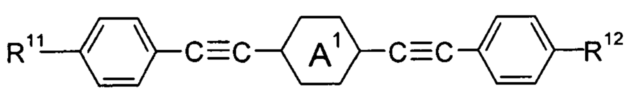

I

worin

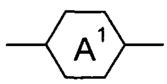

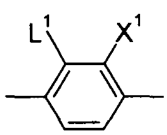

,

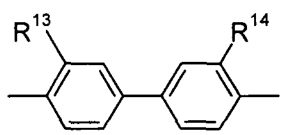

,

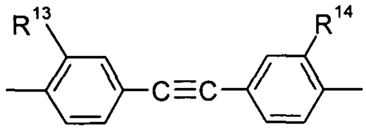 oder 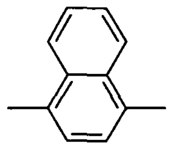 ,

$L^1$ Alkyl mit 1 bis 6 C-Atomen, Cycloalkyl mit 3 bis 6 C-Atomen oder Cycloalkenyl mit 4 bis 6 C-Atomen,
$X^1$ H, Alkyl mit 1 bis 3 C-Atomen oder Halogen,
$R^{11}$ bis $R^{14}$ unabhängig voneinander unfluoriertes Alkyl oder unfluoriertes Alkoxy jeweils mit 1 bis 15 C-Atomen, unfluoriertes Alkenyl, unfluoriertes Alkenyloxy oder unfluoriertes Alkoxyalkyl jeweils mit 2 bis 15 C-Atomen, oder Cycloalkyl, Alkylcycloalkyl, Cycloalkenyl, Alkylcycloalkenyl, Alkycycloalkylalkyl oder Alkycycloalkenylalkyl) jeweils mit bis zu 15 C-Atomen, und alternativ einer von $R^{13}$ und $R^{14}$ oder beide auch H,

bedeuten,
und
die eine oder mehrere Verbindungen der Formel I-1

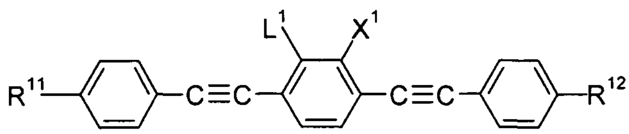 I-1

worin

$X^1$ Alkyl mit 1 bis 3 C-Atomen oder Halogen,

bedeutet, enthält.

**2.** Flüssigkristallmedium nach Anspruch 1, **dadurch gekennzeichnet, dass** die Komponente A eine oder mehrere Verbindungen ausgewählt aus der Gruppe der Verbindungen der Formeln I-1 bis I-4

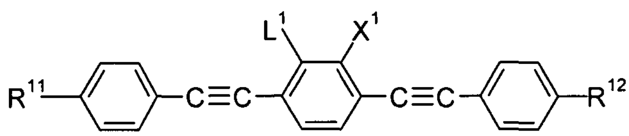 I-1

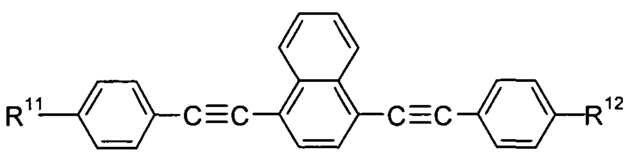 I-2

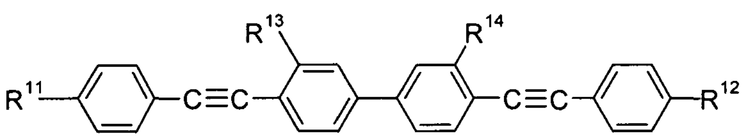 I-3

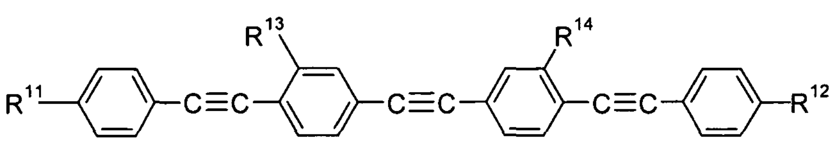 I-4

worin

$X^1$ H bedeutet,

und die anderen die Parameter die in Anspruch 1 angegebenen Bedeutungen haben, enthält.

3. Flüssigkristallmedium nach Anspruch 2, **dadurch gekennzeichnet, dass** die Komponente A eine oder mehrere Verbindungen aus gewählt aus der Gruppe der Verbindungen der Formeln I-2, I-3 und I-4, wie in Anspruch 2 angegeben, enthält.

4. Flüssigkristallmedium nach Anspruch 2 oder 3, **dadurch gekennzeichnet, dass** die Komponente A eine oder mehrere Verbindungen der Formel I-1, wie in Anspruch 2 angegeben, enthält, worin $X^1$ H bedeutet.

5. Flüssigkristallmedium nach einem oder mehreren der Ansprüche 2 bis 4, **dadurch gekennzeichnet, dass** die Komponente A eine oder mehrere Verbindungen der Formel I-1, wie in Anspruch 1 angegeben, enthält, worin $X^1$ F bedeutet.

6. Flüssigkristallmedium nach einem oder mehreren der Ansprüche 1 bis 5, **dadurch gekennzeichnet, dass** es neben einer Komponente A zusätzlich eine oder mehrere Komponenten ausgewählt aus der Gruppe der folgenden Komponenten, Komponenten B bis E, enthält:

    - eine stark dielektrisch positive Komponente, Komponenten B, die eine dielektrische Anisotropie von 10 oder mehr aufweist,
    - eine stark dielektrisch negative Komponente, Komponente C, die eine dielektrische Anisotropie mit einem Betrag von 5 oder mehr aufweist,
    - einer Komponente, Komponente D, die eine dielektrische Anisotropie im Bereich von mehr als -5,0 und von weniger als 10,0 aufweist und aus Verbindungen mit sieben oder mehr fünf- oder sechsgliedrigen Ringen besteht, und
    - eine Komponente, Komponente E, die ebenfalls eine dielektrische Anisotropie im Bereich von mehr als -5,0 und von weniger als 10,0 aufweist und aus Verbindungen mit bis zu sechs fünf- oder sechsgliedrigen Ringen besteht.

7. Flüssigkristallmedium nach Anspruch 6, **dadurch gekennzeichnet, dass** es eine Komponente B enthält.

8. Flüssigkristallmedium nach Anspruch 6 oder 7, **dadurch gekennzeichnet, dass** es eine Komponente C enthält.

9. Flüssigkristallmedium nach einem oder mehreren der Ansprüche 6 bis 8, **dadurch gekennzeichnet, dass** es eine Komponente D enthält.

10. Flüssigkristallmedium nach einem oder mehreren der Ansprüche 1 bis 9, **dadurch gekennzeichnet, dass** es eine oder mehrere Verbindungen der Formel VI

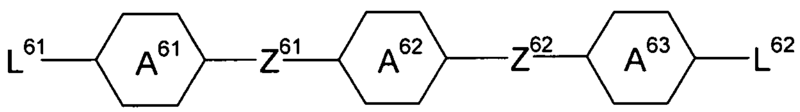

VI

worin

$L^{61}$ $R^{61}$ und, im Fall, dass $Z^{61}$ und/oder $Z^{62}$ *trans*- -CH=CH- oder *trans*- -CF=CF- bedeutet, alternativ auch $X^{61}$,
$L^{62}$ $R^{62}$ und, im Fall, dass $Z^{61}$ und/oder $Z^{62}$ *trans*- -CH=CH- oder *trans*- -CF=CF-, bedeutet, alternativ auch $X^{62}$,
$R^{61}$ und $R^{62}$ unabhängig voneinander H, unfluoriertes Alkyl oder unfluoriertes Alkoxy mit 1 bis 17 C-Atomen oder unfluoriertes Alkenyl, unfluoriertes Alkenyloxy oder unfluoriertes Alkoxyalkyl mit 2 bis 15 C-Atomen,
$X^{61}$ und $X^{62}$ unabhängig voneinander F oder Cl, -CN, -NCS, $-SF_5$, fluoriertes Alkyl oder Alkoxy mit 1 bis 7 C-Atomen oder fluoriertes Alkenyl, Alkenyloxy oder Alkoxyalkyl mit 2 bis 7 C-Atomen,

einer von

$Z^{61}$ und $Z^{62}$ *trans*- -CH=CH-, *trans*- -CF=CF- oder -C=C- bedeutet und der andere unabhängig davon *trans*- -CH=CH-, *trans*- -CF=CF- oder eine Einfachbindung bedeutet, und

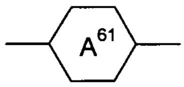 bis 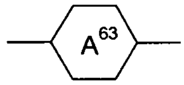

unabhängig voneinander

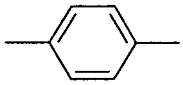 , 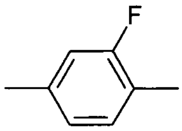 , 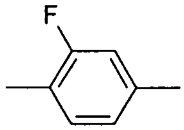 ,

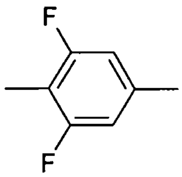 , 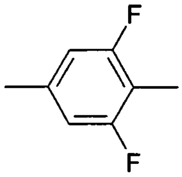 , 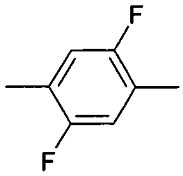 ,

oder 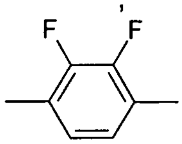 ,

bedeuten,
enthält.

**11.** Verfahren zur Herstellung eines Flüssigkristallmediums nach einem oder mehreren der Ansprüche 1 bis 10, **dadurch gekennzeichnet, dass** eine oder mehrere Verbindungen der Formel I-1, wie in Anspruch 1 angegeben, mit einer oder mehreren weiteren Verbindungen und gegebenenfalls mit einem oder mehreren Additiven gemischt werden.

**12.** Verwendung eines Flüssigkristallmediums nach einem oder mehreren der Ansprüche 1 bis 10 in einem Bauteil für die Hochfrequenztechnik.

**13.** Bauteil für die Hochfrequenztechnik, **dadurch gekennzeichnet, dass** es ein Flüssigkristallmedium nach einem oder mehreren der Ansprüche 1 bis 10 enthält.

**14.** Mikrowellenantennenarray, **dadurch gekennzeichnet**, das es ein oder mehrere Bauteile nach Anspruch 13 enthält.

**15.** Verfahren zum Abstimmen eines Mikrowellenantennenarrays, **dadurch gekennzeichnet, dass** ein Bauteil nach Anspruch 13 elektrisch angesteuert wird.

**16.** Verbindung ausgewählt aus der Gruppe der Verbindungen der Formeln I-3 und I-4,

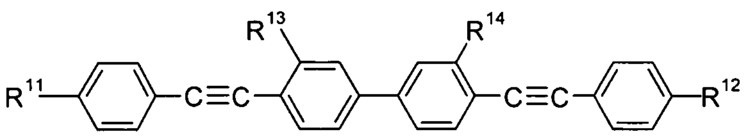 I-3

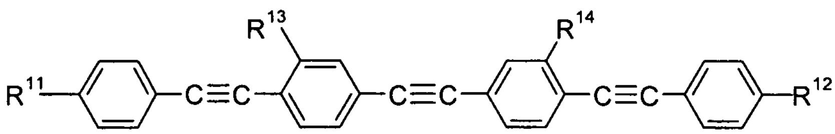 I-4

worin

$R^{11}$ bis $R^{14}$ unabhängig voneinander unfluoriertes Alkyl oder unfluoriertes Alkoxy jeweils mit 1 bis 15 C-Atomen, unfluoriertes Alkenyl, unfluoriertes Alkenyloxy oder unfluoriertes Alkoxyalkyl jeweils mit 2 bis 15 C-Atomen, oder Cycloalkyl, Alkylcycloalkyl, Cycloalkenyl, Alkylcycloalkenyl, Alkycycloalkylalkyl oder Alkycycloalkenylalkyl) jeweils mit bis zu 15 C-Atomen,

bedeuten.

**17.** Verbindung der Formel I-3 gemäß Anspruch 16.

**18.** Verbindung der Formel I-4 gemäß Anspruch 16.

**19.** Verfahren zur Herstellung einer Verbindung ausgewählt aus der Gruppe der Verbindungen der Formeln I-3 und I-4,

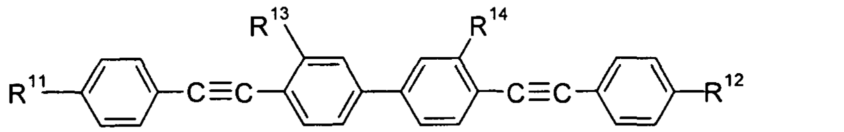

I-3

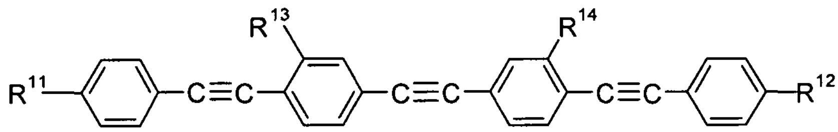

I-4

worin die Parameter die in Anspruch 16 gegeben Bedeutungen haben.

**20.** Verwendung einer oder mehrerer Verbindungen ausgewählt aus der Gruppe der Verbindungen der Formeln I-3 und I-4,

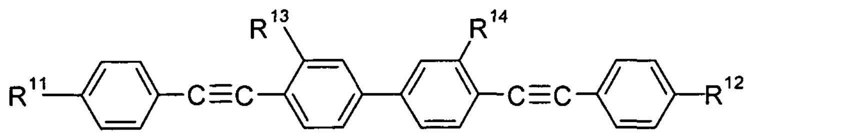

I-3

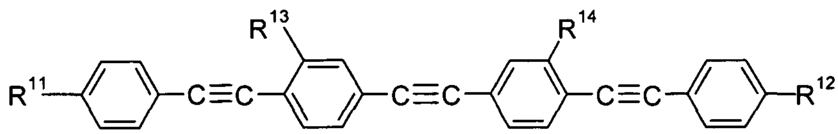

I-4

worin die Parameter die in Anspruch 16 gegeben Bedeutungen haben, in einer Flüssigkristallmischung.

**Claims**

**1.** Liquid-crystal medium, **characterised in that** it comprises a component A which consists of one or more compounds of the formula I,

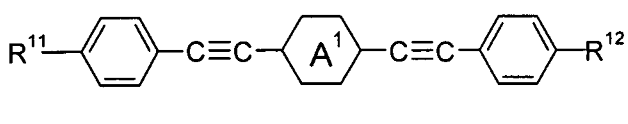

I

in which

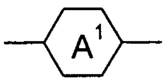 denotes 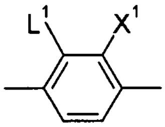, 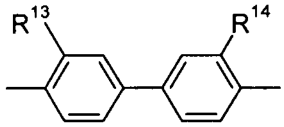,

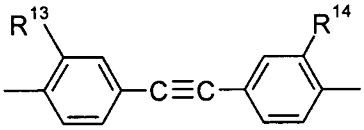 or 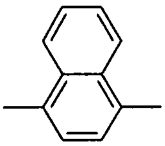,

$L^1$ denotes alkyl having 1 to 6 C atoms, alkenyl having 2 to 6 C atoms, cycloalkyl having 3 to 6 C atoms or cycloalkenyl having 4 to 6 C atoms,

$X^1$ denotes H, alkyl having 1 to 3 C atoms or halogen,

$R^{11}$ to $R^{14}$, independently of one another, denote unfluorinated alkyl or unfluorinated alkoxy, each having 1 to 15 C atoms, unfluorinated alkenyl, unfluorinated alkenyloxy or unfluorinated alkoxyalkyl, each having 2 to 15 C atoms, or cycloalkyl, alkylcycloalkyl, cycloalkenyl, alkylcycloalkenyl, alkylcyclo-alkylalkyl or alkylcycloalkenylalkyl, each having up to 15 C atoms, and alternatively one of $R^{13}$ and $R^{14}$ or both also denote H,

and
which comprises one or more compounds of the formula I-1

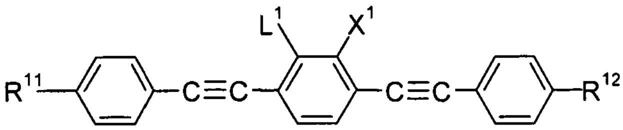 I-1

in which

$X^1$ denotes alkyl having 1 to 3 C atoms or halogen.

2. Liquid-crystal medium according to Claim 1, **characterised in that** component A comprises one or more compounds selected from the group of the compounds of the formulae I-1 to I-4

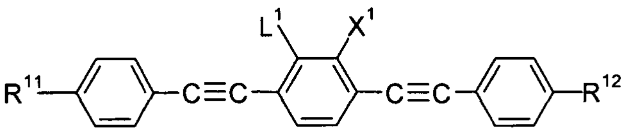 I-1

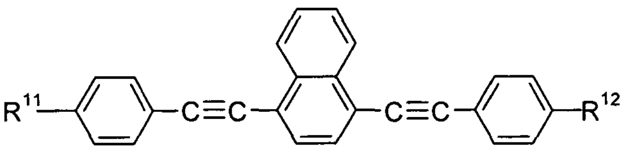 I-2

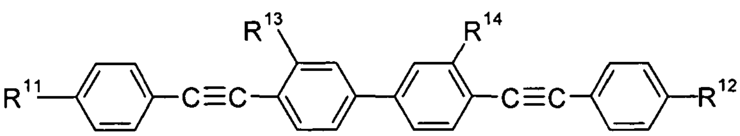 I-3

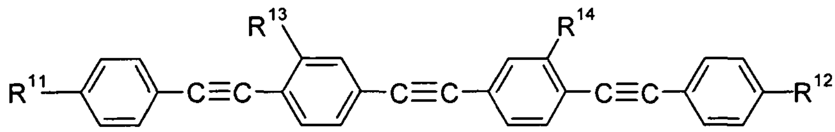

I-4

in which

$X^1$ denotes H,

and the other parameters have the meanings indicated in Claim 1.

3. Liquid-crystal medium according to Claim 2, **characterised in that** component A comprises one or more compounds selected from the group of the compounds of the formulae I-2, I-3 and I-4, as indicated in Claim 2.

4. Liquid-crystal medium according to Claim 2 or 3, **characterised in that** component A comprises one or more compounds of the formula I-1, as indicated in Claim 2, in which $X^1$ denotes H.

5. Liquid-crystal medium according to one or more of Claims 2 to 4, **characterised in that** component A comprises one or more compounds of the formula I-1, as indicated in Claim 1, in which $X^1$ denotes F.

6. Liquid-crystal medium according to one or more of Claims 1 to 5, **characterised in that**, besides a component A, it additionally comprises one or more components selected from the group of the following components, components B to E:

- a strongly dielectrically positive component, component B, which has a dielectric anisotropy of 10 or more,
- a strongly dielectrically negative component, component C, which has a dielectric anisotropy having a value of 5 or more,
- a component, component D, which has a dielectric anisotropy in the range from more than -5.0 to less than 10.0 and consists of compounds having seven or more five- or six-membered rings, and
- a component, component E, which likewise has a dielectric anisotropy in the range from more than -5.0 to less than 10.0 and consists of compounds having up to six five- or six-membered rings.

7. Liquid-crystal medium according to Claim 6, **characterised in that** it comprises a component B.

8. Liquid-crystal medium according to Claim 6 or 7, **characterised in that** it comprises a component C.

9. Liquid-crystal medium according to one or more of Claims 6 to 8, **characterised in that** it comprises a component D.

10. Liquid-crystal medium according to one or more of Claims 1 to 9, **characterised in that** it comprises one or more compounds of the formula VI

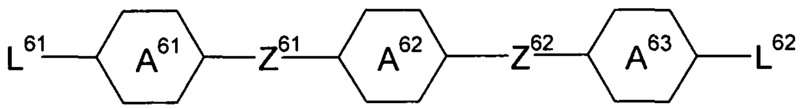

VI

in which

$L^{61}$ denotes $R^{61}$ and, in the case where $Z^{61}$ and/or $Z^{62}$ denote *trans* -CH=CH- or *trans* -CF=CF-, alternatively also denotes $X^{61}$,
$L^{62}$ denotes $R^{62}$ and, in the case where $Z^{61}$ and/or $Z^{62}$ denote *trans* -CH=CH- or *trans* -CF=CF-, alternatively also denotes $X^{62}$,
$R^{61}$ and $R^{62}$, independently of one another, denote H, unfluorinated alkyl or unfluorinated alkoxy having 1 to 17 C atoms or unfluorinated alkenyl, unfluorinated alkenyloxy or unfluorinated alkoxyalkyl having 2 to 15 C atoms,
$X^{61}$ and $X^{62}$, independently of one another, denote F or Cl, -CN, -NCS, $-SF_5$, fluorinated alkyl or alkoxy having 1 to 7 C atoms or fluorinated alkenyl, alkenyloxy or alkoxyalkyl having 2 to 7 C atoms,
one of $Z^{61}$ and $Z^{62}$ denotes *trans* -CH=CH-, *trans* -CF=CF- or -C=C- and the other, independently thereof,

denotes *trans* -CH=CH-, *trans* -CF=CF- or a single bond, and

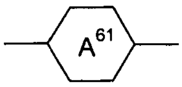 to 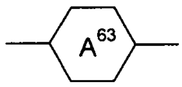 ,

independently of one another, denote

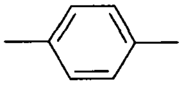 , 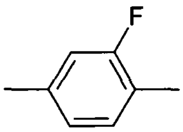 , 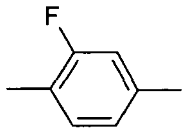 ,

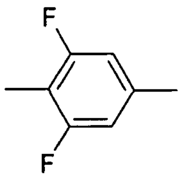 , 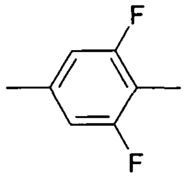 , 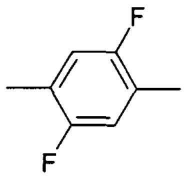 ,

or 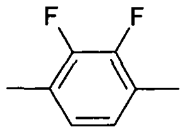 .

**11.** Process for the preparation of a liquid-crystal medium according to one or more of Claims 1 to 10, **characterised in that** one or more compounds of the formula I-1, as indicated in Claim 1, are mixed with one or more further compounds and optionally with one or more additives.

**12.** Use of a liquid-crystal medium according to one or more of Claims 1 to 10 in a component for high-frequency technology.

**13.** Component for high-frequency technology, **characterised in that** it contains a liquid-crystal medium according to one or more of Claims 1 to 10.

**14.** Microwave antenna array, **characterised in that** it comprises one or more components according to Claim 13.

**15.** Process for tuning a microwave antenna array, **characterised in that** a component according to Claim 13 is electrically addressed.

**16.** Compound selected from the group of the compounds of the formulae I-3 and I-4,

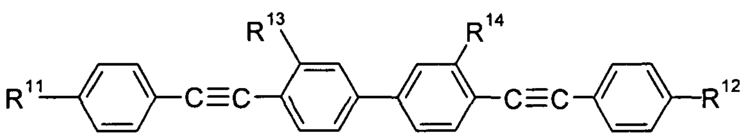 I-3

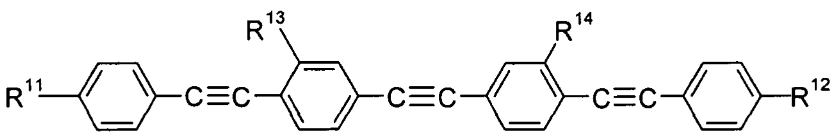 I-4

in which

$R^{11}$ to $R^{14}$, independently of one another, denote unfluorinated alkyl or unfluorinated alkoxy, each having 1 to

15 C atoms, unfluorinated alkenyl, unfluorinated alkenyloxy or unfluorinated alkoxyalkyl, each having 2 to 15 C atoms, or cycloalkyl, alkylcycloalkyl, cycloalkenyl, alkylcycloalkenyl, alkylcycloalkylalkyl or alkylcycloalkenylalkyl, each having up to 15 C atoms.

**17.** Compound of the formula I-3 according to Claim 16.

**18.** Compound of the formula I-4 according to Claim 16.

**19.** Process for the preparation of a compound selected from the group of the compounds of the formulae I-3 and I-4,

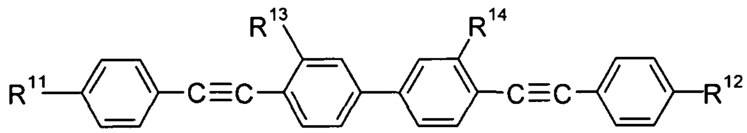

I-3

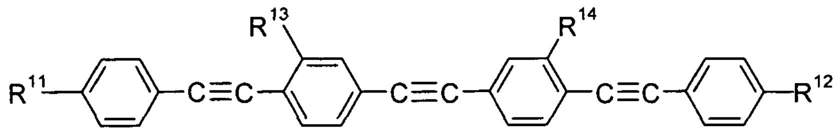

I-4

in which the parameters have the meanings given in Claim 16.

**20.** Use of one or more compounds selected from the group of the compounds of the formulae I-3 and I-4,

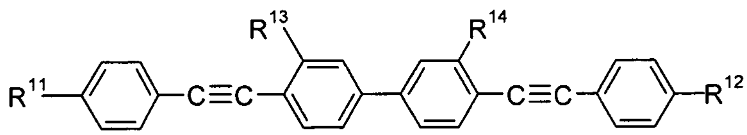

I-3

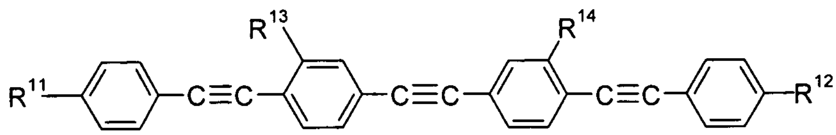

I-4

in which the parameters have the meanings given in Claim 16, in a liquid-crystal mixture.

**Revendications**

**1.** Milieu cristallin liquide, **caractérisé en ce qu'**il comprend un composant A, lequel est constitué par un ou plusieurs composé(s) de la formule I :

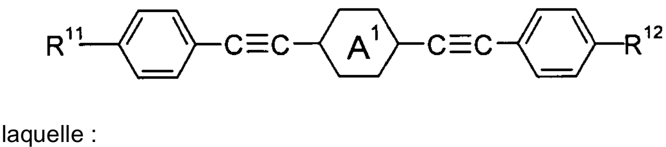

I

dans laquelle :

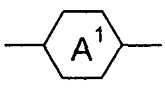 représente 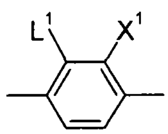 , 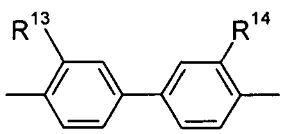 ,

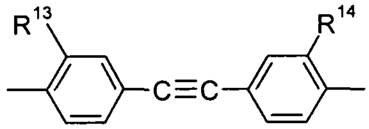 ou 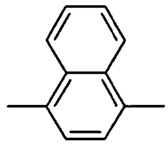 ,

L¹ représente alkyle comportant 1 à 6 atome(s) de C, alkényle comportant 2 à 6 atomes de C, cycloalkyle comportant 3 à 6 atomes de C ou cycloalkényle comportant 4 à 6 atomes de C,
$X^1$ représente H, alkyle comportant 1 à 3 atome(s) de C ou halogène,
$R^{11}$ à $R^{14}$ représentent, indépendamment les uns des autres, alkyle non fluoré ou alcoxy non fluoré dont chacun comporte 1 à 15 atome(s) de C, alkényle non fluoré, alkényloxy non fluoré ou alcoxyalkyle non fluoré dont chacun comporte 2 à 15 atomes de C, ou cycloalkyle, alkylcycloalkyle, cycloalkényle, alkylcycloalkényle, alkylcycloalkylalkyle ou alkylcycloalkénylalkyle dont chacun comporte jusqu'à 15 atomes de C, et à titre d'alternative, l'un de $R^{13}$ et $R^{14}$ ou les deux représente(nt) également H,

et
lequel comprend un ou plusieurs composé(s) de la formule I-1 :

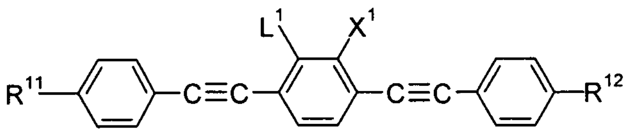

I-1

dans laquelle :

$X^1$ représente alkyle comportant 1 à 3 atome(s) de C ou halogène.

2. Milieu cristallin liquide selon la revendication 1, **caractérisé en ce qu'**un composant A comprend un ou plusieurs composé(s) choisi(s) parmi le groupe des composés des formules I-1 à I-4 :

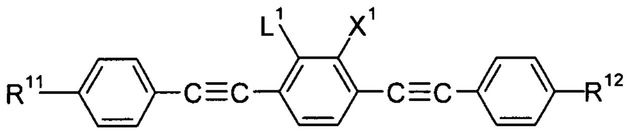

I-1

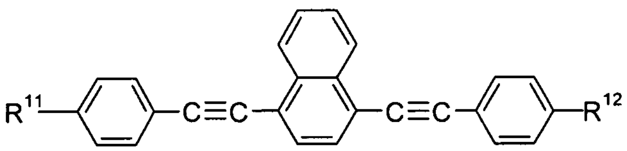

I-2

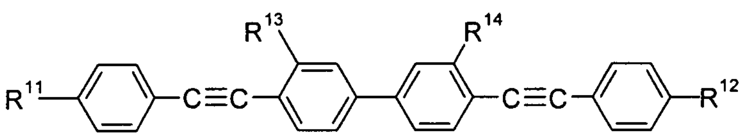

I-3

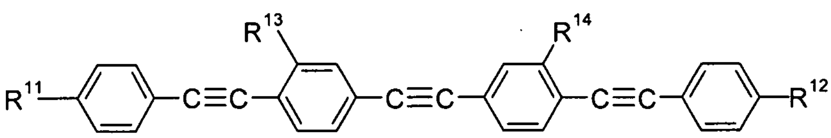

I-4

dans lesquelles :

$X^1$ représente H,

et les autres paramètres présentent les significations indiquées selon la revendication 1.

**3.** Milieu cristallin liquide-selon la revendication 2, **caractérisé en ce qu'**un composant A comprend un ou plusieurs composé(s) choisi(s) parmi le groupe des composés des formules I-2, I-3 et I-4, comme indiqué selon la revendication 2.

**4.** Milieu cristallin liquide-selon la revendication 2 ou 3, **caractérisé en ce qu'**un composant A comprend un ou plusieurs composé(s) de la formule I-1, comme indiqué selon la revendication 2, dans laquelle $X^1$ représente H.

**5.** Milieu cristallin liquide selon une ou plusieurs des revendications 2 à 4, **caractérisé en ce qu'**un composant A comprend un ou plusieurs composé(s) de la formule I-1, comme indiqué selon la revendication 1, dans laquelle $X^1$ représente F.

**6.** Milieu cristallin liquide selon une ou plusieurs des revendications 1 à 5, **caractérisé en ce qu'**en plus d'un composant A, il comprend de façon additionnelle un ou plusieurs composant(s) choisi(s) parmi le groupe des composants qui suivent, soit les composants B à E :

- un composant fortement diélectriquement positif, soit le composant B, lequel présente une anisotropie diélectrique de 10 ou plus,
- un composant fortement diélectriquement négatif, soit le composant C, lequel présente une anisotropie diélectrique présentant une valeur de 5 ou plus,
- un composant, soit le composant D, lequel présente une anisotropie diélectrique dans la plage qui va de plus de -5,0 à moins de 10,0 et est constitué par des composés comportant sept ou plus de sept cycles à cinq ou six éléments, et
- un composant, soit le composant E, lequel pareillement présente une anisotropie diélectrique dans la plage qui va de plus de -5,0 à moins de 10,0 et est constitué par des composés comportant jusqu'à six cycles à cinq ou six éléments.

**7.** Milieu cristallin liquide selon la revendication 6, **caractérisé en ce qu'**il comprend un composant B.

**8.** Milieu cristallin liquide selon la revendication 6 ou 7, **caractérisé en ce qu'**il comprend un composant C.

**9.** Milieu cristallin liquide selon une ou plusieurs des revendications 6 à 8, **caractérisé en ce qu'**il comprend un composant D.

**10.** Milieu cristallin liquide selon une ou plusieurs des revendications 1 à 9, **caractérisé en ce qu'**il comprend un ou plusieurs composé(s) de la formule VI :

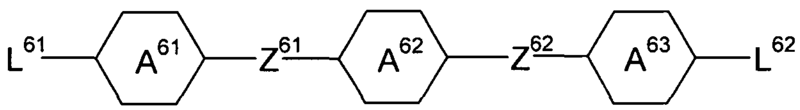

VI

dans laquelle :

$L^{61}$ représente $R^{61}$ et, dans le cas où $Z^{61}$ et/ou $Z^{62}$ représente(nt) *trans* -CH=CH- ou *trans* -CF=CF-, à titre d'alternative il représente également $X^{61}$,
$L^{62}$ représente $R^{62}$ et, dans le cas où $Z^{61}$ et/ou $Z^{62}$ représente(nt) *trans* -CH=CH- ou *trans* -CF=CF-, à titre d'alternative il représente également $X^{62}$,
$R^{61}$ et $R^{62}$ représentent, indépendamment l'un de l'autre, H, alkyle non fluoré ou alcoxy non fluoré comportant 1 à 17 atome(s) de C ou alkényle non fluoré, alkényloxy non fluoré ou alcoxyalkyle non fluoré comportant 2 à 15 atomes de C,
$X^{61}$ et $X^{62}$ représentent, indépendamment l'un de l'autre, F ou Cl, -CN, -NCS, $-SF_5$, alkyle ou alcoxy fluoré comportant 1 à 7 atome(s) de C ou alkényle, alkényloxy ou alcoxyalkyle fluoré comportant 2 à 7 atomes de C,
l'un de $Z^{61}$ et $Z^{62}$ représente *trans* -CH=CH-, *trans* -CF=CF- ou -C≡C- et l'autre, indépendamment de celui-ci, représente *trans* -CH=CH-, *trans* -CF=CF- ou une liaison simple, et

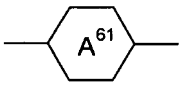 à 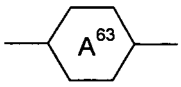,

représentent, indépendamment les uns des autres,

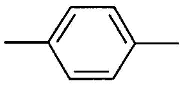, 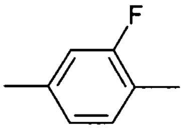, 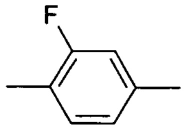, 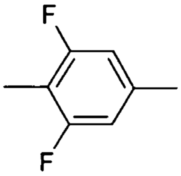, 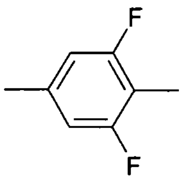, 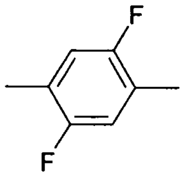,

ou 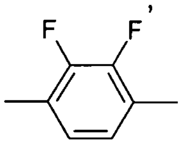.

**11.** Procédé pour la préparation d'un milieu cristallin liquide-selon une ou plusieurs des revendications 1 à 10, **caractérisé en ce qu'**un ou plusieurs composé(s) de la formule I-1, comme indiqué selon la revendication 1, est/sont mélangé(s) avec un ou plusieurs autre(s) composé(s) et en option, avec un ou plusieurs additif(s).

**12.** Utilisation d'un milieu cristallin liquide selon une ou plusieurs des revendications 1 à 10 dans un composant pour une technologie hautes fréquences.

**13.** Composant pour une technologie hautes fréquences, **caractérisé en ce qu'**il contient un milieu cristallin liquide selon une ou plusieurs des revendications 1 à 10.

**14.** Antenne réseau micro-ondes, **caractérisée en ce qu'**elle comprend un ou plusieurs composant(s) selon la revendication 13.

**15.** Procédé pour accorder une antenne réseau micro-ondes, **caractérisé en ce qu'**un composant selon la revendication 13 est adressé électriquement.

**16.** Composé choisi parmi le groupe des composés des formules I-3 et I-4 :

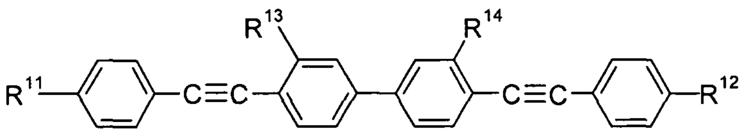

I-3

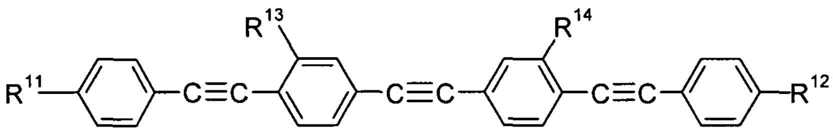

I-4

dans lesquelles :

$R^{11}$ à $R^{14}$ représentent, indépendamment les uns des autres, alkyle non fluoré ou alcoxy non fluoré dont chacun comporte 1 à 15 atome(s) de C, alkényle non fluoré, alkényloxy non fluoré ou alcoxyalkyle non fluoré dont

chacun comporte 2 à 15 atomes de C, ou cycloalkyle, alkylcycloalkyle, cycloalkényle, alkylcycloalkényle, alkylcycloalkylalkyle ou alkylcycloalkénylalkyle dont chacun comporte jusqu'à 15 atomes de C.

**17.** Composé de la formule I-3 selon la revendication 16.

**18.** Composé de la formule I-4 selon la revendication 16.

**19.** Procédé pour la préparation d'un composé choisi parmi le groupe des composés des formules I-3 et I-4 :

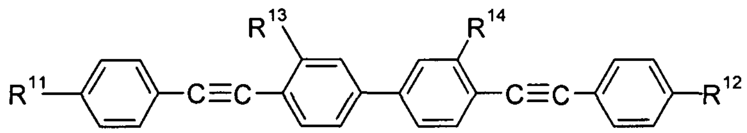

I-3

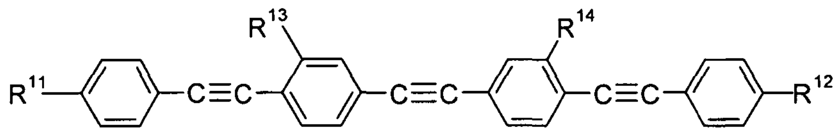

I-4

dans lesquelles les paramètres présentent les significations données selon la revendication 16.

**20.** Utilisation d'un ou de plusieurs composé(s) choisi(s) parmi le groupe des composés des formules I-3 et I-4 :

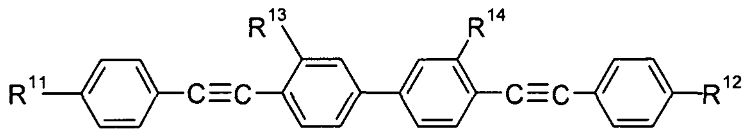

I-3

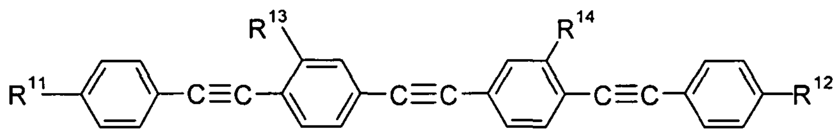

I-4

dans lesquelles les paramètres présentent les significations données selon la revendication 16, dans un mélange de cristaux liquides.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2003207631 A
- DE 102004029429 A
- JP 2005120208 A
- DE 102009051892
- DE 102010025572
- DE 102010045370
- DE 102010051508
- EP 2073290 A1
- WO 2008021208 A2
- JP 2004082439 A


### In der Beschreibung aufgeführte Nicht-Patentliteratur


- **WU, S.-T. ; HSU, C.-S. ; SHYU, K.-F.** *Appl. Phys. Lett.,* 1999, vol. 74 (3), 344-346
- **HSU, C. S. ; SHYU, K. F. ; CHUANG, Y. Y. ; WU, S.-T.** *Liq. Cryst.,* 2000, vol. 27 (2), 283-287
- **DABROWSKI, R. ; KULA, P. ; GAUZA, S. ; DZIADISZEK, J. ; URBAN, S. ; WU, S.-T.** *IDRC,* 2008, vol. 08, 35-38
- **A. GAEBLER ; A. MOESSINGER ; F. GOELDEN et al.** Liquid Crystal-Reconfigurable Antenna Concepts for Space Applications at Microwave and Millimeter Waves. *International Journal of Antennas and Propagation,* 2009, vol. 2009, 1-7
- **A. PENIRSCHKE ; S. MÜLLER ; P. SCHEELE ; C. WEIL ; M. WITTEK ; C. HOCK ; R. JAKOBY.** Cavity Perturbation Method for Characterization of Liquid Crystals up to 35 GHz. *34th European Microwave Conference - Amsterdam,* 545-548
- Direct Simulation of Material Permittivities using an Eigen-Susceptibility Formulation of the Vector Variational Approach. **A. GAEBLER ; F. GOELDEN ; S. MÜLLER ; A. PENIRSCHKE ; R. JAKOBY.** 12MTC 2009 - International Instrumentation and Measurement Technology Conference. IEEE, 2009, 463-467
- **A. LAPANIK.** Single compounds and mixtures for microwave applications, Dielectric, microwave studies on selected systems. *Dissertation, Technische Universität Darmstadt,* 2009
- **A. LAPANIK ; F. GÖLDEN ; S. MÜLLER ; A. PENIRSCHKE ; R. JAKOBY ; W. HAASE.** *Frequenz, im Druck*
- **A. LAPANIK ; F. GÖLDEN ; S. MÜLLER ; R. JAKOBY ; W. HAASE.** Highly birefringent nematic mixtures at room temperature for microwave applications. *Journal of Optical Engineering*
- **TWIEG, ROBERT J. et al.** Tolane oligomers: Model thermotropic liquid crysrtals. *Liquid Crystals,* 1996, vol. 20 (3), 287-292
- **ZHANG ; ZHENLIN et al.** Synthesis and properties of highly birefringent liquid crystalline materials: 2,5-bis (5- alkyl2-butadinylthiophene-yl) styrene monomers. *Liquid Crystals,* 2010, vol. 37 (1), 69-76
- Merck Liquid Crystals, Physical Properties of Liquid Crystals. Merck KGaA, November 1997
- **A. PENIRSCHKE et al.** Cavity Perturbation Method for Characterization of Liquid Crystals up to 35GHz. *34th European Microwave Conference - Amsterdam,* 545-548
- Direct Simulation of Material Permittivites ... **A. GAEBLER et al.** 12MTC 2009 - International Instrumentation and Measurement Technology Conference. IEEE, 2009, 463-467
- **PENIRSCHKE et al.** *34th European Microwave Conference - Amsterdam,* 545-548
- **HSU, C. S. ; SHYU, K. F. ; CHUANG, Y. Y. ; WU, S.-T.** *Liq. Cryst.,* 2000, vol. 27 (2), 283-287